# EUROPÄISCHE PATENTSCHRIFT

(11) **EP 3 792 204 B1**
(45) Veröffentlichungstag und Bekanntmachung des Hinweises auf die Patenterteilung: **08.12.2021**
(21) Anmeldenummer: 20195587.9
(22) Anmeldetag: 10.09.2020
(51) Int. Cl.: B65G 9/00

(54) **TRAGESYSTEM FÜR EINEN MEDIZINISCHEN BEHANDLUNGSRAUM**
HOLDER SYSTEM FOR A MEDICAL TREATMENT ROOM
SYSTÈME DE SUPPORT POUR UNE SALLE DE SOINS MÉDICAUX

(30) Priorität: 10.09.2019 DE 102019124315
(43) Veröffentlichungstag der Anmeldung: 17.03.2021
(73) Patentinhaber: Karl Storz SE & Co. KG, 78532 Tuttlingen (DE)
(72) Erfinder: Krattiger, Beat, 78532 Tuttlingen (DE); Ruh, Peter, 78532 Tuttlingen (DE); Hilzinger, Hans-Uwe, 78532 Tuttlingen (DE); Stiller, Heinz-Werner, 78532 Tuttlingen (DE)
(74) Vertreter: Witte, Weller & Partner Patentanwälte mbB

(56) Entgegenhaltungen:
- WO-A1-85/03277
- DE-U- 1 885 882
- GB-A- 2 064 454
- US-A- 3 712 237

## Beschreibung

### Tragesystem für einen medizinischen Behandlungsraum

Die vorliegende Erfindung betrifft ein Tragesystem für einen medizinischen Behandlungsraum, wobei das Tragesystem eine an einer Decke des medizinischen Behandlungsraums zu befestigende Schieneneinrichtung und ein Rollenfahrwerk zum Tragen eines medizinischen Geräts aufweist.

In medizinischen Behandlungsräumen, insbesondere in Operationssälen, ist ein hohes Maß an Vielseitigkeit, Flexibilität, Effizienz, Ergonomie, Übersichtlichkeit, Zuverlässigkeit sowie Arbeitsfluss, Sterilität und Sauberkeit erforderlich, um ein optimales Behandlungser-gebnis zu erreichen. Zwei grundlegende Probleme sind dabei die stetig zunehmende Gerätedichte und Personendichte.

In einem Teil der Operationssäle werden ferner Laminarflow-Einrichtungen fest montiert, die den verfügbaren Platz weiter einschränken. Laminarflow-Einrichtungen sind Lüftungseinrichtungen, die eine laminare Luftströmung erzeugen. Diese Lüftungseinrichtungen sind meist in der Mitte des Raumes und sie versorgen nur einen bestimmten, begrenzten Bereich von definierter Position und Ausdehnung mit wirbelfreier, staubfreier, steriler Luft.

In medizinischen Behandlungsräumen, insbesondere in Operationssälen, können ferner zur flexiblen Gerätepositionierung und optimalen Raumnutzung Deckenampeln bzw. Deckenversorgungseinheiten oder Federarme fest in die Decke montiert werden. Wegen der Vielseitigkeit müssen meist mehr als eine Deckenampel mit Geräten und OP-Leuchten vorhanden sein. Deckenampeln und deren viele Arme benötigen allerdings viel Platz und behindern sich gegenseitig.

Des Weiteren sind Deckenschienensysteme zum flexiblen Positionieren von Geräten in medizinischen Behandlungsräumen, insbesondere in Operationssälen, bekannt. Eindimensionale Bewegungen können beispielsweise mittels einfacher Linearschienen erfolgen, zweidimensionale Bewegungen können beispielsweise mittels Portalkränen realisiert werden.

Beispielsweise zeigt die Druckschrift DE 10 2011 076 322 A1 ein Deckenschienensystem mit gebogenen Deckenschienen, an denen Rollenfahrwerke, manchmal auch als Laufkatzen bezeichnet, mit Gerätehaltern, Projektoren und Projektionsflächen angeordnet sind. Nicht benötigte Geräte werden in den Gerätehalter nach oben gezogen, um Raum zu schaffen.

Des Weiteren gehören im Operationssaal zum Stand der Technik verzweigende Deckenschienen mit Drehscheiben am Kreuzungspunkt. Auf diesen Schienen fahren situationsbedingt Laufkatzen mit Versorgungsmaterial auf Ablagebrettern durch den OP.

Die Druckschrift DE 34 02 742 C2 zeigt beispielsweise ein Deckenschienensystem, dass x- und y-Schienen aufweist, die an Kreuzungspunkten mit Drehscheiben verbunden sind. Auf den Schienen ist ein Wagen mit zwei Laufwerken angeordnet, wobei der Wagen auf den Schienen entweder in x-Richtung oder ein y-Richtung bewegbar ist. Um zwischen der x-Richtung und y-Richtung zu wechseln, wird der Wagen so angeordnet, dass die beiden Laufwerke auf je einer Drehscheibe platziert sind. Durch Drehen der Drehscheiben um 90° kann die Bewegungsrichtung des Wagens dann geändert werden.

Die Druckschrift DE 1 885 882 U zeigt ein weiteres Schienensystem, bei dem Schienen mittels Drehscheiben verbunden werden.

Die bekannten Tragesysteme für medizinische Behandlungsräume lassen noch Raum für Verbesserungen. Insbesondere besteht ein Bedarf an Tragesystemen für medizinische Behandlungsräume die mit weniger Spiel bewegbar sind und weniger Abrieb erzeugen, wodurch Ergonomie, Sterilität und Sauberkeit weiter verbessert werden. Des Weiteren besteht ein Bedarf an Tragesystemen für medizinische Behandlungsräume, die eine erhöhte Stabilität aufweisen, damit zum einen schwerere Nutzlasten transportiert werden können und zum anderen die Nutzlasten stabil gehalten werden können. Des Weiteren besteht auch ein Bedarf an Tragesystemen für medizinische Behandlungsräume, die eine flexible Positionierung von Rollenfahrwerken auf möglichst einfache und abriebsarme Art und Weise ermöglichen.

Es ist daher eine Aufgabe der vorliegenden Erfindung, ein verbessertes Tragesystem für einen medizinischen Behandlungsraum vorzusehen, bei dem Ergonomie, Sterilität, Sauberkeit, Stabilität und/oder Flexibilität verbessert sind.

Die Erfindung wird von den Ansprüchen definiert.

In einem ersten Aspekt ist ein Tragesystem für einen medizinischen Behandlungsraum vorgeschlagen, wobei das Tragesystem eine an einer Decke des medizinischen Behandlungsraums zu befestigende Schieneneinrichtung und ein Rollenfahrwerk zum Tragen eines medizinischen Geräts aufweist. Das Rollenfahrwerk weist eine Mehrzahl von Rollen auf. Die Schieneneinrichtung weist eine Schiene mit Laufflächen für die Rollen des Rollenfahrwerks auf. Die Schiene weist in einer Längsrichtung eine Längserstreckung auf. Das Rollenfahrwerk ist mittels der Rollen entlang der Schiene in der Längsrichtung bewegbar. Zwei erste Rollen der Mehrzahl von Rollen sind an einer ersten Lauffläche der Schiene angeordnet sind. Eine zweite Rolle der Mehrzahl von Rollen ist an einer zweiten Lauffläche der Schiene angeordnet. Zwei dritte Rollen der Mehrzahl von Rollen sind an einer dritten Lauffläche der Schiene angeordnet. Eine vierte Rolle der Mehrzahl von Rollen ist an einer vierten Lauffläche der Schiene angeordnet ist. Die Laufflächen sind senkrecht zu einer Höhenrichtung angeordnet. Die erste und die zweite Lauffläche sowie die dritte und die vierte Lauffläche sind jeweils in der Höhenrichtung auf gegenüberliegenden Seiten der Schiene angeordnet. Die erste Lauffläche und die dritte Lauffläche liegen in einer Querrichtung nebeneinander. Die zweite Lauffläche und die vierte Lauffläche liegen in der Querrichtung nebeneinander. Die Längsrichtung, die Querrichtung und die Höhenrichtung sind paarweise quer zueinander angeordnet. Die ersten Rollen und die dritten Rollen sind jeweils in der Längsrichtung voneinander beabstandet.

In einem zweiten Aspekt ist ein medizinischer Behandlungsraum, insbesondere ein Operationssaal, vorgeschlagen, wobei der medizinische Behandlungsraum eine Decke und ein an der Decke befestigtes Tragesystem nach dem ersten Aspekt aufweist.

Die Längsrichtung, die Querrichtung und die Höhenrichtung spannen gemeinsam ein dreidimensionales Koordinatensystem auf. Dabei sind die Längsrichtung, die Querrichtung und die Höhenrichtung paarweise quer zueinander, insbesondere senkrecht zueinander, angeordnet.

Das Tragesystem wird vorzugsweise in einem medizinischen Behandlungsraum installiert. Dabei wird die Schieneneinrichtung an einer Decke des medizinischen Behandlungsraums befestigt. Im eingebauten Zustand in den Behandlungsraum entspricht die Höhenrichtung einer vertikalen Richtung in dem Behandlungsraum, die sich vorzugsweise senkrecht zur Decke, insbesondere vom Boden zur Decke des Behandlungsraums, erstreckt. Die Längsrichtung und die Querrichtung liegen im eingebauten Zustand vorzugsweise in einer horizontalen Ebene des Behandlungsraums. In anderen Worten spannen die Längsrichtung und die Querrichtung die horizontale Ebene auf.

Mit Bezug auf den Behandlungsraum, insbesondere die Decke und den Boden des Behandlungsraums, sind demnach auch die Begriffe "oben", "unten", "oberhalb" und "unterhalb" zu verstehen.

Im eingebauten Zustand sind die Laufflächen der Schiene in der Höhenrichtung bzw. in der vertikalen Richtung von der Decke beabstandet. Insbesondere sind die erste und die dritten Lauffläche auf einer der Decke zugewandten Seite der Schiene angeordnet und die zweite und die vierte Lauffläche auf einer der Decke abgewandten Seite der Schiene angeordnet. Die ersten Rollen sind demnach auf der ersten Lauffläche zwischen der ersten Lauffläche und der Decke angeordnet. Die dritten Rollen sind demnach auf der zweiten Lauffläche zwischen der zweiten Lauffläche und der Decke angeordnet. Die zweite und die vierte Rolle sind auf der Decke abgewandten Seite der Schiene an der entsprechenden zweiten und vierten Lauffläche angeordnet.

Die Schiene kann beispielsweise einen Steg und mindestens einen Flansch aufweisen, die sich beide in der Längsrichtung erstrecken. Der Steg erstreckt sich zudem in der Höhenrichtung. Der Flansch erstreckt sich zudem in der Querrichtung. Der Steg ist in der Querrichtung so angeordnet, dass der Flansch in einen ersten und einen zweiten Bereich unterteilt wird, die bezüglich der Querrichtung auf gegenüberliegenden Seiten des Flanschs angeordnet sind. Der Flansch bildet somit die vier Laufflächen für die Rollen des Rollenfahrwerks aus, wobei die erste und die zweite Lauffläche in dem ersten Bereich und die dritte und die vierte Lauffläche in dem zweiten Bereich angeordnet sind. In anderen Worten sind die Laufflächen jeweils auf gegenüberliegenden Seiten des Stegs angeordnet. Insbesondere kann die Schiene senkrecht zur Längsachse ein T-förmiges oder ein doppel-T-förmiges bzw. I-förmiges Querschnittsprofil aufweisen.

Im Betrieb können Stöße bzw. Kräfte auf das Rollenfahrwerk wirken, die beispielsweise durch unachtsam dagegen laufende Person oder beim Beschleunigen bzw. Abbremsen des Rollenfahrwerks oder bei einer Kurvenfahrt des Rollenfahrwerks auftreten. In herkömmlichen Tragesystemen können sich bei einem heftigen Stoß oder größerer horizontaler Kraft gegen eine Nutzlast, die von dem Rollenfahrwerk getragen wird, wie beispielsweise ein medizinisches Gerät, wegen der Hebelwirkung bzw. wegen dem Drehmoment einige Rollen von der Lauffläche ablösen, wobei dem Benutzer ein Gefühl Instabilität und "Wackeligkeit" und somit von Minderwertigkeit vermittelt würde. Ferner können durch das induzierte Auslenken der Nutzlast andere Gegenstände oder Lebewesen berührt und geschädigt werden. Durch die beschriebene Anordnung der Rollen und der Laufflächen wird das Rollenfahrwerk in allen Raumrichtungen gegen Drehmomenten bzw. Schub oder Zugkräften in der Höhenrichtung abgestützt. Dies wird insbesondere dadurch erreicht, dass das Rollenfahrwerk zur Stabilisierung neben den ersten und dritten Rollen, die auch als Tragrollen bezeichnet werden können, des Weiteren die zweiten und vierten Rollen als Gegenrollen aufweist. Bei großen Drehmomenten auf das Rollenfahrwerk und bei gleichzeitig angetriebenen Gegenrollen ist auch während eines Stoßes ein problemloser Transit möglich, da die Gegenrollen in die gleiche Richtung antreiben.

Mittels der beschriebenen Anordnung der Rollen und der Laufflächen wird somit eine spielarme Rollenführung erreicht. Bei einer derartigen spielarmen Rollenführung sind zudem auch eine Belastung des Rollenfahrwerks und somit auch ein Verschleiß und ein Abrieb des Rollenfahrwerks vermindert.

Des Weiteren wird durch die Ausgestaltung des Rollenfahrwerks erreicht, dass es in zwei (Drehmoment-)Richtungen während seiner Bewegung verkippungsstabil ist, und dass es während einwirkenden Verkippungsmomenten dabei keiner Reibung unterliegt, die zu Abrieb oder Bremsung führen kann. Die Kippkräfte werden nämlich alle durch Rollen und Gegenrollen aufgefangen. Es gibt keinen Stopper, Anschlag oder keine Klinke, die in Reibung mit der Schiene kommen könnte.

Eine große Verkippungsstabilität, resp. das geringe Verkippungsspiel ist eine notwendige Grundvoraussetzung für ein infrastrukturbereitstellendes Deckenschienensystem für den medizinischen Behandlungsraum/OP. In einer vorteilhaften Ausgestaltung weist das Tragesystem ein Schienensystem mit mehr als einem Rollenfahrwerk, z.B. mit vier Rollenfahrwerken, auf. Auf diese Weise wird die Verkippungsstabilität stark erhöht, denn Hebelkräfte und Spielauswirkung nehmen ab. Zudem kann bei einem Schienenfahrzeug mit mehreren Fahrwerken die Nutzlast vergrößert werden.

In einer alternativen Ausgestaltung kann auch vorgesehen sein, dass das Rollenfahrwerk keine zweiten und vierten Rollen und/oder nur eine erste und eine dritte Rolle aufweist. Vorzugsweise kann dabei eine Gegenführung für die Rollen auf einer der Laufflächen abgewandten Seite der Rollen angeordnet sein. Die Gegenführung und die Laufflächen bilden dabei für die Rollen jeweils einen Laufkanal aus.

In einem dritten Aspekt ist ein Tragesystem für einen medizinischen Behandlungsraum vorgeschlagen, wobei das Tragesystem eine an einer Decke des medizinischen Behandlungsraums zu befestigende Schieneneinrichtung und ein Rollenfahrwerk zum Tragen eines medizinischen Geräts aufweist. Die Schieneneinrichtung weist eine oder mehrere Längsschienen und eine oder mehrere Querschienen auf. Das Rollenfahrwerk ist entlang jeder Längsschiene in einer Längsrichtung und entlang jeder Querschiene in einer Querrichtung bewegbar. Die Schieneneinrichtung weist an gemeinsamen Kreuzungspunkten der Längsschienen und der Querschienen je eine Drehscheibe auf. Das Rollenfahrwerk ist zum Transfer zwischen einer der Längsschienen und einer der Querschienen auf der entsprechenden Drehscheibe anordenbar. Das Rollenfahrwerk ist dazu ausgebildet, die Drehscheibe um eine Drehachse zu drehen.

In einem vierten Aspekt ist ein medizinischer Behandlungsraum, insbesondere ein Operationssaal, vorgeschlagen, wobei der medizinische Behandlungsraum eine Decke und ein an der Decke befestigtes Tragesystem nach dem dritten Aspekt der Erfindung aufweist.

Die Querschienen sind jeweils parallel zueinander angeordnet. Die Längsschienen sind jeweils parallel zueinander angeordnet. Vorzugsweise ist die Querbewegungsrichtung senkrecht zu der Längsbewegungsrichtung angeordnet. Dementsprechend sind die Querschienen auch senkrecht zu den Längsschienen angeordnet. Vorzugsweise ist die Drehachse senkrecht zu der Längsbewegungsrichtung und senkrecht zu der Querbewegungsrichtung angeordnet.

In anderen Worten weist dieses Tragesystem längs- und quer verlaufende Schienen auf, die an der Decke des Behandlungsraums montiert sind. In den Kreuzungspunkten dieser Schienen sind Drehscheiben angeordnet. Auf diesen Schienen können ein oder mehrere Rollenfahrwerke angeordnet sein. Die Rollenfahrwerke sind zum Tragen von medizinischen Geräten bzw. Nutzlasten ausgebildet. Beispielsweise können die Rollenfahrwerke einen Geräteturm, mit oder ohne kurze Dreharme zur Feinpositionierung, ein Laminarflow-Deckenmodul, einen Röntgen C-Bogen, ein CT Modul, ein MRI Modul, eine Pathologie-Workstation, Schränke mit Implantaten und entsprechenden Werkzeugen, Ablageregale für frische und gebrauchte Instrumente, Abfall-Entsorgungsbehälter, Galgen mit Haken für eine geordnete, bodenkontaktfreie Führung von sonst vagabundierenden Instrumentenlei-tungen und -Schläuchen, mobile Trennwände, Faltwände, Rollwände oder Trennvorhänge tragen

Die medizinischen Geräte bzw. Nutzlasten können somit mittels des Tragesystems flexibel im Behandlungsraum positioniert werden. Dies wird insbesondere durch die Bewegbarkeit der Rollenfahrwerke entlang der Längsschienen in der Längsbewegungsrichtung und entlang der Querschienen in der Querbewegungsrichtung ermöglicht.

Vorzugsweise weist das Rollenfahrwerk eine Mehrzahl von Rollen auf, wobei jede Längsschiene und jede Querschiene Laufflächen für die Rollen des Rollenfahrwerks aufweisen, und wobei das Rollenfahrwerk mittels der Rollen entlang jeder Längsschiene in der Längsbewegungsrichtung und entlang jeder Querschiene in der Querbewegungsrichtung bewegbar ist.

Das Rollenfahrwerk des Tragesystems nach dem dritten Aspekt kann daher auch entsprechend dem Rollenfahrwerk des Tragesystems nach dem ersten Aspekt ausgebildet sein. Des Weiteren können die Längsschienen und die Querschienen der Schieneneinrichtung des Tragesystems nach dem dritten Aspekt entsprechend der Schiene der Schieneneinrichtung des Tragesystems nach dem ersten Aspekt ausgebildet sein.

In anderen Worten kann auch das Tagesystem nach dem ersten Aspekt derart weitergebildet werden, dass die Schieneneinrichtung eine oder mehrere Längsschienen und eine oder mehrere Querschienen aufweist, die entsprechend der Schiene ausgebildet sind, wobei das Rollenfahrwerk mittels der Rollen entlang jeder Längsschiene in einer Längsbewegungsrichtung und entlang jeder Querschiene in einer Querbewegungsrichtung bewegbar ist, wobei die Längsrichtung der Längsschienen der Längsbewegungsrichtung und die Längsrichtung der Querschienen der Querbewegungsrichtung entspricht, wobei die Schieneneinrichtung an gemeinsamen Kreuzungspunkten der Längsschienen und der Querschienen je eine Drehscheibe aufweist, wobei das Rollenfahrwerk zum Transfer zwischen einer der Längsschienen und einer der Querschienen auf der entsprechenden Drehscheibe anordenbar ist, wobei das Rollenfahrwerk dazu ausgebildet ist, die Drehscheibe um eine Drehachse zu drehen.

Dementsprechend ist in einem fünften Aspekt ein Tragesystem für einen medizinischen Behandlungsraum vorgeschlagen, wobei das Tragesystem eine, an einer Decke des medizinischen Behandlungsraums, zu befestigende Schieneneinrichtung und ein Rollenfahrwerk, zum Tragen eines medizinischen Geräts aufweist. Die Schieneneinrichtung weist eine oder mehrere Längsschienen und eine oder mehrere Querschienen auf. Jede der Längsschienen und jede der Querschienen weist in einer Längsrichtung eine Längserstreckung auf. Das Rollenfahrwerk weist eine Mehrzahl von Rollen auf. Die Längsschienen und die Querschienen weisen jeweils Laufflächen für die Rollen des Rollenfahrwerks auf. Das Rollenfahrwerk ist mittels der Rollen entlang jeder Längsschiene in einer Längsbewegungsrichtung und entlang jeder Querschiene in einer Querbewegungsrichtung bewegbar. Die Längsrichtung der Längsschienen entspricht der Längsbewegungsrichtung. Die Längsrichtung der Querschienen entspricht der Querbewegungsrichtung. Die Schieneneinrichtung weist an gemeinsamen Kreuzungspunkten der Längsschienen und der Querschienen je eine Drehscheibe auf. Das Rollenfahrwerk ist zum Transfer zwischen einer der Längsschienen und einer der Querschienen auf der entsprechenden Drehscheibe anordenbar. Das Rollenfahrwerk ist dazu ausgebildet, die Drehscheibe um eine Drehachse zu drehen. Die Längsschienen und Querschienen weisen jeweils eine erste Lauffläche, eine zweite Lauffläche, eine dritte Lauffläche und eine vierte Lauffläche auf. Zwei erste Rollen der Mehrzahl von Rollen sind an der ersten Lauffläche einer Schiene der Längsschienen und Querschienen angeordnet. Eine zweite Rolle der Mehrzahl von Rollen ist an der zweiten Lauffläche der Schiene angeordnet. Zwei dritte Rollen der Mehrzahl von Rollen sind an der dritten Lauffläche der Schiene angeordnet. Eine vierte Rolle der Mehrzahl von Rollen ist an der vierten Lauffläche der Schiene angeordnet ist. Die Laufflächen sind senkrecht zu einer Höhenrichtung angeordnet. Die erste und die zweite Lauffläche sowie die dritte und die vierte Lauffläche sind jeweils in der Höhenrichtung auf gegenüberliegenden Seiten der Schiene angeordnet. Die erste Lauffläche und die dritte Lauffläche liegen in einer Querrichtung nebeneinander. Die zweite Lauffläche und die vierte Lauffläche liegen in der Querrichtung nebeneinander. Die Längsrichtung, die Querrichtung und die Höhenrichtung sind paarweise quer zueinander angeordnet. Die ersten Rollen und die dritten Rollen sind jeweils in der Längsrichtung voneinander beabstandet.

Die eingangs gestellte Aufgabe wird somit vollumfänglich gelöst.

In einer ersten Ausgestaltung des Tragesystems nach dem ersten oder fünften Aspekt kann vorgesehen sein, dass die Laufflächen bombiert, insbesondere konvex oder konkav, ausgebildet sind.

Generell ist es wünschenswert, dass es durch Abrieb oder aufgewirbelten Staub keine Kontamination von Wunden bei der in den Behandlungsraum zu behandelnden Person gibt. Mittels der bombierten Laufflächen wird erreicht, dass der Abrieb zwischen dem Rollenfahrwerk und den Schienen möglichst gering ist. Des Weiteren ergibt sich zusammen mit dem Lagerspiel der Rollen eine selbst zentrierende Führung, insbesondere bei konvexen bzw. konkaven Laufflächen. Eine Bombierung ermöglicht eindeutig definierte Berührungspunkte. Das bewirkt einerseits einen abnützungsarmen Lauf und andererseits eine stabile, schlingerfreie Bewegung. Insbesondere sind die Rollen und die Laufflächen konvex zueinander bombiert.

In einer weiteren Ausgestaltung des Tragesystems nach dem ersten oder fünften Aspekt sind die Rollen und/oder Substrate der Laufflächen mindestens teilweise aus einem Werkstoff hergestellt, der biokompatibel und/oder antibakteriell und/oder selbstschmierend ist.

Die Rollen und/oder Substrate der Laufflächen können beispielsweise aus Messing, Bronze oder Kunststoff mit Silber, Polytetrafluoräthylen Graphit, Molybdänsulfid oder anderen Stoffen als Additiven oder Oberflächenbeschichtungen hergestellt sein. Dadurch wird eine Verunreinigung des medizinischen Behandlungsraums durch ungewünschten Abrieb weiter verringert.

In einer weiteren Ausgestaltung des Tragesystems nach dem ersten oder fünften Aspekt weist das Rollenfahrwerk eine Klebematte auf, die an einer äußeren Oberfläche des Rollenfahrwerks, insbesondere unterhalb der Schieneneinrichtung, angeordnet ist, insbesondere wobei die Klebematte an einem Gehäuse des Rollenfahrwerks angeordnet ist.

Die Klebematte kann beispielsweise als mehrfach abziehbare, präferierte Vielfach-Klebematte ausgebildet sein, an der Staub und Abrieb anhaften, insbesondere kleben, können. Auf diese Weise wird erreicht, dass entstehender Abrieb bzw. aufgewirbelter Staub zumindest teilweise an den Klebematten anhaftet, so dass eine Verunreinigung des medizinischen Behandlungsraums durch ungewünschten Abrieb weiter verringert wird.

In einer weiteren Ausgestaltung des Tragesystems nach dem ersten oder fünften Aspekt weist das Rollenfahrwerk eine Filtereinrichtung auf, die dazu ausgebildet ist, Luft aus dem Bereich der Rollen anzusaugen und zu filtern.

Auf diese Weise wird erreicht, dass entstehender Abrieb bzw. aufgewirbelter Staub durch Absaugen und Filtern der Luft mittels der Filtereinrichtung neutralisiert wird. Die Absaugung kann beispielsweise dann aktiviert werden, wenn das Rollenfahrwerk bewegt wird bzw. in Bewegung ist. Dadurch wird eine Verunreinigung des medizinischen Behandlungsraums durch ungewünschten Abrieb weiter verringert.

In einer weiteren Ausgestaltung des Tragesystems nach dem ersten oder fünften Aspekt weist das Rollenfahrwerk ein Gehäuse auf, wobei die Rollen in dem Gehäuse angeordnet sind, wobei das Gehäuse eine erste Öffnung aufweist, durch die sich die Schiene hindurch erstreckt.

Auf diese Weise wird erreicht, dass der Bereich des Rollenfahrwerks, in dem die Rollen angeordnet sind, zumindest teilweise von dem Gehäuse umschlossen ist. Zumindest ein Teil des entstehenden Abriebs bzw. aufgewirbelten Staubs kann somit während des Betriebs im Gehäuse verbleiben, beispielsweise durch Anhaften an einer Innenwand des Gehäuses.

In einer weiteren Ausgestaltung des Tragesystems nach dem ersten oder fünften Aspekt weist das Gehäuse eine zweite Öffnung auf, an der die Filtereinrichtung angeordnet ist, wobei die Filtereinrichtung dazu ausgebildet ist, Luft durch die erste Öffnung anzusaugen und gefiltert aus der zweiten Öffnung hinaus zu blasen.

Dadurch wird erreicht, dass ein kontinuierlicher Luftstrom durch das Gehäuse von der ersten Öffnung zu der zweiten Öffnung erzeugt wird. Dadurch wird im Bereich der Rollen entstehender Abrieb bzw. aufgewirbelter Staub mittels des Luftstroms direkt zu der Filtereinrichtung hin abgesaugt und gefiltert. Dadurch wird eine Verunreinigung des medizinischen Behandlungsraums durch ungewünschten Abrieb deutlich verringert.

In einer weiteren Ausgestaltung des Tragesystems nach dem ersten oder fünften Aspekt weist das Rollenfahrwerk des Weiteren eine Antriebseinrichtung zum Antreiben der Rollen auf.

Die Antriebseinrichtung kann beispielsweise als Direktantrieb oder Getriebemotor zum Antreiben der einzelnen Rollen oder zum Antreiben von mit den Rollen gekoppelten Zahnrädern ausgebildet sein. Insbesondere kann der Direktantrieb oder der Getriebemotor in den Rollen bzw. in einem oder mehreren Zahnrädern integriert sein. Alternativ kann auch vorgesehen sein/werden, dass ein Getriebemotor über Antriebswellen und Zahnräder mit den Rollen gekoppelt ist.

In einer weiteren Ausgestaltung des Tragesystems nach dem ersten oder fünften Aspekt ist die Antriebseinrichtung dazu ausgebildet, die Rollen des Rollenfahrwerks zu bremsen.

Auf diese Weise kann das Rollenfahrwerk beim Erreichen eines Bestimmungsorts oder an einem erreichten Bestimmungsort gegen unabsichtliches Verschieben gebremst werden. Des Weiteren wird durch das Bremsen mittels der Antriebseinrichtung deutlich weniger Abrieb generiert als beim Bremsen mittels herkömmlicher Bremssysteme, die beispielsweise Bremsklötze verwenden, die zum Bremsen an die Schiene gedrückt werden.

In einer weiteren Ausgestaltung des Tragesystems nach dem ersten oder fünften Aspekt weist die Antriebseinrichtung je ein erstes Zahnrad für je eine der ersten Rollen, ein zweites Zahnrad für die zweite Rolle, je ein drittes Zahnrad je eine der dritten Rollen, und ein viertes Zahnrad für die vierte Rolle auf, wobei das zweite Zahnrad in Eingriff mit den ersten Zahnrädern und das vierte Zahnrad in Eingriff mit den dritten Zahnrädern steht, wobei das Übersetzungsverhältnis der Zahnräder gleich 1 ist, und wobei die Antriebseinrichtung einen Motor aufweist, der dazu ausgebildet ist, das zweite und das vierte Zahnrad anzutreiben. Insbesondere sind die Umfanggeschwindigkeiten der Rollen gegenüber den entsprechenden Laufflächen identisch.

Auf diese Weise wird erreicht, dass die Rollen synchron und schlupffrei angetrieben werden. Des Weiteren wird durch diese Konfiguration der Zahnräder die Antriebsleistung gleichmäßig auf die Rollen verteilt, so dass eine Kraftübertragung bzw. Abstützung des Rollenfahrwerks auf die Schienen gleichmäßig über alle Rollen erfolgen kann. Insbesondere weisen die Rollen alle den gleichen Umfang auf. Alternativ können die Zahnräder auch über eine Endloskette oder einen Zahnriemen miteinander im Eingriff stehen.

In einer weiteren Ausgestaltung des Tragesystems nach dem ersten oder fünften Aspekt weist das Gehäuse einen ersten Gehäuseteil und einen zweiten Gehäuseteil auf, wobei der zweite Gehäuseteil in der Höhenrichtung auf einer der Schiene abgewandten Seite des ersten Gehäuseteils angeordnet ist, wobei die Rollen und die Zahnräder in dem ersten Gehäuseteil angeordnet sind, wobei der Motor in dem zweiten Gehäuseteil angeordnet ist, und wobei der Motor mit dem zweiten und dem vierten Zahnrad über ein Winkelgetriebe gekoppelt ist.

Die Elemente des Rollenfahrwerks sind somit in der Höhenrichtung verteilt angeordnet, sodass in der Längsrichtung und in der Querrichtung Platz eingespart wird. Des Weiteren wird mittels des Winkelgetriebes eine kompakte Anordnung geschaffen, mittels der der Motor auf einfache Art und Weise mit den Zahnrädern und damit auch mit den Rollen des Rollenfahrwerks koppelbar ist. In anderen Worten kann das Rollenfahrwerk in zwei Gehäuse bzw. Gehäusehälften gegliedert sein, wobei die Rollen und Zahnräder im ersten Gehäuseteil und der Motor im zweiten Gehäuseteil angeordnet ist. Durch diese Bauart können große Motoren eingesetzt werden, da im zweiten Gehäuse mehr Platz ist. Durch die Verwendung großer Motoren können auch schwere Nutzlasten gut über Lücken, Unebenheiten und Schienenstöße hinweg transportiert werden. Die Winkelgetriebe stellen eine beispielhafte Ausgestaltung dar. Alternativ kann auch ein elektrischer Direktantrieb verwendet werden, der direkt in den Rollen oder auf einer Achse mit den Rollen angeordnet ist, um die Rollen anzutreiben.

In einer weiteren Ausgestaltung des Tragesystems nach dem ersten oder fünften Aspekt ist die erste Öffnung in dem ersten Gehäuseteil angeordnet und die zweite Öffnung an dem zweiten Gehäuseteil angeordnet, wobei der erste Gehäuseteil und der zweite Gehäuseteil über einen hohlen Schaft miteinander verbunden sind, wobei die Antriebseinrichtung eine Antriebswelle aufweist, die sich durch den Schaft erstreckt und den Motor und das Winkelgetriebe miteinander koppelt.

Auf diese Weise wird eine geeignete Luftstromführung in dem Gehäuse bereitgestellt, sodass der mittels der Filtereinrichtung generierte Luftstrom an den Abrieb generierenden Komponenten des Rollenfahrwerks effizient vorbeigeführt wird.

In einer weiteren Ausgestaltung des Tragesystems nach dem ersten oder fünften Aspekt ist die Filtereinrichtung in dem zweiten Gehäuseteil angeordnet, wobei die Antriebswelle in dem Schaft mittels einer Lagereinrichtung gelagert ist, wobei die Lagereinrichtung derart ausgebildet ist, dass Luft zwischen dem ersten Gehäuseteil und dem zweiten Gehäuseteil strömen kann.

Dazu kann die Lagereinrichtung beispielsweise einen Lagerring aufweisen, in dem die Antriebswelle gelagert ist, wobei der Lagerring im Schaft angeordnet ist und die Luft zwischen dem Lagerring und einer Innenwand des Schafts strömen kann. Dazu kann insbesondere vorgesehen sein, dass die Lagereinrichtung des Weiteren Stege aufweist, die zwischen der Innenwand und dem Lager angeordnet sind und mittels derer der Lagerring in dem Schaft gehalten bzw. getragen wird.

In einer weiteren Ausgestaltung des Tragesystems nach dem ersten oder fünften Aspekt weist das Rollenfahrwerk des Weiteren eine Bremseinrichtung zum Bremsen des Rollenfahrwerks auf, insbesondere wobei die Bremseinrichtung Bremsbacken aufweist, die jeweils auf einer der Schiene in der Querrichtung zugewandten Seite in mindestens einer der ersten und dritten Rollen angeordnet sind.

Die Bremseinrichtung kann insbesondere dazu verwendet werden, das Rollenfahrwerk beim Erreichen eines Bestimmungsorts gegen unabsichtliches Verschieben abzubremsen. Dazu können die Bremsbacken gegen die Schiene gedrückt werden. Insbesondere kann vorgesehen sein, dass die Bremsbacken als Bremsklötze ausgebildet sind, die seitlich aus der Radachse der ersten und dritten Rollen ausgefahren werden können, sodass die Bremsbeläge der Bremsklötze gegen die Schiene gedrückt werden. Die Bremsbacken müssen nicht zwingend in den Rollen angeordnet sein. Alternativ können die Bremsbacken auch neben den Rollen angeordnet sein. Dies ist besonders vorteilhaft, wenn die Rollen über einen Direktantrieb angetrieben werden. Vorzugsweise sind zum Übertragen der Bremskraft mechanische Übertragungsmittel wie beispielsweise Bowdenzüge vorgesehen. Alternativ kann auch eine pneumatische oder hydraulische Ansteuerung der Bremsbacken bzw. der Bremsklötze vorgesehen sein.

In einer weiteren Ausgestaltung des Tragesystems nach dem ersten oder fünften Aspekt ist die Bremseinrichtung in dem Gehäuse zwischen der ersten und der zweiten Öffnung angeordnet.

Auf diese Weise ist die Bremseinrichtung auch in dem Luftstrom angeordnet, der zwischen der ersten und der zweiten Öffnung zur bzw. durch die Filtereinrichtung verströmt. Dadurch wird der Abrieb, der durch die Bremseinrichtung erzeugt wird, direkt zu der Filtereinrichtung gesaugt und dort gefiltert. Dadurch wird eine Verunreinigung des medizinischen Behandlungsraums durch ungewünschten Abrieb weiter verringert.

In einer weiteren Ausgestaltung des Tragesystems nach dem dritten oder fünften Aspekt weisen die Längsschienen und die Querschienen ein I-förmiges bzw. Doppel-T-förmiges Querschnittsprofil auf.

Ein I-förmiges bzw. Doppel-T-förmiges Querschnittsprofil einer Schiene bietet eine allseitige Zugänglichkeit und ist stabiler als andere Querschnittsprofile, wie beispielsweise ein U-förmiges Querschnittsprofil.

In einer weiteren Ausgestaltung des Tragesystems nach dem dritten oder fünften Aspekt ist das Rollenfahrwerk dazu ausgebildet, die Drehscheibe um die Drehachse zu drehen, wenn das Rollenfahrwerk auf der Drehscheibe angeordnet ist.

Auf diese Weise kann ein Rollenfahrwerk von einer Querschiene bzw. Längsschiene auf die Drehscheibe bewegt werden und die Drehscheibe zum Transfer auf die entsprechend angrenzende Längsschiene bzw. Querschiene gedreht werden, sodass das Rollenfahrwerk auf diese Längsschiene bzw. Querschiene bewegbar ist.

In einer weiteren Ausgestaltung des Tragesystems nach dem dritten oder fünften Aspekt ist das Rollenfahrwerk dazu ausgebildet, die Drehscheibe um die Drehachse zu drehen, wenn das Rollenfahrwerk auf einer der Längsschienen oder einer der Querschienen angeordnet ist.

Generell ist es möglich, dass eine Drehscheibe so ausgerichtet ist, dass ein Rollenfahrwerk von einer an die Drehscheibe angrenzenden Schiene nicht auf die Drehscheibe bewegbar ist. Dies ist insbesondere dann der Fall, wenn das Rollenfahrwerk nur in einer bestimmten Drehposition der Drehscheibe von der angrenzenden Schiene auf die Drehscheibe bewegbar ist. Das Rollenfahrwerk entsprechend dieser Ausgestaltung kann nun, wenn es auf der angrenzenden Schiene angeordnet ist, die Drehscheibe drehen, um die Drehscheibe in die entsprechenden Drehposition auszurichten, in der das Rollenfahrwerk auf die Drehscheibe bewegbar ist.

In einer weiteren Ausgestaltung des Tragesystems nach dem dritten oder fünften Aspekt ist die Drehscheibe um die Drehachse zwischen einer Längsposition und einer Querposition drehbar, wobei die Drehscheibe eine Schiene aufweist, die in der Längsposition mit der Längsschiene fluchtet bzw. kollinear angeordnet ist und in einer Querposition mit der Querschiene fluchtet bzw. kollinear angeordnet ist, wobei das Rollenfahrwerk entlang der Schiene der Drehscheibe bewegbar ist.

Dementsprechend ist das Rollenfahrwerk in der Längsposition auf der Längsschiene und der Schiene der Drehscheibe bewegbar und in der Querposition auf der Querschiene und der Schiene der Drehscheibe bewegbar. Insbesondere ist das Rollenfahrwerk in der Längsposition zwischen der Längsschiene und der Schiene der Drehscheibe überführbar und in der Querposition zwischen der Querschiene und der Schiene der Drehscheibe überführbar.

In einer weiteren Ausgestaltung des Tragesystems nach dem dritten oder fünften Aspekt weist die Schiene der Drehscheibe ein T-förmiges oder ein Doppel-T-förmiges Querschnittsprofil auf.

Insbesondere, wenn die Längsschienen und die Querschienen ebenfalls ein Doppel-T-förmiges Querschnittsprofil aufweisen, weist die Schiene der Drehscheibe ein zu den Längsschienen und Querschienen korrespondierendes Querschnittsprofil auf.

In einer weiteren Ausgestaltung des Tragesystems nach dem dritten oder fünften Aspekt weist die Schieneneinrichtung eine Lagerungseinrichtung zum Lagern der Drehscheibe auf, wobei die Drehscheibe mittels der Lagerungseinrichtung um die Drehachse drehbar gelagert ist.

Die Lagerungseinrichtung ist vorzugsweise mit der Decke fest verbunden bzw. an der Decke fest montiert. Die Drehscheibe ist somit relativ zu der Decke drehbar gelagert, wobei die Drehachse vorzugsweise senkrecht zu der Decke angeordnet ist. Die Lagerungseinrichtung kann beispielsweise als Ring-Kugellager ausgebildet sein.

In einer weiteren Ausgestaltung des Tragesystems nach dem dritten oder fünften Aspekt bildet die Längsschiene oder die Querschiene die Lagerungseinrichtung und die Drehscheibe an einem Kreuzungspunkt aus.

In anderen Worten ist ein Abschnitt bzw. ein Teil des Abschnitts der entsprechenden Schiene, die die Drehscheibe ausbildet, an dem entsprechenden Kreuzungspunkt mittels der Lagerungseinrichtung drehbar gelagert. In anderen Worten ist die Schiene als solches durchgängig ausgebildet und erstreckt sich somit durch die jeweiligen Kreuzungspunkte hindurch. In dem Bereich der Kreuzungspunkte ist ein Teil der Schiene drehbar ausgebildet, sodass dieser Teil der Schiene gedreht werden kann, wenn ein Rollenfahrwerk auf diesem Bereich angeordnet ist.

In einer weiteren Ausgestaltung des Tragesystems nach dem dritten oder fünften Aspekt weist die Schieneneinrichtung zum Drehen der Drehscheibe eine Schubstange oder einen Seilzug auf, wobei das Rollenfahrwerk ein Betätigungsele-ment aufweist, mittels dem die Schubstange bzw. der Seilzug betätigbar ist.

Auf diese Weise bildet die Schubstange bzw. der Seilzug einen Fernwirkmechanismus aus, der das Drehen der Drehscheibe bewirkt. Der Fernwirkmechanismus wird mittels des Betätigungselements betätigt. Beim Betätigen des Fernwirkmechanismus ist das Rollenfahrwerk nicht auf der Drehscheibe sondern einer angrenzenden Längsschiene oder Querschiene angeordnet. Mittels des Fernwirkmechanismus kann die Drehscheibe in die entsprechende Drehposition, sprich die Längsposition oder Querposition, gedreht werden, in der das Rollenfahrwerk auf die Drehscheibe bewegbar ist. Die Verwendung von Schubstangen hat den Vorteil einer größeren Kraftübertragung, geringerer Reibungsverluste, einer besseren Zuverlässigkeit und einer besseren Präzision. Die Verwendung von Seilzügen hat den Vorteil einer einfachen und flexiblen Verlegung.

In einer weiteren Ausgestaltung des Tragesystems nach dem dritten oder fünften Aspekt ist ein erstes Ende der Schubstange bzw. des Seilzugs an der Schiene der Drehscheibe von der Drehachse beabstandet angebracht.

Auf diese Weise ist die Schubstange bzw. der Seilzug exzentrisch bezüglich der Drehachse an der Drehscheibe angebracht, sodass die Drehscheibe durch eine Schubbewegung der Schubstange bzw. eine Zugbewegung des Seilzugs um die Drehachse drehbar ist.

In einer weiteren Ausgestaltung des Tragesystems nach dem dritten oder fünften Aspekt ist ein zweites Ende der Schubstange bzw. des Seilzugs an einem der Drehscheibe zugewandten Ende der Längsschiene oder der Querschiene angeordnet.

Auf diese Weise kann das Rollenfahrwerk die Schubstange bzw. den Seilzug mittels des Betätigungselements betätigen, wenn das Rollenfahrwerk zum der Drehscheibe zugewandten Ende der entsprechenden Schiene bewegt wird.

In einer weiteren Ausgestaltung des Tragesystems nach dem dritten oder fünften Aspekt weist die Längsschiene oder die Querschiene eine Kulisse auf, entlang der das zweite Ende der Schubstange zwischen einer ersten Position und einer zweiten Position führbar ist, wobei das zweite Ende in der zweiten Position näher an der Drehscheibe angeordnet ist als in der ersten Position, wobei das Betätigungselement dazu ausgebildet ist, die Schubstange von der ersten Position in die zweite Position zu bewegen, um die Drehscheibe zu drehen, insbesondere wobei die Schubstange in der zweiten Position nicht betätigbar ist.

Durch die beschriebene Kulissenführung für die Schubstange ist das zweite Ende der Schubstange durch das Betätigungselement des Rollenfahrwerks zwischen einer ersten Position, in der die Schubstange betätigbar ist, und einer zweiten Position, in der die Schubstange nicht betätigbar ist, bewegbar. Bei der Bewegung von der ersten Position in die zweite Position wird die Schubstange in Richtung der Drehscheibe verschoben, sodass die Drehscheibe um die Drehachse gedreht wird. Dabei ist die Drehscheibe in der zweiten Position der Schubstange so angeordnet, dass das Rollenfahrwerk von der angrenzenden Schiene auf die Drehscheibe bewegbar ist.

In einer weiteren Ausgestaltung des Tragesystems nach dem dritten oder fünften Aspekt ist das zweite Ende des Seilzugs mittels eines Hebels an der Längsschiene oder der Querschiene angebracht, wobei das Betätigungselement als eine Klinke zum Betätigen des Hebels ausgebildet ist, um die Drehscheibe zu drehen.

Durch das Betätigen des Hebels mittels der Klinke wird der Seilzug gezogen, sodass die Drehscheibe in die entsprechende Drehposition, sprich die Längsposition oder die Querposition, gedreht wird, sodass das Rollenfahrwerk von der angrenzenden Schiene auf die Drehscheibe bewegbar ist.

In einer weiteren Ausgestaltung des Tragesystems nach dem dritten oder fünften Aspekt weist die Schieneneinrichtung eine Federeinrichtung auf, die dazu ausgebildet ist, die Drehscheibe in einer Zwischenposition zwischen der Längsposition und der Querposition vorzuspannen.

Mittels der Federeinrichtung ist die entsprechende Drehscheibe in einer Zwischenposition als Ruheposition vorgespannt. Zum Passieren der Drehscheibe richtet das Rollenfahrwerk die entsprechende Drehscheibe zuerst aus, indem sie die Drehscheibe in die entsprechende Drehposition, sprich die Längsposition oder die Querposition, dreht, sodass das Rollenfahrwerk auf der Drehscheibe bewegbar ist.

In einer weiteren Ausgestaltung des Tragesystems nach dem dritten oder fünften Aspekt weist das Tragesystem eine Mehrzahl von Längsschienen und eine Mehrzahl von Querschienen auf, wobei das Tragesystem ein Schienenfahrzeug zum Tragen eines medizinischen Geräts aufweist, wobei das Schienenfahrzeug mindestens zwei, insbesondere vier, Rollenfahrwerke aufweist.

Auf diese Weise weist das Schienenfahrzeug zwei Lagerungspunkte an der Schieneneinrichtung auf, sodass sich Kräfte und Drehmomente besser verteilen und eine an dem Schienenfahrzeug angebrachte Nutzlast, wie beispielsweise ein medizinisches Gerät, nicht ins pendeln kommt. Dadurch ist die Stabilität des Tragesystems erhöht. Insbesondere, wenn das Schienenfahrzeug vier Rollenfahrwerke aufweist, weist das Schienenfahrzeug vier Lagerungspunkte an der Schieneneinrichtung auf, so dass Kräfte und Drehmomente in zwei Raumrichtungen besser verteilt werden. Dadurch ist das Schienenfahrzeug besonders stabil an der Schieneneinrichtung angebracht.

In einer weiteren Ausgestaltung des Tragesystems nach dem dritten oder fünften Aspekt entspricht ein Abstand zwischen den Drehachsen zweier, benachbarter Drehscheiben in der Längsbewegungsrichtung bzw. der Querbewegungsrichtung dem Abstand der Rollenfahrwerke in der entsprechenden Längsbewegungsrichtung bzw. Querbewegungsrichtung.

Auf diese Weise können die Rollenfahrwerke gleichzeitig auf je einer Drehscheibe zum Richtungswechsel der Bewegungsrichtung des Schienenfahrzeugs zwischen der Längsbewegungsrichtung und der Querbewegungsrichtung, sprich zum Transfer zwischen einer Längsschiene und einer Querschiene, angeordnet werden.

In einer weiteren Ausgestaltung des Tragesystems nach dem dritten oder fünften Aspekt sind die Rollenfahrwerke an dem Schienenfahrzeug um jeweils die entsprechende Drehachse drehbar gelagert, wobei das Schienenfahrzeug eine Antriebseinrichtung zum Drehen der Rollenfahrwerke um die entsprechende Drehachse aufweist.

Durch das Drehen der Rollenfahrwerke, wenn diese auf jeweils einer Drehscheibe angeordnet sind, wird die jeweilige Drehscheibe zum Ausrichten der Drehscheibe mitgedreht.

In einer weiteren Ausgestaltung des Tragesystems nach dem dritten oder fünften Aspekt sind die Rollenfahrwerke mittels jeweils eines Schafts mit einem Gehäuseteil des Schienenfahrzeugs verbunden, wobei die Schäfte an dem Gehäuseteil um die jeweilige Drehachse drehbar gelagert sind.

Das Gehäuseteil bildet somit einen Grundkörper des Schienenfahrzeugs aus, wobei die Rollenfahrwerke relativ zu dem Grundkörper drehbar sind.

Ausführungsformen sind in den Zeichnungen dargestellt und werden in der nachfolgenden Beschreibung näher erläutert. Es zeigen:
- Fig. 1: eine schematische Längsansicht einer ersten Ausführungsform eines Tragesystems;
- Fig. 2: eine Seitenansicht des Tragesystems aus Fig. 1;
- Fig. 3: eine Detailansicht der Rollen und der Schiene des Tragesystems aus Fig. 1 mit geraden Laufflächen;
- Fig. 4: die Detailansicht aus Fig. 3 mit konvexen Laufflächen;
- Fig. 5: die Detailansicht aus Fig. 3 mit konkaven Laufflächen;
- Fig. 6: eine Detailansicht der Bremseinrichtung des Tragesystems aus Fig. 1;
- Fig. 7: eine Seitenansicht einer ersten Ausführungsform einer Antriebseinrichtung des Tragesystems aus Fig. 1;
- Fig. 8: eine Seitenansicht einer zweiten Ausführungsform einer Antriebseinrichtung des Tragesystems aus Fig. 1;
- Fig. 9: eine Seitenansicht einer dritten Ausführungsform einer Antriebseinrichtung des Tragesystems aus Fig. 1;
- Fig. 10: eine Seitenansicht einer vierten Ausführungsform einer Antriebseinrichtung des Tragesystems aus Fig. 1;
- Fig. 11: eine Längsansicht der Antriebseinrichtung aus Fig. 10;
- Fig. 12: eine fünfte Ausführungsform eines Tragesystems mit der Antriebseinrichtung aus den Figuren 10 und 11;
- Fig. 13: eine isometrische Ansicht (A) und eine Draufsicht (B) einer Lagerungseinrichtung des Tragesystems aus Figur 12;
- Fig. 14: eine schematische Draufsicht einer dritten Ausführungsform eines Tragesystems;
- Fig. 15: eine schematische Draufsicht einer ersten Ausführungsform einer Schieneneinrichtung des Tragesystems aus Fig. 14;
- Fig. 16: eine schematische Draufsicht einer zweiten Ausführungsform einer Schieneneinrichtung des Tragesystems aus Fig. 14;
- Fig. 17: eine Querschnittansicht und eine Längsschnittansicht einer Ausführungsform einer Schiene;
- Fig. 18: eine Längsschnittansicht einer Ausführungsform einer Schiene mit integrierter Drehscheibe;
- Fig. 19: eine Schnittansicht eines Kreuzungspunkts einer Längsschiene und einer Querschiene mit in der Längsposition angeordneter Drehscheibe;
- Fig. 20: eine Schnittansicht des Kreuzungspunkts aus Fig. 19 mit in der Querposition angeordneter Drehscheibe;
- Fig. 21: eine schematische Draufsicht einer ersten Ausführungsform eines Fernwirkmechanismus zum Drehen einer Drehscheibe in dem Tragesystem aus Fig. 14 mit in der Längsposition angeordneter Drehscheibe;
- Fig. 22: eine schematische Draufsicht des Fernwirkmechanismus aus Fig. 21 mit in der Querposition angeordneter Drehscheibe;
- Fig. 23: eine Schnittansicht des Fernwirkmechanismus aus Fig. 21 mit in der Längsposition angeordneter Drehscheibe;
- Fig. 24: eine Schnittansicht des Fernwirkmechanismus aus Fig. 21 mit in der Querposition angeordneter Drehscheibe;
- Fig. 25: eine schematische Draufsicht einer zweiten Ausführungsform eines Fernwirkmechanismus zum Drehen einer Drehscheibe in dem Tragesystem aus Fig. 14 mit in der Längsposition angeordneter Drehscheibe;
- Fig. 26: eine schematische Draufsicht des Fernwirkmechanismus aus Fig. 25 mit in der Querposition angeordneter Drehscheibe;
- Fig. 27: eine Schnittansicht des Fernwirkmechanismus aus Fig. 25 mit in der Querposition angeordneter Drehscheibe ohne Rollenfahrwerk;
- Fig. 28: eine Schnittansicht des Fernwirkmechanismus aus Fig. 25 mit in der Längsposition angeordneter Drehscheibe und mit Rollenfahrwerk;
- Fig. 29: eine Schnittansicht des Fernwirkmechanismus aus Fig. 25 mit in der Querposition angeordneter Drehscheibe mit Rollenfahrwerk;
- Fig. 30: eine schematische Draufsicht einer dritten Ausführungsform eines Fernwirkmechanismus zum Drehen einer Drehscheibe in dem Tragesystem aus Fig. 14 mit in einer Zwischenposition angeordneter Drehscheibe;
- Fig. 31: schematische Draufsichten einer vierten Ausführungsform eines Fernwirkmechanismus zum Drehen einer Drehscheibe in dem Tragesystem aus Fig. 14;
- Fig. 32: eine schematische Draufsicht einer fünften Ausführungsform eines Fernwirkmechanismus zum Drehen einer Drehscheibe in dem Tragesystem aus Fig. 14;
- Fig. 33: eine schematische Ansicht einer Ausführungsform eines Schienenfahrzeugs des Tragesystem aus Fig. 14;
- Fig. 34: eine Draufsicht einer Anordnung des Schienenfahrzeugs aus Fig. 33 auf Drehscheiben; und
- Fig. 35: eine Längsschnittansicht einer Anordnung des Schienenfahrzeugs aus Fig. 33 auf Drehscheiben.

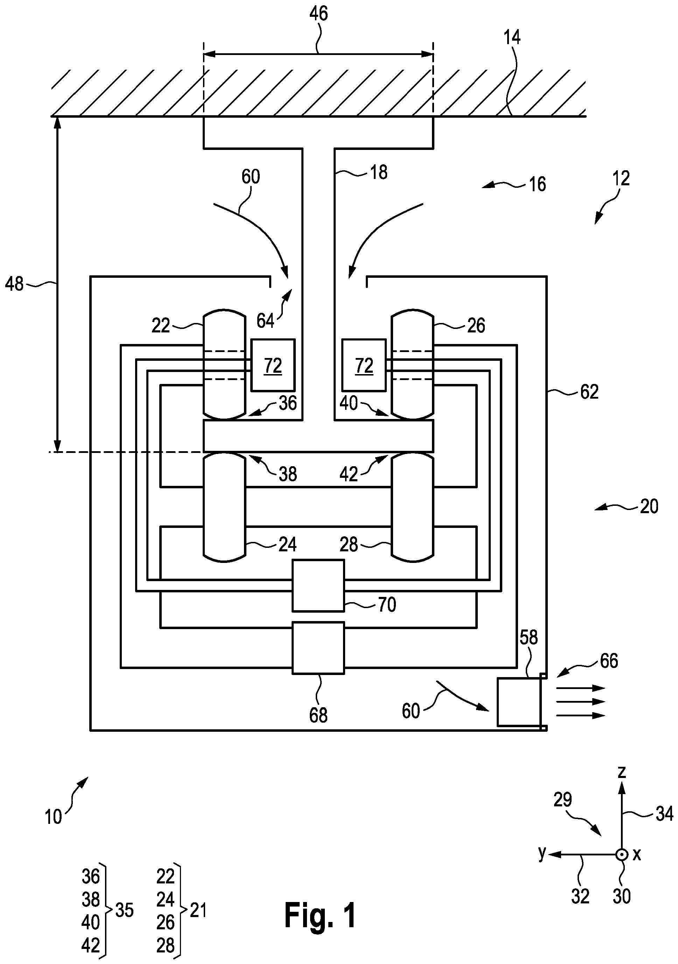

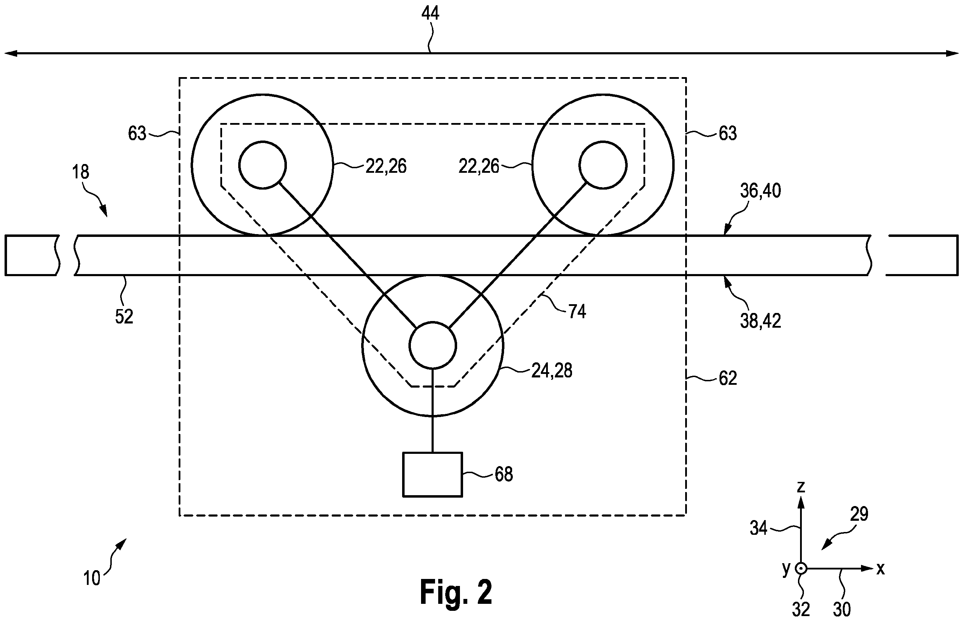

Die Figuren 1 und 2 zeigen eine erste Ausführungsform eines Tragesystems 10 für einen medizinischen Behandlungsraum 12. Der medizinische Behandlungsraum 12 weist eine Decke 14 auf. Das Tragesystem 10 weist eine Schieneneinrichtung 16 mit einer Schiene 18 auf, die an der Decke befestigbar ist. In der vorliegenden Ausführungsform ist die Schieneneinrichtung 16 an der Decke 14 befestigt.

Das Tragesystem 10 ist bezüglich eines dreidimensionalen, insbesondere kartesischen, Koordinatensystems 29 angeordnet, das die drei Raumrichtungen X, Y und Z aufweist. Bezüglich des Behandlungsraums 12 entspricht die Z-Richtung der vertikalen Richtung, wobei die X-Richtung und die Y-Richtung in einer horizontalen Ebene liegen. Die Schiene 18 weist eine Längserstreckung 44 in einer Längsrichtung 30 auf. Die Längsrichtung 30 entspricht der X-Richtung des Koordinatensystems 29. Die Schiene 18 weist des Weiteren eine Quererstreckung 46 in einer Querrichtung 32 auf. Die Querrichtung 32 entspricht der Y-Richtung des Koordinatensystems 29. Die Schiene 18 weist des Weiteren eine Höhenerstreckung 48 in einer Höhenrichtung 34 auf. Die Höhenrichtung 34 entspricht der Z-Richtung des Koordinatensystems 29. Die Längsrichtung 30, die Querrichtung 32 und die Höhenrichtung 34 sind jeweils paarweise quer zueinander, insbesondere senkrecht zueinander, angeordnet.

In Fig. 1 ist das Tragesystem 10 in einer Längsansicht dargestellt. Die Blickrichtung der Längsansicht ist dabei die Längsrichtung 30. In Fig. 2 ist das Tragesystem 10 in einer Seitenansicht bzw. Queransicht dargestellt. Die Blickrichtung der Seitenansicht ist dabei die Querrichtung 32.

Das Tragesystem 10 weist des Weiteren ein Rollenfahrwerk 20 mit einer Mehrzahl von Rollen 21 auf. Das Rollenfahrwerk 20 ist dazu ausgebildet, ein medizinisches Gerät zu tragen. Die Schiene 18 der Schieneneinrichtung 16 weist eine Mehrzahl von Laufflächen 35 für die Rollen 21 des Rollenfahrwerks 20 auf. Die Laufflächen 35 erstrecken sich in der Längsrichtung 30. Das Rollenfahrwerk 20 ist mittels der Rollen 21 entlang der Schiene 18 in der Längsrichtung 30 bewegbar. Die Laufflächen 35 sind jeweils senkrecht zu der Höhenrichtung 34 angeordnet.

Die Mehrzahl von Rollen 21 umfasst zwei erste Rollen 22, eine zweite Rolle 24, zwei dritte Rollen 26 und eine vierte Rolle 28. Die Mehrzahl von Laufflächen 35 umfasst eine erste Lauffläche 36, eine zweite Lauffläche 38, eine dritte Lauffläche 40 und eine vierte Lauffläche 42. Die zwei ersten Rollen 22 sind an der ersten Lauffläche 36 angeordnet. Die zweite Rolle 24 ist an einer zweiten Lauffläche 38 angeordnet. Die zwei dritten Rollen 26 sind an der dritten Lauffläche 40 angeordnet. Die vierte Rolle 28 ist an der vierten Lauffläche 42 angeordnet. Die erste Lauffläche 36 und die zweite Lauffläche 38 sind in der Höhenrichtung 34 auf gegenüberliegenden Seiten der Schiene 18 angeordnet. Die dritte Lauffläche 40 und die vierte Lauffläche 42 sind in der Höhenrichtung 34 auf gegenüberliegenden Seiten der Schiene 18 angeordnet. Die erste und die zweite Lauffläche 36, 38 sind von der dritten und der vierten Lauffläche 40, 42 in der Querrichtung 32 voneinander beabstandet. Insbesondere sind die erste Lauffläche 36 und die dritte Lauffläche 40 in der Querrichtung 32 auf gegenüberliegenden Seiten der Schiene 18 angeordnet. Die zwei ersten Rollen 22 sind in der Längsrichtung 30 voneinander beabstandet. Die zwei dritten Rollen 26 sind in der Längsrichtung 30 voneinander beabstandet.

Das Rollenfahrwerk 20 weist des Weiteren eine Filtereinrichtung 58 auf. Die Filtereinrichtung 58 ist dazu ausgebildet, Luft aus dem Bereich der Rollen 21 anzusaugen und zu filtern. Dazu kann die Filtereinrichtung 58 einen Luftstrom 60 erzeugen, der von den Rollen 21 zu der Filtereinrichtung 58 strömt.

Das Rollenfahrwerk 20 weist des Weiteren ein Gehäuse 62 auf. Die Rollen 21 sind in dem Gehäuse 62 angeordnet. Das Gehäuse 62 weist eine erste Öffnung 64 auf. Die erste Öffnung 64 ist an einer der Decke 14 zugewandten Seite des Gehäuses 62 angeordnet. Die Schiene 18 erstreckt sich in der Höhenrichtung 34 von der Decke 14 durch die erste Öffnung 64 bis zu den Rollen 21. Die erste Öffnung 64 kann insbesondere als eine Aussparung ausgebildet sein, die sich in der Längsrichtung 30 zwischen zwei Längsseiten 63 des Gehäuses 62 erstreckt. Des Weiteren ist die Öffnung 64 auch an den Längsseiten 63 geöffnet, damit die Schiene 18 in der Längsrichtung durch das Gehäuse 62 geführt werden kann, so dass das Rollenfahrwerk 20 entlang der Schiene 18 in der Längsrichtung 30 bewegbar ist.

Das Gehäuse 62 weist des Weiteren eine zweite Öffnung 66 auf. Die Filtereinrichtung 58 ist an der zweiten Öffnung 66 angeordnet. Die Filtereinrichtung 58 ist insbesondere dazu ausgebildet Luft durch die erste Öffnung 64 anzusaugen und gefiltert aus der zweiten Öffnung 66 wieder hinaus zu blasen. Der erzeugte Luftstrom 60 verläuft demnach von der ersten Öffnung 64 durch das Innere des Gehäuses, insbesondere vorbei an dem Bereich, in dem die Rollen 21 angeordnet sind, bis zu der zweiten Öffnung 66, an der die Filtereinrichtung 58 angeordnet ist.

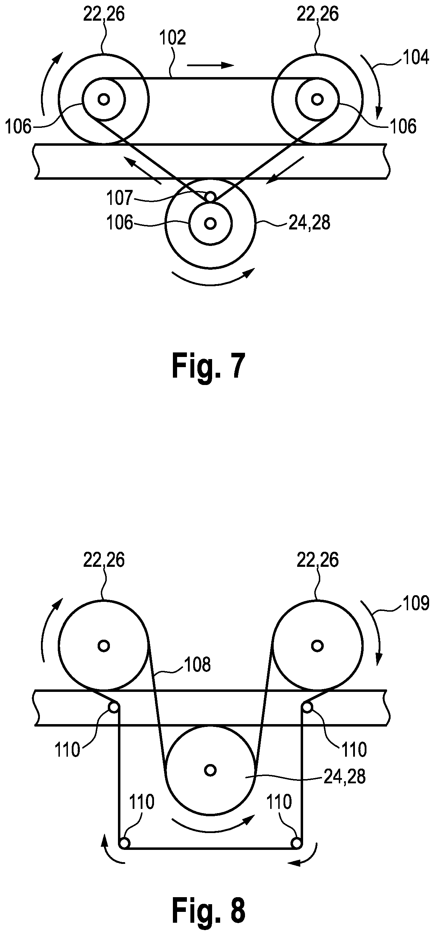

Das Rollenfahrwerk 20 weist des Weiteren eine Antriebseinrichtung 68 zum Antreiben der Rollen 21 auf. Die Antriebseinrichtung 68 ist in dem Gehäuse 62 angeordnet. Vorzugsweise ist die Antriebseinrichtung 68 auch dazu ausgebildet, die Rollen 21 des Rollenfahr-werks 20 zu bremsen. Verschiedene Ausführungsformen der Antriebseinrichtung 68 werden nachfolgend mit Bezug auf die Figuren 7-11 beschrieben.

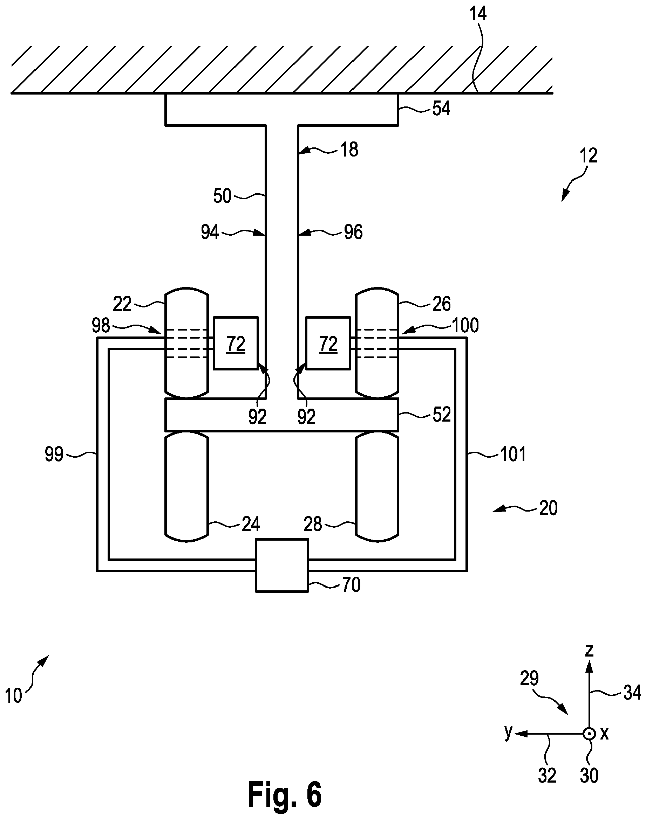

Das Rollenfahrwerk 20 weist des Weiteren eine Bremseinrichtung 70 auf. Die Bremseinrichtung 70 ist in dem Gehäuse 62 in dem Luftstrom 60 zwischen der ersten Öffnung 64 und der zweiten Öffnung 66 angeordnet. Die Bremseinrichtung 70 ist dazu ausgebildet, das Rollenfahrwerk 20 zu bremsen. Dazu weist die Bremseinrichtung 70 Bremsbacken 72 auf, die zum Bremsen gegen die Schiene 18 gedrückt werden können. Die Bremsbacken 72 sind jeweils auf einer der Schiene 18 in der Querrichtung 32 zugewandten Seite jeder der ersten und dritten Rollen 22, 26 angeordnet. In anderen Worten sind die Bremsbacken 72 in der Querrichtung 32 jeweils zwischen der Schiene 18 und den ersten Rollen 22 und der Schiene 18 und den dritten Rollen 26 angeordnet. Eine detaillierte Ausführungsform der Bremseinrichtung 70 wird nachfolgend mit Bezug auf die Fig. 6 genauer beschrieben.

Alternativ können die Bremsbacken 72 auch nur in mindestens zwei gegenüberliegenden Rollen 22, 26 angeordnet sein, auf jeder Seite des Stegs direkt gegenüberliegend. Des Weiteren müssen die Bremsbacken nicht zwingend in die Rollen integriert sein. Alternativ können die Bremsbacken separat zu den Rollen 26, insbesondere neben den Rollen 22, 26, angeordnet sein. In bevorzugter Weise sind die Bremsbacken 72 beidseitig des Stegs gegenüberliegend angeordnet.

Das Rollenfahrwerk 20 kann des Weiteren zwei Lagerblöcke 74 aufweisen. Die Lagerblöcke 74 sind ebenfalls in dem Gehäuse 62 angeordnet. Die ersten Rollen 22 und die zweite Rolle 24 sind in einem ersten Lagerblock gelagert und die dritten Rollen 26 und die vierte Rolle 28 sind an einem zweiten Lagerblock gelagert. Vorzugsweise sind die Rollen 21 jeweils mittels einer Welle an dem Lagerblock gelagert.

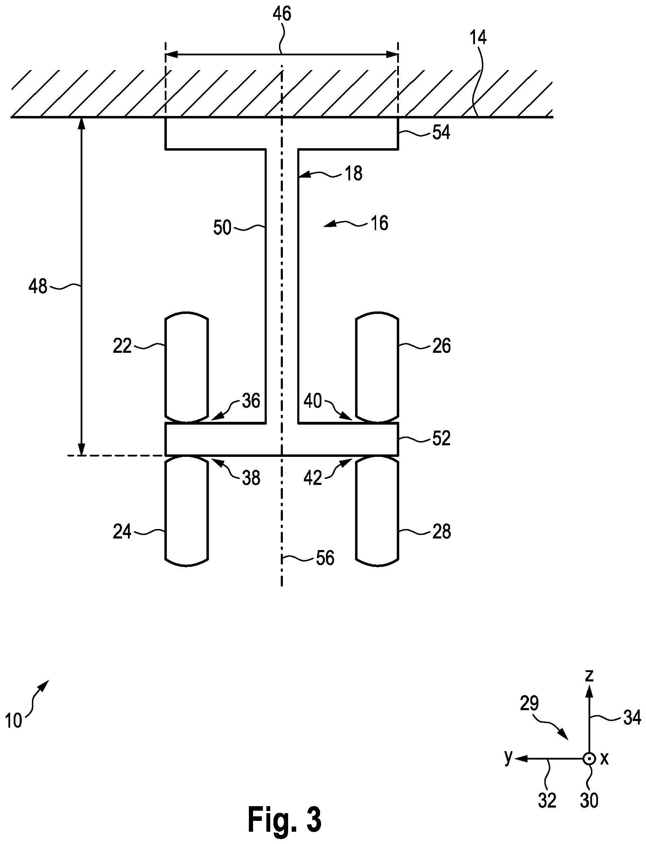

In Fig. 3 werden die Ausbildung und die Anordnung der Schiene 18 und der Rollen 21 genauer beschrieben. In der vorliegenden Ausführungsform weist die Schiene 18 einen Steg 50, einen ersten Flansch 52 und einen zweiten Flansch 54 auf, die sich jeweils entlang der Längsrichtung 30 erstrecken. Der erste Flansch 52 erstreckt sich zudem in der Querrichtung 32. Der zweite Flansch 54 erstreckt sich ebenfalls in der Querrichtung 32 und ist parallel zu dem ersten Flansch 52 angeordnet. Der Steg 50 erstreckt sich in der Höhenrichtung 34 von dem ersten Flansch 50 zu dem zweiten Flansch 54. Die Schiene 18 weist eine Schwerachse 56 auf, die sich entlang einer Mittelachse des Stegs 18 in der Höhenrichtung 34 erstreckt.

Der erste Flansch 52 weist in der Querrichtung 32 zwei Teilbereiche auf, wobei die Teilbereiche auf gegenüberliegenden Seiten der Schwerachse 56 angeordnet sind. Der zweite Flansch 54 weist ebenfalls in der Querrichtung 33 zwei Teilbereiche auf, wobei die beiden Teilbereiche auf gegenüberliegenden Seiten der Schwerachse 56 angeordnet sind.

Die Laufflächen 35 sind an dem ersten Flansch 52 angeordnet. Die erste Lauffläche 36 und die zweite Lauffläche 38 sind in einem ersten Teilbereich des Flanschs 52 in der Höhenrichtung 34 auf gegenüberliegenden Seiten des Flanschs 52 angeordnet. Die dritte Lauffläche 40 und die vierte Lauffläche 42 sind in einem zweiten Teilbereich des Flanschs 52 in der Höhenrichtung 34 auf gegenüberliegenden Seiten des Flanschs 52 angeordnet. In anderen Worten sind die erste und die zweite Lauffläche 36, 38 auf einer Seite des Stegs 50 angeordnet und die dritte und vierte Lauffläche 40, 42 auf einer in der Querrichtung 32 gegenüberliegenden Seite des Stegs 50 angeordnet.

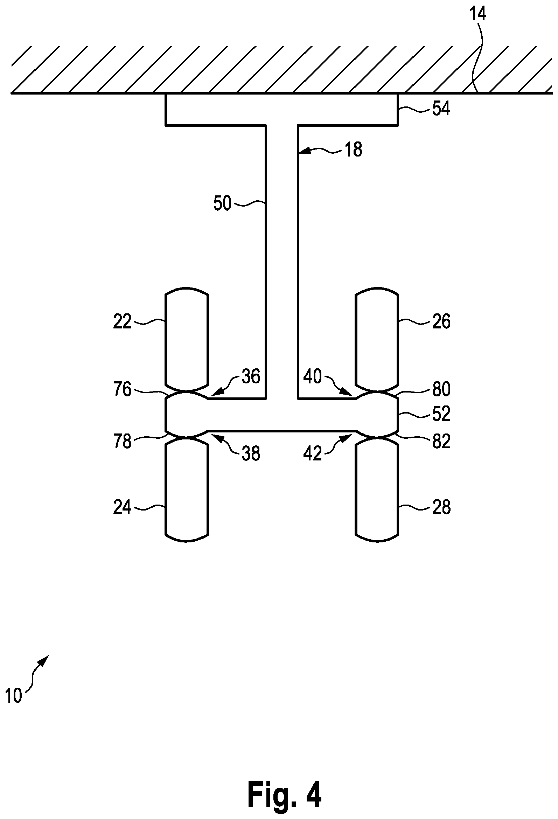

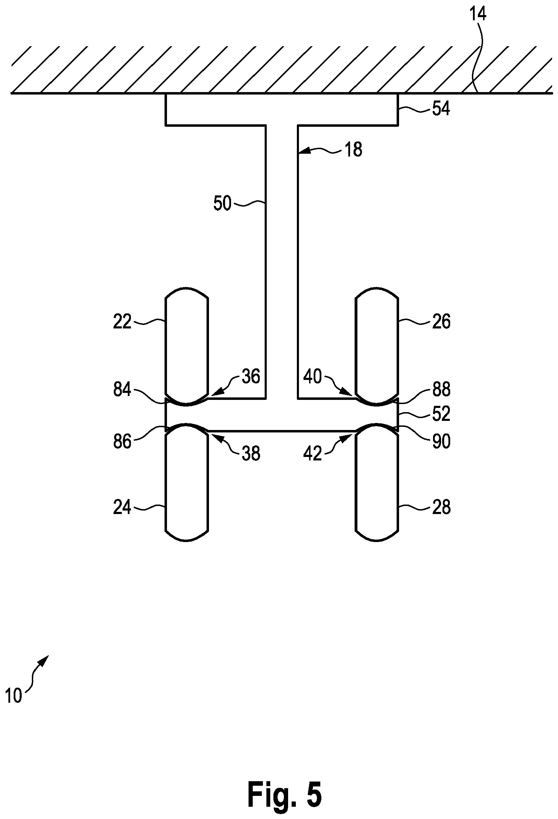

Die Figuren 4 und 5 zeigen alternative Ausbildungen und Anordnungen der Schiene 18 und der Rollen 21 des Tragesystems aus Fig. 1. Der Unterschied zu der in Figur 3 beschriebenen Ausbildung und Anordnung besteht darin, dass die Laufflächen 35 bombiert ausgestaltet sind.

In der Ausführungsform der Fig. 4 sind die Laufflächen 35 konvex ausgestaltet. Dazu weist die erste Lauffläche 36 einen ersten konvexen Bereich 76, die zweite Lauffläche 38 einen zweiten konvexen Bereich 78, die dritte Lauffläche 40 einen dritten konvexen Bereich 80 und die vierte Lauffläche 42 einen vierten konvexen Bereich 82 auf. Die ersten Rollen 22 sind an dem ersten konvexen Bereich 76 angeordnet. Die zweite Rolle 24 ist an dem zweiten konvexen Bereich 78 angeordnet. Die dritten Rollen 26 sind an dem dritten konvexen Bereich 80 angeordnet. Die vierte Rolle 28 ist an dem vierten konvexen Bereich 82 angeordnet.

In der Ausführungsform der Fig. 5 sind die Laufflächen 35 konkav ausgestaltet. Dazu weist die erste Lauffläche 36 einen ersten konkaven Bereich 84, die zweite Lauffläche 38 einen zweiten konkav Bereich 86, die dritte Lauffläche 40 einen dritten konkav Bereich 88 und die vierte Lauffläche 42 einen vierten konkav Bereich 90 auf. Die ersten Rollen 22 sind an dem ersten konkaven Bereich 84 angeordnet. Die zweite Rolle 24 ist an dem zweiten konkaven Bereich 86 angeordnet. Die dritten Rollen 26 sind an dem dritten konkaven Bereich 88 angeordnet. Die vierte Rolle 28 ist an dem vierten konkaven Bereich 90 angeordnet.

In Fig. 6 wird die Ausgestaltung und Anordnung der Bremseinrichtung 70 des Tragesystems 10 aus Fig. 1 beschrieben. Die Bremsbacken 72 sind, wie bereits in Fig. 1 beschrieben, in der Querrichtung 32 jeweils zwischen dem Steg 50 und der entsprechenden ersten Rolle 22 und der dritten Rolle 26 angeordnet.

Der Steg 50 weist in der Querrichtung 32 zwei gegenüberliegende Seitenflächen 94,96 auf. Je eine Bremsbacke 72 ist zwischen jeweils einer der ersten Rollen 22 und der ersten Seitenfläche 94 des Stegs 18 angeordnet. Je eine Bremsbacke 72 ist zwischen jeweils einer der dritten Rollen 26 und der zweiten Seitenfläche 96 des Stegs 18 angeordnet. Die Bremsbacken 72 weisen auf der dem Steg 50 zugewandten Seite jeweils Bremsbeläge 92 auf. Beim Bremsen mittels der Bremsbacken 72 werden die Bremsbeläge 92 der Bremsbacken 72 gegen die entsprechenden Seitenflächen 94, 96 des Stegs 50 gedrückt.

Die Bremsbacken 72 sind mit der Bremseinrichtung 70 über Bowdenzüge 99, 101 verbunden, über die Bremsbacken gesteuert bzw. aktuiert werden. Die ersten Rollen 22 weisen jeweils einen ersten Kanal 98 auf. Durch jeden ersten Kanal 98 ist jeweils ein erster Bowdenzug 99 geführt, um die entsprechenden Bremsbacken 72, die an den ersten Rollen 22 angeordnet sind, mit der Bremseinrichtung 70 zu verbinden. Die dritten Rollen 26 weisen jeweils einen zweiten Kanal 100 auf. Durch jeden zweiten Kanal 100 ist jeweils ein zweiter Bowdenzug 101 geführt, um die entsprechenden Bremsbacken 72, die an den dritten Rollen 26 angeordnet sind, mit der Bremseinrichtung 70 zu verbinden.

Fig. 7 zeigt eine erste Ausführungsform der Antriebseinrichtung 68 des Tragesystems 10 aus Fig. 1. Die Antriebseinrichtung 68 der ersten Ausführungsform weist zwei umlaufende Endlosketten 102 auf. Die ersten und zweiten Rollen 22, 24 sowie die dritten und vierten Rollen 26, 28 weißen jeweils Zahnräder 106 auf, die axial zu der entsprechenden Drehachse der korrespondierenden Rollen ausgerichtet sind. Die Endlosketten 102 laufen in einer Umlaufrichtung 104 um die entsprechenden Zahnräder 106 um. Eine erste Endloskette 102 läuft dabei um die Zahnräder 106 der ersten und zweiten Rollen 22, 24 um. Eine zweite Endloskette 102 läuft um die Zahnräder 106 der dritten und vierten Rollen 26, 28 um. Die Endlosketten 102 werden mittels der Antriebseinrichtung 68 synchron angetrieben. Alternativ können auch statt Endlosketten Zahnriehmen verwendet werden. Zahnriemen sind dabei ein wartungsarmes, geräuscharmes Transmissionssystem.

Damit die Rollen 21 das Rollenfahrwerk 20 in dieselbe Richtung bewegen, ist es erforderlich, dass die zweiten und vierten Rollen 24, 28 gegenläufig zu den ersten und dritten Rollen 22, 26 angetrieben werden. Die beiden Endlosketten 102 sind daher derart angeordnet, dass die zweiten und vierten Rollen 24, 28 gegenläufig zu den ersten und dritten Rollen 22, 26 angetrieben werden. Dazu laufen die Endlosketten 102 um die Zahnräder 106 der ersten bzw. dritten Rollen zwei 20, 26 um, während die Endlosketten 102 mittels eines Andrückrades 107 gegen das Zahnrad 106 der zweiten bzw. vierten Rollen 24, 28 gedrückt werden, um mit der entsprechenden zweiten bzw. vierten Rolle 24, 28 in Eingriff zukommen.

Alternativ kann auch vorgesehen sein, dass statt der Endloskette 102 und Zahnrädern 106 ein Endlosband und Mitnahmeräder vorgesehen sind, um die Rollen entsprechend anzutreiben.

Fig. 8 zeigt eine zweite Ausführungsform der Antriebseinrichtung 68 des Tragesystems 10 aus Fig. 1. Die Antriebseinrichtung 68 der zweiten Ausführungsform weist zwei umlaufende Endlosbänder 108 auf. Die Endlosbänder 108 laufen in einer Umlaufrichtung 109 um die entsprechenden Rollen 21 um. Ein erstes Endlosband 108 läuft dabei um die ersten und zweiten Rollen 22, 24 um. Ein zweites Endlosband 108 läuft um die dritten und vierten Rollen 26, 28 um. Alternativ können die ersten und zweiten Rollen 22, 24 sowie die dritten und vierten Rollen 26, 28 jeweils Mitnehmerrollen aufweisen, die axial zu der entsprechenden Drehachse der korrespondierenden Rollen ausgerichtet sind und um die das jeweilige Endlosband 108 in der Umlaufrichtung umläuft. Die Endlosbänder 108 werden mittels der Antriebseinrichtung 68 synchron angetrieben.

Damit die Rollen 21 das Rollenfahrwerk 20 in dieselbe Richtung bewegen, ist es erforderlich, dass die zweiten und vierten Rollen 24, 28 gegenläufig zu den ersten und dritten Rollen 22, 26 angetrieben werden. Die beiden Endlosbänder sind daher entsprechend angeordnet. Insbesondere laufen die Endlosbänder 108 dazu um die zweite bzw. vierte Rolle 24, 28 in entgegengesetzter Richtung zu den ersten bzw. dritten Rollen 22,26 um.

Die Antriebseinrichtung 68 weist des Weiteren Umlenkrollen 110 auf, die dazu ausgebildet sind, dass Endlosband 108 von der zweiten bzw. vierten Rolle beabstandet um die zweite bzw. vierte Rolle herum zwischen den beiden ersten bzw. dritten Rollen 22,26 zu überführen.

Alternativ kann auch vorgesehen sein, dass statt des Endlosbands 108 und der Mitnahmeräder 106 eine Endloskette bzw. Zahnriemen und Zahnräder vorgesehen sind, um die Rollen entsprechend anzutreiben.

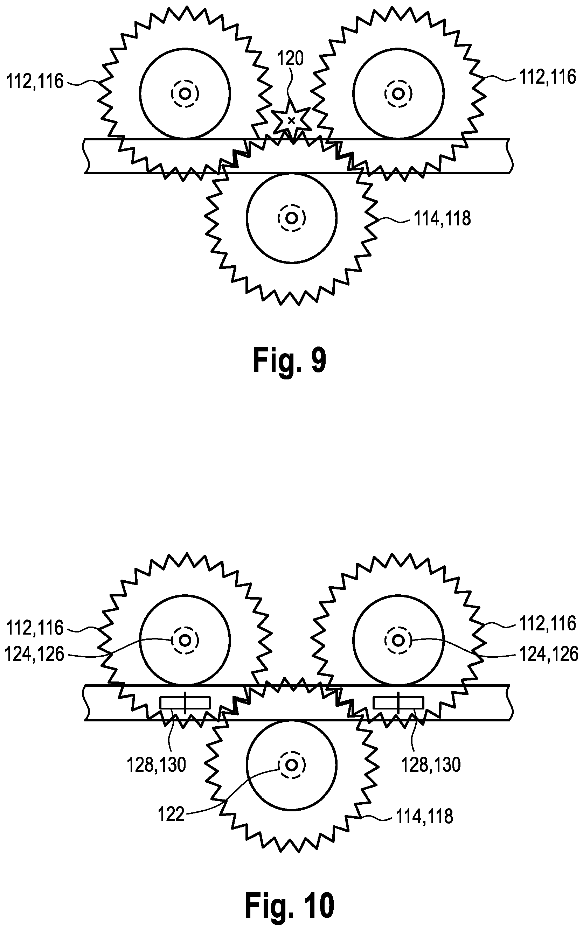

Fig. 9 zeigt eine dritte Ausführungsform der Antriebseinrichtung 68 des Tragesystems 10 aus Fig. 1. Die Antriebseinrichtung 68 der dritten Ausführungsform weist je ein Zahnrad für jeweils eine der Rollen 21 auf. Dabei weist die Antriebseinrichtung 68 zwei erste Zahnräder 112 für die ersten Rollen 22 auf. Die Antriebseinrichtung 68 weist ein zweites Zahnrad 114 für die zweite Rolle 24 auf. Die Antriebseinrichtung 68 weist zwei dritte Zahnräder 116 für die dritten Rollen 26 auf. Die Antriebseinrichtung 68 weist ein viertes Zahnrad 118 für die vierte Rolle 28 auf. Die einzelnen Zahnräder sind mit den jeweiligen Rollen 21, beispielsweise über eine Welle, gekoppelt.

Das zweite Zahnrad 114 ist in Eingriff mit den beiden ersten Zahnrädern 112. Das vierte Zahnrad 118 ist in Eingriff mit den beiden dritten Zahnrädern 116. Das Übersetzungsverhältnis zwischen den jeweiligen Zahnrädern ist 1. In anderen Worten haben die Zahnräder alle den gleichen Umfang.

Die Antriebseinrichtung 68 der dritten Ausführungsform weist des Weiteren ein Antriebszahnrad 120 auf. Das Antriebszahnrad 120 ist in Eingriff mit dem zweiten oder dem vierten Zahnrad 114, 118, um das entsprechende Zahnrad 114, 118 anzutreiben. Das Antriebszahnrad 120 kann beispielsweise mit einem Getriebemotor gekoppelt sein. Das zweite und das vierte Zahnrad 114, 118 können über eine gemeinsame Welle miteinander verbunden sein. Alternativ kann auch vorgesehen sein, dass zwei Antriebszahnräder 120 vorgesehen sind, wobei jeweils eines der Antriebszahnräder 120 eines der zweiten und vierten Zahnräder 114, 118 antreibt.

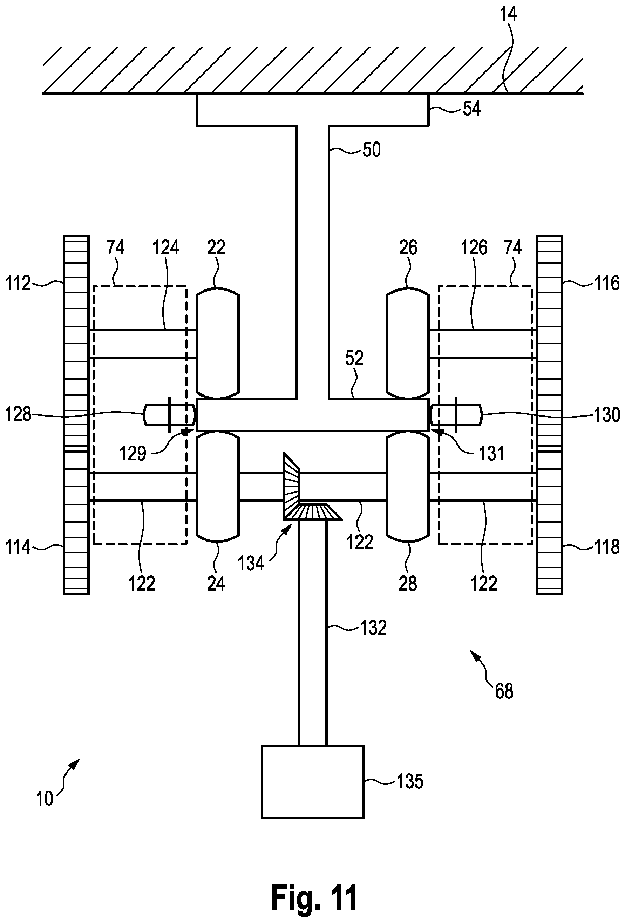

Die Figuren 10 und 11 zeigen eine vierte Ausführungsform der Antriebseinrichtung 68 des Tragesystems 10 aus Fig. 1. Die Antriebseinrichtung 68 der vierten Ausführungsform weist ebenfalls je ein Zahnrad für jeweils eine der Rollen 21 auf. Die Antriebseinrichtung 68 weist je ein erstes Zahnrad 112 für je eine der ersten Rollen 22 auf. Die Antriebseinrichtung 68 weist ein zweites Zahnrad 114 für die zweite Rolle 24 auf. Die Antriebseinrichtung 68 weist je ein drittes Zahnrad 116 für je eine der dritten Rollen 26 auf. Die Antriebseinrichtung 68 weist ein viertes Zahnrad 118 für die vierte Rolle 28 auf. Das zweite Zahnrad 114 ist in Eingriff mit den ersten Zahnrädern 112. Das vierte Zahnrad 118 ist in Eingriff mit den dritten Zahnrädern 116. Das Übersetzungsverhältnis der Zahnräder zueinander ist gleich 1. In anderen Worten weisen die Zahnräder alle denselben Umfang auf.

Die Antriebseinrichtung 68 weist des Weiteren zwei erste Wellen 124 auf, die jeweils die beiden ersten Zahnräder 112 drehfest mit den beiden ersten Rollen 22 verbinden. Je eine der ersten Wellen 124 erstreckt sich von je einem der ersten Rollen 22 zu je einem der ersten Zahnräder 112. Die ersten Zahnräder 112 sind in der Querrichtung 32 auf einer der Schiene 18 abgewandten, insbesondere dem Steg 50 abgewandten, Seite der ersten Rollen 22 angeordnet. Die Antriebseinrichtung 68 weist des Weiteren zwei zweite Wellen 126 auf, die jeweils die beiden dritten Zahnräder 116 drehfest mit den beiden ersten Rollen 26 verbinden. Je eine der zweiten Wellen 124 erstreckt sich von je einem der dritten Rollen 26 zu je einem der dritten Zahnräder 116. Die dritten Zahnräder 116 sind in der Querrichtung 32 auf einer der Schiene 18 abgewandten, insbesondere dem Steg 50 abgewandten, Seite der dritten Rollen 26 angeordnet. Die ersten und die zweiten Wellen 124, 126 erstrecken sich in der Querrichtung 32.

Die Antriebseinrichtung 68 weist des Weiteren eine Gegenwelle 122 auf, die das zweite Zahnrad 114, die zweite Rolle 24, die vierte Rolle 28 und das vierte Zahnrad 118 miteinander verbindet. Das zweite Zahnrad 114, die zweite Rolle 24, die vierte Rolle 28 und das vierte Zahnrad 118 sind dazu in der Querrichtung 32 fluchtend in Reihe angeordnet, wobei sich die Gegenwelle in der Querrichtung 32 erstreckt. Vorzugsweise ist die Gegenwelle 122 auf einer der Decke 14 abgewandten Seite der Schiene 18, insbesondere unterhalb der Schiene 18, sprich unterhalb des Flanschs 52, angeordnet.

Das Tragesystem weist insbesondere zwei Lagerblöcke 74 auf, wobei einer der Lagerblöcke 74 in der Querrichtung 32 zwischen den ersten und zweiten Rollen 22, 24 und den ersten und dem zweiten Zahnrädern 112, 114 angeordnet ist und ein anderer der Lagerblöcke 74 in der Querrichtung 32 zwischen den dritten und vierten Rollen 26, 28 und den dritten und vierten Zahnrädern 116, 118 angeordnet ist. Die ersten Wellen 124, die zweite Welle 126 und die Gegenwelle 122 erstrecken sich in der Querrichtung 32 durch die beiden Lagerblöcke 74 und sind in den beiden Lagerblöcken 74 frei drehbar um entsprechende Drehachsen gelagert, die parallel zu der Querrichtung 32 angeordnet sind.

Vorzugsweise kann die Gegenwelle 122 in den Lagerblöcken 74 in der Höhenrichtung 34 zur Spieleinstellung justiert werden. Des Weiteren sind die Lagerblöcke 74 vorzugsweise massiv ausgebildet, so dass diese sich im Betrieb des Rollenfahrwerks 20 nicht verbiegen.

Die Antriebseinrichtung 68 weist des Weiteren eine Antriebswelle 132 auf, die über ein Winkelgetriebe 134 mit der Gegenwelle 122 gekoppelt ist. Über das Winkelgetriebe 134 wird eine Drehbewegung der Antriebswelle 132 auf die Gegenwelle 122 übertragen. Die Antriebswelle 132 erstreckt sich in der Höhenrichtung 34 . Insbesondere erstreckt sich die Antriebswelle 132 senkrecht zu der Gegenwelle 122.

Des Weiteren weist die Antriebseinrichtung 68 einen Motor 135 auf. Der Motor 135 kann beispielsweise als Getriebemotor ausgebildet sein. Der Motor 135 ist mit der Antriebswelle 132 gekoppelt. Der Motor 135 ist dazu ausgebildet, die Antriebswelle 132 anzutreiben. Der Motor 135 ist somit über die Antriebswelle 132, das Winkelgetriebe 134 und die Gegenwelle 122 mit dem zweiten Zahnrad 114 und dem vierten Zahnrad 118 gekoppelt, um das zweite Zahnrad 114 und das vierte Zahnrad 118 anzutreiben.

Die Antriebseinrichtung 68 weist des Weiteren zwei erste Querrollen 128 und zweite Querrollen 130 auf. Der Flansch 52 weist in der Querrichtung zwei gegenüberliegende Außenflächen 129,131 auf. Die Querrollen sind in den beiden Lagerblöcken 74 um jeweils eine Drehachse frei drehbar gelagert, wobei die Drehachsen der Querrollen 128, 130 parallel zu der Höhenrichtung 34 angeordnet sind. Die ersten Querrollen 128 sind in der Längsrichtung 30 voneinander beabstandet und liegen an der ersten Außenfläche 129 des Flanschs 52 an. Die zweiten Querrollen 130 sind ebenfalls in der Längsrichtung 30 voneinander beabstandet und liegen an der zweiten Außenfläche 131 des Flanschs 52 an.

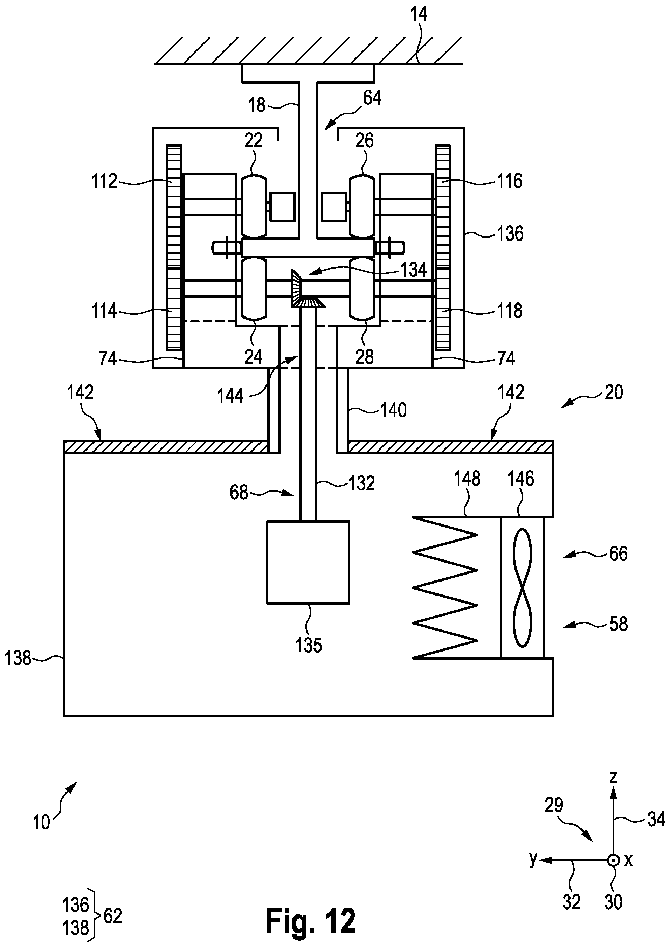

Fig. 12 zeigt eine fünfte Ausführungsform eines Tragesystems 10 für einen medizinischen Behandlungsraum 12. Die fünfte Ausführungsform des Tragesystems 10 entspricht im Wesentlichen der ersten Ausführungsform des Tragesystems aus Fig. 1. Gleiche Elemente sind mit gleichen Bezugszeichen versehen und werden nicht näher erläutert. In der fünften Ausführungsform des Tragesystems 10 sind zusätzlich zu der ersten Ausführungsform des Tragesystems 10 das Gehäuse 62, die Antriebseinrichtung 68 und die Filtereinrichtung 58 genauer dargestellt.

Die Antriebseinrichtung 68 entspricht hierbei der Antriebseinrichtung, die in den Fig. 10 und 11 beschrieben ist.

Das Gehäuse 62 weist einen ersten Gehäuseteil 136 und einen zweiten Gehäuseteil 138 auf. Der zweite Gehäuseteil 138 ist in der Höhenrichtung 34 auf einer der Schiene 18 abgewandten Seite des ersten Gehäuseteils 136 angeordnet. In anderen Worten ist der erste Gehäuseteil 136 näher an der Decke 14 angeordnet als der zweite Gehäuseteil 138 . Insbesondere ist der erste Gehäuseteil 136 zwischen der Decke 14 und dem zweiten Gehäuseteil 138 angeordnet.

Die Rollen 21, die Zahnräder 112,114,116 und 118, die Wellen 122,124 und 126 sowie das Winkelgetriebe 134 sind in dem ersten Gehäuseteil 136 angeordnet. Der Motor 135 und die Filtereinrichtung 58 sind in dem zweiten Gehäuseteil 138 angeordnet. Die erste Öffnung 64 ist auf einer der Decke 14 zugewandten Seite des ersten Gehäuseteils 136 angeordnet. Die zweite Öffnung 66 ist an dem zweiten Gehäuseteil 138 angeordnet.

Der erste Gehäuseteil 136 und der zweite Gehäuseteil 138 sind über einen hohlen Schaft 140 miteinander verbunden. Die Antriebswelle 132 der Antriebseinrichtung 68 erstreckt sich durch den Schaft 140 und koppelt somit den Motor 135 aus dem zweiten Gehäuseteil 138 mit dem Winkelgetriebe 134 aus dem ersten Gehäuseteil 136. Der Schaft 140 erstreckt sich in der Höhenrichtung 34. Die Antriebswelle 132 erstreckt sich in der Höhenrichtung 34 durch den Schaft 140.

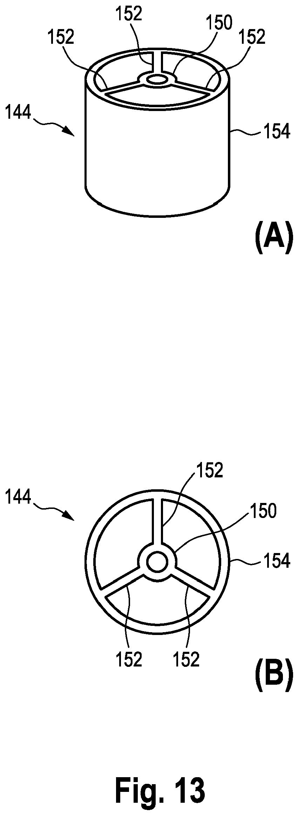

Das Rollenfahrwerk 20 weist des Weiteren eine Lagereinrichtung 144 auf. Die Antriebswelle 132 ist in bzw. an dem Schaft mittels der Lagereinrichtung 144 drehbar gelagert. Insbesondere ist die Lagereinrichtung 144 derart ausgebildet, dass die Antriebswelle 132 in dem Schaft 140 zentriert gelagert ist. Zusätzlich ist die Lagereinrichtung derart ausgebildet, dass Luft zwischen dem ersten Gehäuseteil und dem zweiten Gehäuseteil strömen kann. Eine detaillierte Ausgestaltung der Lagereinrichtung 144 ist in der Figur 13 nachfolgend beschrieben.

Das Rollenfahrwerk 20 weist des Weiteren mindestens eine Klebematte 142 auf. Die Klebematte 142 ist an einer äußeren Oberfläche des Rollenfahrwerks 20 angeordnet, sodass ein Teil des entstehenden Abrieb bzw. des aufgewirbelten Staubs an der Klebematte 142 haften bleiben kann. In der vorliegenden Ausführungsform ist die Klebematte an dem Gehäuse des Rollenfahrwerks angeordnet. Insbesondere ist die Klebematte 142 an einer dem ersten Gehäuseteil 136 zugewandten Seite des zweiten Gehäuseteils 138 angeordnet.

Die Filtereinrichtung 58 weist einen Lüfter 146 und ein Filterelement 148 zum Filtern der Luft auf. Der Lüfter 146 ist dazu ausgebildet die Luft durch die erste Öffnung 64 des Gehäuses 62 anzusaugen und die Luft aus der zweiten Öffnung 66. Gehäuses 62 hinaus zu blasen. Das Filterelement 148 ist dazu ausgebildet, die Luft vor dem Hinausblasen zu filtern. Das Filterelement 148 ist vorzugsweise an dem Lüfter 146 angeordnet. Insbesondere ist der Lüfter 146 zwischen dem Filterelement 148 und der zweiten Öffnung 66 angeordnet.

Im Betrieb der Filtereinrichtung 58 strömt die Luft des Luftstroms 60 durch die erste Öffnung 64 des Gehäuses 62 in den ersten Gehäuseteil 136. Die Luft strömt weiter von der ersten Öffnung 64 zu dem Schaft 140. Dabei umströmt die Luft den Bereich im Inneren des ersten Gehäuseteils 136, in dem die Rollen 21 angeordnet sind. Die Luft strömt weiter durch den Schaft 140 von dem ersten Gehäuseteil 136 zu dem zweiten Gehäuseteil 138. Die Luft strömt weiter von dem Schaft 140 zu der Filtereinrichtung 58 und wird anschließend in dem Filterelement gefiltert. Anschließend wird die Luft durch den Lüfter 146 aus der zweiten Öffnung 66 aus dem zweiten Gehäuseteil mit 138 hinaus geblasen.

Fig. 13 zeigt eine Ausführungsform der Lagereinrichtung 144 des Tragesystems aus Fig. 12. Die Lagereinrichtung 144 weist einen Lagerring 150, Stege 152 und eine Hülse 154 auf. Der Lagerring 150 ist in der Hülse angeordnet. Die Stege erstrecken sich von einer Innenwand der Hülse 154 bis zu dem Lagerring 150. Die Stege 152 verbinden somit den Lagerring 152 mit der Hülse 154. In anderen Worten tragen die Stege 152 den Lagerring 150.

Vorzugsweise sind drei Stege 152 vorgesehen, die jeweils um 120° versetzt um den Lagerring 150 herum angeordnet sind und sich jeweils radial von dem Lagerring 150 zu der Hülse 154 hin erstrecken.

Die Lagereinrichtung 144 kann entweder in dem Schaft 140 oder an einem oberen, dem ersten Gehäuseteil 136 zugewandten Ende des Schafts 140 angeordnet sein. Vorzugsweise kann vorgesehen sein, dass der Schaft 140 die Hülse 154 ausbildet, insbesondere wobei zumindest ein Teil der Wandung des Schafts 140 die Hülse 154 ausbildet.

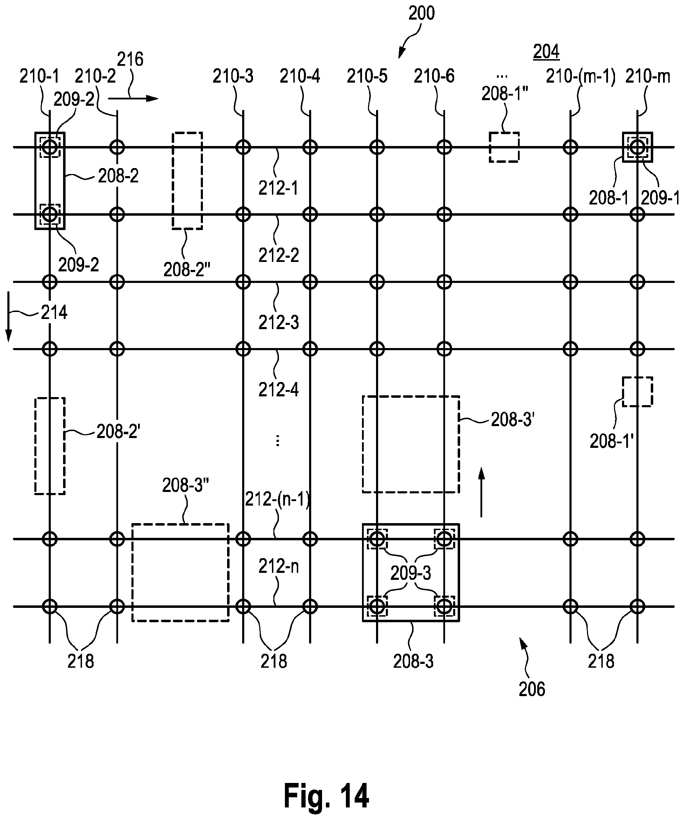

Fig. 14 zeigt eine dritte Ausführungsform eines Tragesystems 200 für einen medizinischen Behandlungsraum 12. Der medizinische Behandlungsraum 12 weist eine Decke 204 auf. Das Tragesystem 200 weist eine Schieneneinrichtung 206, zumindest eine oder mehrere Längsschienen 210 und zumindest eine oder mehrere Querschienen 212 auf. Die Längsschienen 210 und die Querschienen 212 sind an der Decke 204 befestigbar.

In der vorliegenden Ausführungsform der Fig. 14 weist die Schieneneinrichtung 206 eine Mehrzahl von m Längsschienen 210 (210-1, 210-2, ..., 210-m) und eine Mehrzahl von n Querschienen 212 (212-1, 212-2, ..., 212-n) auf, die an der Decke 204 befestigt sind. Die Anzahlen m und n der jeweiligen Schienen können entsprechend der Größe und den Anforderungen an Flexibilität des Behandlungsraums 12 geeignet gewählt werden.

Die Längsschienen 210 weisen in einer Längsbewegungsrichtung 214 eine Längserstreckung auf. Die Querschienen 212 weisen in einer Querbewegungsrichtung 216 eine Längserstreckung auf. Die Querbewegungsrichtung 216 und die Längsbewegungsrichtung 214 sind senkrecht zueinander angeordnet. Die Querschienen 212 sind jeweils parallel zueinander angeordnet. Die Längsschienen 210 sind jeweils parallel zueinander angeordnet.

Das Tragesystem 200 weist des Weiteren zumindest ein Schienenfahrzeug 208 zum Tragen eines medizinischen Geräts auf. Das Schienenfahrzeug 208 weist ein oder mehrere Rollenfahrwerke 209 auf. Die Rollenfahrwerke 209 sind entlang jeder Längsschiene 210 in der Längsbewegungsrichtung 214 und entlang jeder Querschiene 212 in der Querbewegungsrichtung 216 bewegbar. Dazu kann jedes Rollenfahrwerk 209 Rollen aufweisen, die auf entsprechenden Laufflächen der Längsschienen 210 bzw. Querschienen 212 bewegbar sind. Insbesondere können die Rollenfahrwerke 209 entsprechend dem Rollenfahrwerk 20 aus den Ausführungsformen der Figuren 1-13 ausgebildet sein.

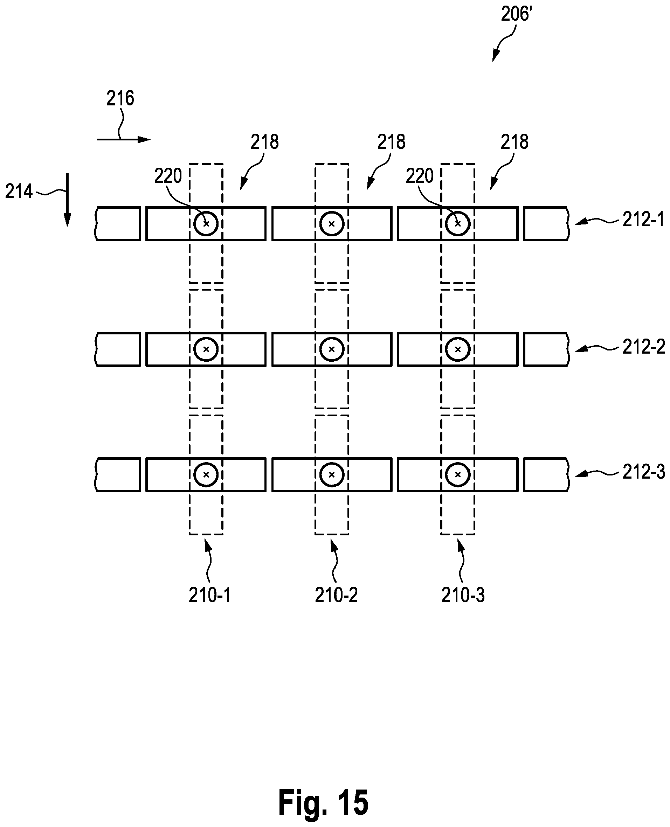

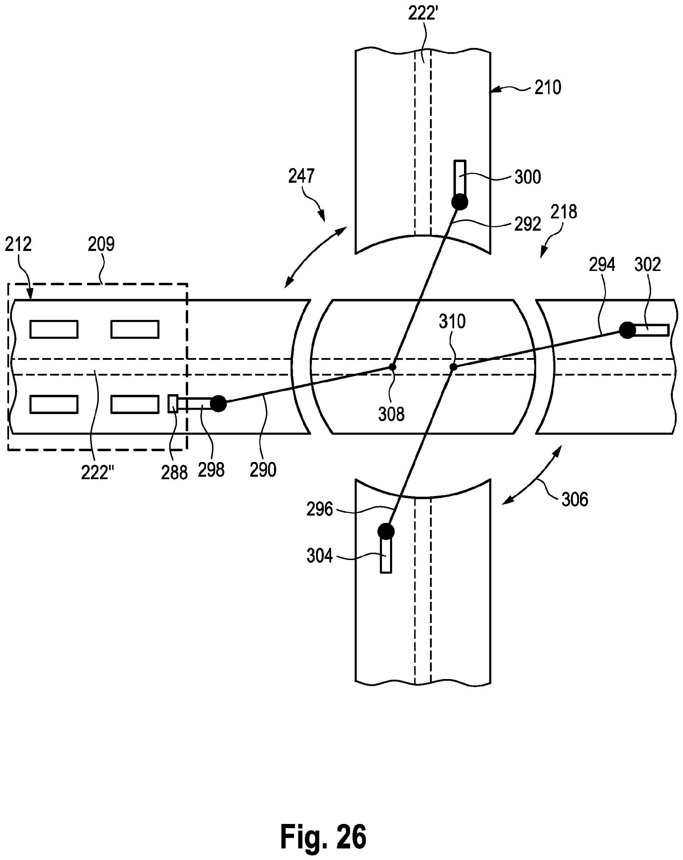

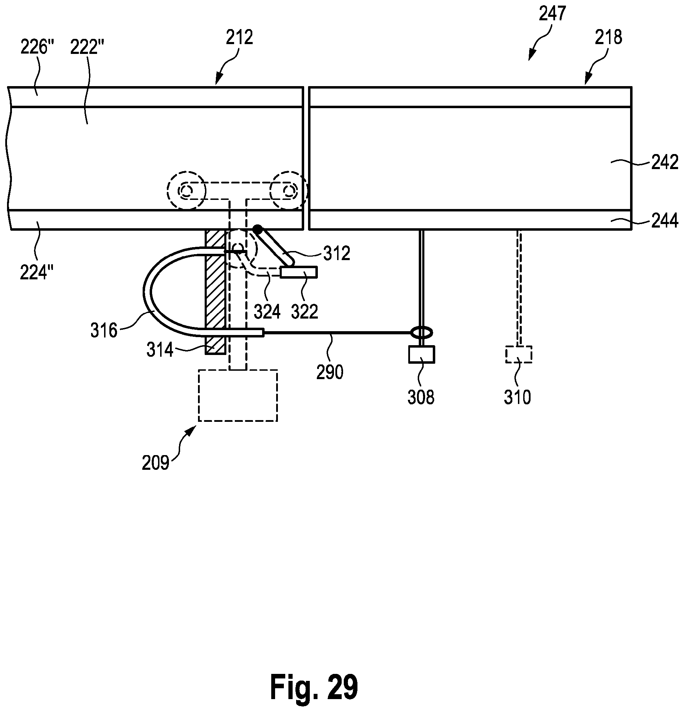

Die Schieneneinrichtung 206 weist an gemeinsamen Kreuzungspunkten der Längsschienen 210 und der Querschienen 212 jeweils eine Drehscheibe 218 auf. Die Rollenfahrwerke 209 sind zum Transfer zwischen einer Längsschienen und einer Querschiene auf einer entsprechenden Drehscheibe 218 anordenbar. Die Rollenfahrwerke 209 sind dazu ausgebildet, die Drehscheibe 218 um eine Drehachse 220 zu drehen. Die Drehachse 220 ist senkrecht zu der Querbewegungsrichtung 216 und senkrecht zu der Längsbewegungsrichtung 214 angeordnet. Verschiedene Ausführungsformen der Schieneneinrichtung 206 und der Rollenfahrwerke 209, die das Drehen der Drehscheibe 218 ermöglichen, sind in den nachfolgenden Figuren 15-35 erläutert.

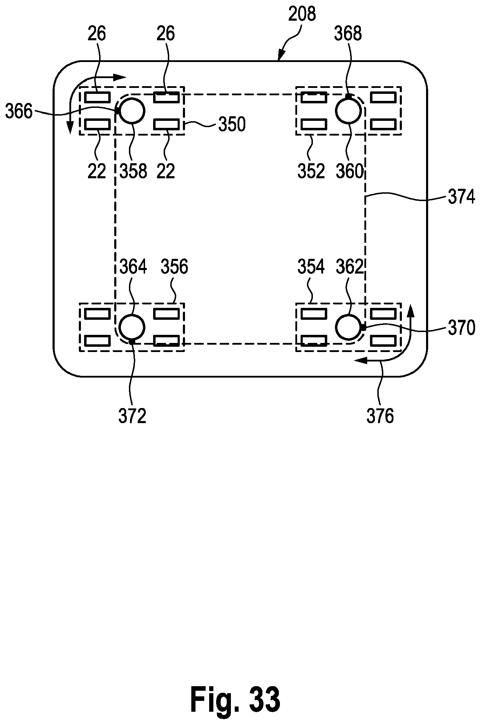

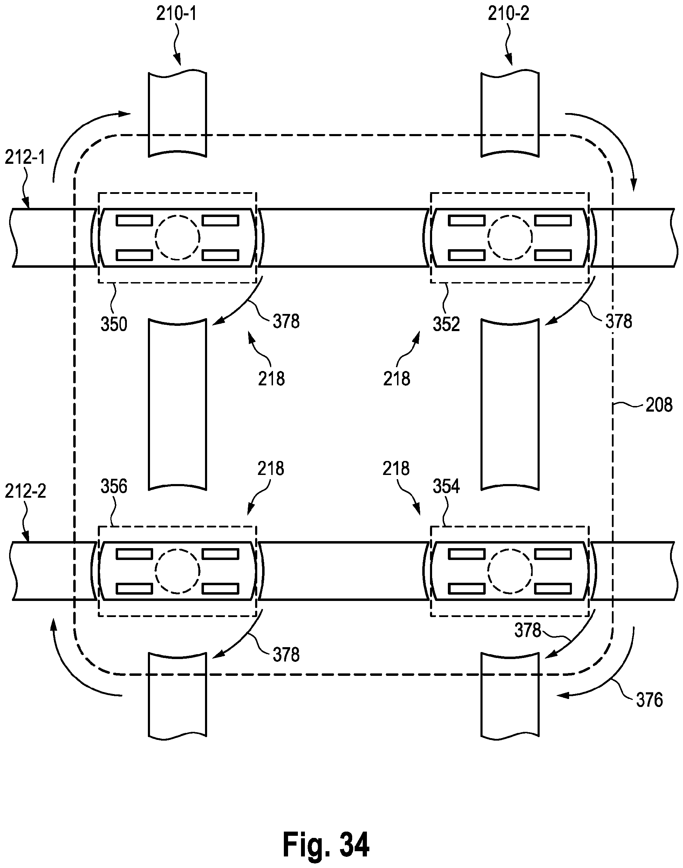

In der vorliegenden Ausführungsform der Figur 14 sind drei Schienenfahrzeuge 208-1, 208-2 und 208-3 dargestellt. Das erste Schienenfahrzeug 208-1 weist ein Rollenfahrwerk 209-1 auf. Das Rollenfahrwerk 209-1 ist an einem Kreuzungspunkt der ersten Querschiene 212-1 und der letzten Längsschiene 210-m auf einer Drehscheibe 218 angeordnet. Nach entsprechender Ausrichtung der Drehscheibe 218 ist das erste Schienenfahrzeug 208-1 entweder entlang der ersten Querschiene 212-1 (siehe gestrichelte Darstellung des ersten Schienenfahrzeugs 208-1") oder entlang der letzten Längsschiene 210-m (siehe gestrichelte Darstellung des ersten Schienenfahrzeugs 208-1') bewegbar. Bei einer Ausgestaltung eines Schienenfahrzeugs mit mehr als einem Rollenfahrwerk kann das Schienenfahrzeug ohne zusätzliche Abstützung ein Drehmoment auf eine Drehscheibe übertragen, wenn die Rollenfahrwerke auf den Drehscheiben zum Richtungswechsel angeordnet sind. Dies wird exemplarisch in den Figuren 33 und 34 beschrieben. Das Schienenfahrzeug 208-1 mit nur einem Rollenfahrwerk 209-1 kann nicht ohne Weiteres ein Drehmoment auf die Drehscheibe übertragen, da kein Gegenpartner zur Aufnahme des Drehmoments besteht. Das Rollenfahrwerk könnte daher z.B. mit einem ausfahrbaren Vierkant-Drehdorn, der in eine Vierkant- Drehmuffe in der Drehscheibe eingeführt wird, die Drehscheibe über ein entsprechendes integriertes Getriebe rotieren. Das Rollenfahr-werk müsste hierzu an entsprechender Position auf der Drehscheibe stehen, damit Drehdorn und Drehmuffe sich gegenüberstehen und in Eingriff gebracht werden können. Vierkant ist als Polygon nur eine Möglichkeit beliebig vieler Querschnitte. Möglich wäre auch z.B. ein Halbrund-, ein Schlitz-, oder, besonders vorteilhaft, ein Torx-Querschnitt.

Das zweite Schienenfahrzeug 208-2 weist zwei Rollenfahrwerke 209-2 auf. Die Rollenfahrwerke 209-2 sind an den Kreuzungspunkten der ersten Längsschiene 210-1 mit den beiden benachbarten Querschienen 212-1 und 212-2 jeweils auf einer Drehscheibe 218 angeordnet. Nach entsprechender Ausrichtung der Drehscheiben 218 ist das zweite Schienenfahrzeug 208-2 entweder entlang der ersten Längsschiene 210-1 (siehe gestrichelte Darstellung des zweiten Schienenfahrzeugs 208-2") oder entlang der beiden Querschienen 212-1 und 212-2 (siehe gestrichelte Darstellung des zweiten Schienenfahrzeugs 208-2') bewegbar.

Das dritte Schienenfahrzeug 208-3 weist vier Rollenfahrwerke 209-3 auf. Die Rollenfahrwerke 209-3 sind in den Kreuzungspunkten der beiden Längsschienen 210-5 und 210-6 mit den beiden Querschienen 212-(n-1) und 212-n jeweils auf einer Drehscheibe angeordnet. Nach entsprechender Ausrichtung der Drehscheiben 218 ist das dritte Schienenfahrzeug 208-3 entweder entlang der beiden Längsschienen 210-5 und 210-6 (siehe gestrichelte Darstellung des dritten Schienenfahrzeugs 208-3") oder entlang der beiden Querschienen 212-(n -1) und 212-n (siehe gestrichelte Darstellung des dritten Schienenfahrzeugs 208-3') bewegbar.

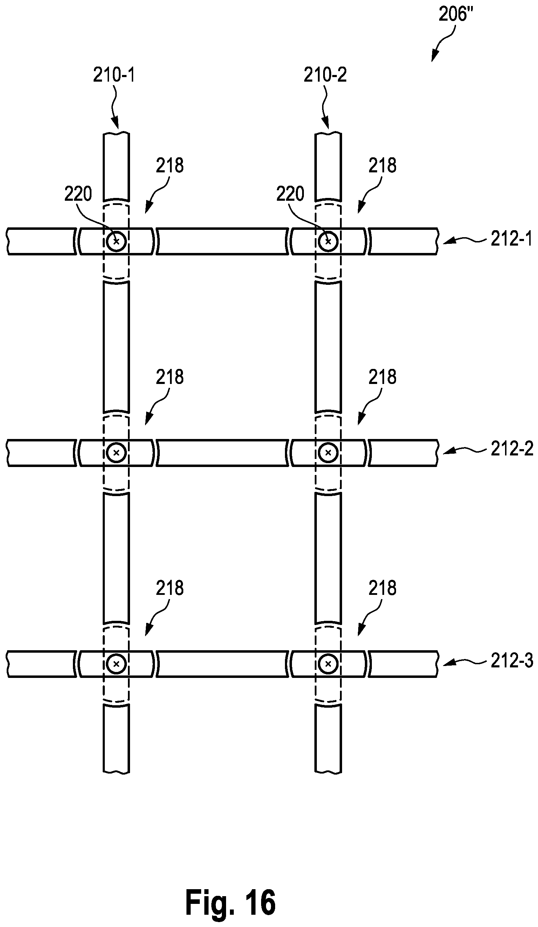

In den Fig. 15 und 16 sind zwei Ausführungsformen der Schieneneinrichtung 206 aus Fig. 14 dargestellt. In beiden Ausführungsformen der Schieneneinrichtung 206 sind eine Vielzahl von Drehscheiben 218 an Kreuzungspunkten der Längsschienen 210 (210-1, 210-2, 210-3) und der Querschienen 212 (212-1, 212-2, 212-3) angeordnet.

Die Drehscheiben 218 sind jeweils um eine Drehachse 220 drehbar gelagert. In einer ersten Drehposition bezüglich der Drehachse 220, der sogenannten Längsposition, sind die Drehscheiben 218 parallel zu der Längsbewegungsrichtung 214 ausgerichtet, sodass ein Rollenfahrwerk auf der Drehscheibe 218 in der Längsbewegungsrichtung 214 bewegbar ist. In anderen Worten ist eine Drehscheibe 218 in der Längsposition mit einer angrenzenden Längsschiene 210 fluchtend angeordnet. In einer zweiten Drehposition bezüglich der Drehachse 220, der sogenannten Querposition, sind die Drehscheiben 218 parallel zu der Querbewegungsrichtung 216 ausgerichtet, sodass ein Rollenfahrwerk auf der Drehscheibe 218 in der Querbewegungsrichtung 216 bewegbar ist. In anderen Worten ist eine Drehscheibe 218 in der Querposition mit einer angrenzenden Querschiene 212 fluchtend bzw. kollinear angeordnet.

Vorzugsweise ist jedes Rollenfahrwerk 209 dazu ausgebildet, eine Drehscheibe 218 um die Drehachse 220 zu drehen, wenn das Rollenfahrwerk 209 auf der Drehscheibe 218 angeordnet ist. Des Weiteren ist jedes Rollenfahrwerk 209 vorzugsweise dazu ausgebildet, eine Drehscheibe 218 um die Drehachse 220 zu drehen, wenn das Rollenfahrwerk 209 auf einer angrenzenden Längsschiene 210 oder einer angrenzenden Querschiene 212 angeordnet ist.

In der in Fig. 15 dargestellten Ausführungsform der Schieneneinrichtung 206' sind die Drehscheiben 218 derart angeordnet, dass diese direkt aneinander angrenzen, ohne dass ein Teilabschnitt einer Längsschiene 210 bzw. einer Querschiene 212 zwischen zwei benachbarten Drehscheiben 218 angeordnet ist. Dadurch werden die Längsschienen 210 und die Querschienen 212 durch die Drehscheiben 218 in der entsprechenden Ausrichtung ausgebildet. In anderen Worten bilden die Drehscheiben 218 die Längsschienen 210 aus, wenn die Drehscheiben 218 in der Längsposition angeordnet sind, und die Querschienen 212 aus, wenn die Drehscheiben 218 in der Querposition angeordnet sind.

In der in Fig. 16 dargestellten Ausführungsform der Schieneneinrichtung 206" sind die Drehscheiben 218 derart angeordnet, dass jeweils ein Teilabschnitt der Längsschiene 210 bzw. einer Querschiene 212 zwischen zwei benachbarten Drehscheiben 218 angeordnet ist.

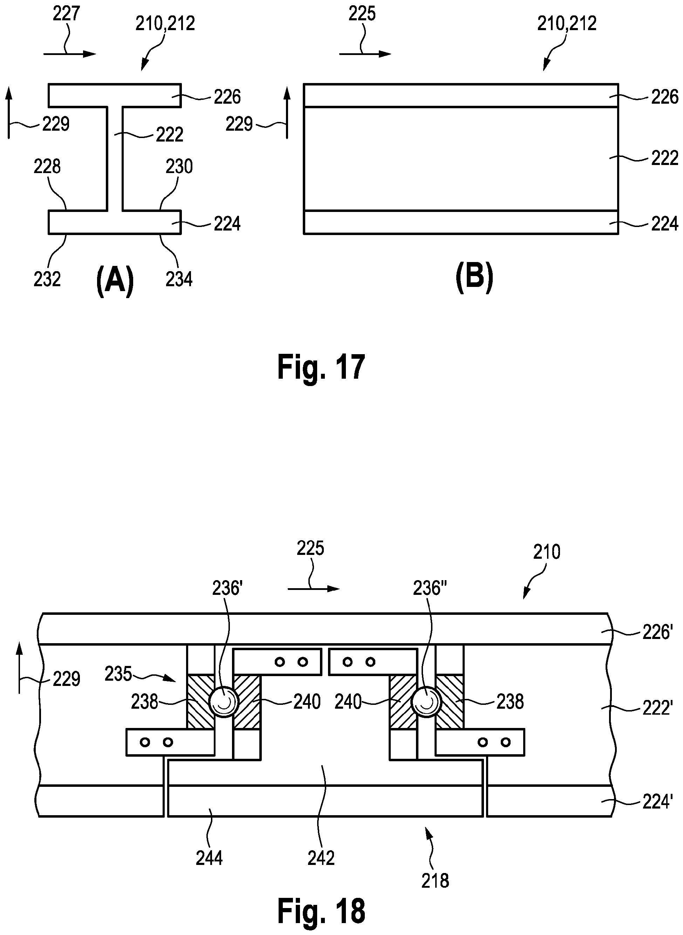

In Fig. 17 ist eine Ausführungsform einer Schiene 210, 212 in einer Querschnittansicht (Abbildung (A)) und einer Längsschnittansicht (Abbildung (B)) dargestellt. Sowohl die Längsschienen 210 als auch die Querschienen 212 können entsprechend der in Fig. 17 dargestellten Ausführungsform einer Schiene ausgebildet sein.

Die in Fig. 17 dargestellte Schiene 210, 212 weist, wie insbesondere in Abbildung (A) dargestellt, ein I-förmiges Querschnittsprofil auf. Ein I-förmiges Querschnittsprofil wird auch als Doppel-T-förmiges Querschnittsprofil bezeichnet. Die Schiene 210, 212 weist einen Steg 222, einen ersten Flansch 224 und einen zweiten Flansch 226 auf, die gemeinsam das I-förmige Querschnittsprofil ausbilden. Der erste Flansch 224, der zweite Flansch 226 und der Steg 222 erstrecken sich in einer Längsrichtung 225 der Schiene 210, 212. Die Längsrichtung 225 der Schiene entspricht der Längsbewegungsrichtung 214, wenn die Schiene eine Längsschiene 210 ist. Die Längsrichtung 225 der Schiene entspricht der Querbewegungsrichtung 216, wenn die Schiene eine Querschiene 212 ist.

Der erste und der zweite Flansch 224, 226 sind in einer Höhenrichtung 229 voneinander beabstandet, wobei sich der Steg 222 in der Höhenrichtung 229 von dem ersten Flansch 224 zu dem zweiten Flansch 226 erstreckt. Zudem erstrecken sich der erste Flansch 224 und der zweite Flansch 226 in einer Querrichtung 227. Die Höhenrichtung 229, die Längsrichtung 225 und die Querrichtung 227 sind jeweils paarweise senkrecht zueinander angeordnet.

Der erste Flansch 224 weist eine erste Lauffläche 228, eine zweite Lauffläche 230, eine dritte Lauffläche 232 und eine vierte Lauffläche 234 auf. Ein Rollenfahrwerk kann eine Mehrzahl von Rollen 21 aufweisen, die jeweils auf den unterschiedlichen Laufflächen 228, 230, 232 und 234 angeordnet sind.

Vorzugsweise sind die Schienen 210, 212 und somit auch die Längsschienen 210 und die Querschienen 212 entsprechend der Schiene 18 ausgebildet, die in den unterschiedlichen Ausführungsformen des Tragesystems der Figuren 1-13 beschrieben sind.

Die Figuren 18 bis 35 zeigen verschiedene Ausführungsformen der Schieneneinrichtung sowie des Rollenfahrwerks, die unterschiedliche Drehmechanismen zum Drehen der Drehscheibe zeigen.

Grundsätzlich ist dabei jede Drehscheibe 218 drehbar um eine Drehachse 220 gelagert. Dazu kann die Schieneneinrichtung 206 jeweils eine Lagerungseinrichtung 235 zum Lagern jeder Drehscheibe 218 aufweisen. In anderen Worten ist jede Drehscheibe 218 mittels der entsprechenden Lagerungseinrichtung 235 um die Drehachse 220 drehbar gelagert. Jede Lagerungseinrichtung 235 kann beispielsweise direkt an der Decke 204 montiert bzw. befestigt sein. Alternativ können die Längsschienen 210 bzw. die Querschienen 212 die Drehscheiben im Bereich der Kreuzungspunkte ausbilden, so dass jede Lagerungseinrichtung 235 auch in den entsprechenden Bereichen der Kreuzungspunkte jeweils an der entsprechenden Schiene angeordnet bzw. angebracht oder befestigt ist. Die Drehscheibe 218 ist dadurch relativ zu der Decke um die Drehachse 220 drehbar. Des Weiteren kann die Drehscheibe 218 als Schiene, insbesondere mit T-förmigen oder I-förmigen Querschnittsprofil, ausgebildet sein.

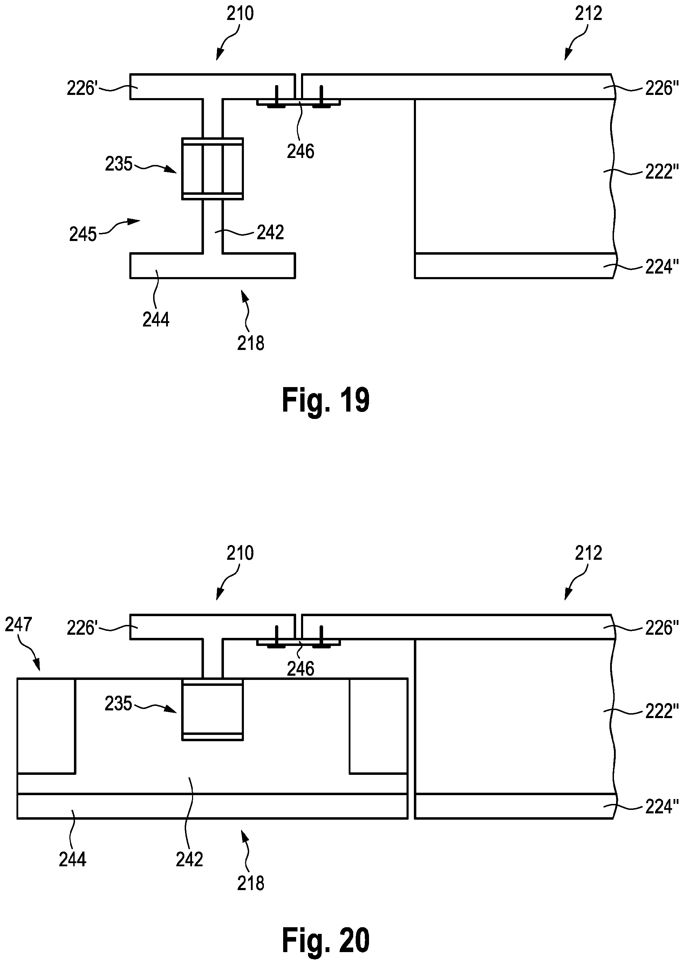

Die Figuren 18 bis 20 zeigen eine Ausführungsform einer Längsschiene 210, wobei die Längsschiene 210 in dem Bereich eines Kreuzungspunkts eine Drehscheibe 218 ausbildet. Figur 18 zeigt hierbei eine Längsschnittansicht der Längsschiene 210 in der Längsrichtung 225 im Bereich eines Kreuzungspunkt mit einer Querschiene 212. Die Figuren 19 und 20 zeigen jeweils eine Querschnittansicht der Längsschiene 210 in der Querrichtung 227 mit angrenzender Querschiene 212.

In dem Bereich des Kreuzungspunkts, in dem die Drehscheibe 218 angeordnet ist, ist in dem Steg 222' und in dem ersten Flansch 224' eine Aussparung angeordnet, in der die Drehscheibe 218 angeordnet ist. Der zweite Flansch 226 verläuft ohne Unterbrechung durch den Kreuzungspunkt hindurch. Die Aussparung erstreckt sich in der Längsrichtung 225 der Längsschiene 210.

In dem Bereich des Kreuzungspunkts, in dem die Drehscheibe 218 angeordnet ist, ist eine Lagerungseinrichtung 235 angeordnet. Die Lagerungseinrichtung 235 ist derart ausgebildet, dass die Drehachse 220 der Drehscheibe 218 sowohl senkrecht zu der Längsrichtung der Längsschiene 210 als auch senkrecht zu der Querrichtung der Längsschiene 210 angeordnet ist.

Die Lagerungseinrichtung 235 ist als Ring-Kugellager ausgebildet. Die Lagerungseinrichtung 235 weist dazu ein schienenseitiges Lagerungselement 238, ein drehscheibenseitiges Lagerungselement 240 und eine Mehrzahl von Lagerungskugeln 236 auf. Die Lagerungskugeln 236 sind zwischen dem schienenseitigen Lagerungselement 238 und dem drehscheibenseitigen Lagerungselement 240 angeordnet. Das drehscheibenseitige Lagerungselement 240 ist bezüglich der Drehachse 220 rotationssymmetrisch ausgebildet. Das schienenseitige Lagerungselement 238 kann bezüglich der Drehachse 220 rotationssymmetrisch ausgebildet sein. Das schienenseitige Lagerungselement 238 ist an der Längsschiene 210 angebracht. Das drehscheibenseitige Lagerungselement 240 ist an der Drehscheibe 218 angebracht.

Die Drehscheibe 218 ist als Schiene mit einem Flansch 244 und einem Steg 242 ausgebildet, sodass die Drehscheibe 218 ein T-förmiges Querschnittsprofil aufweist. Dadurch ist ein Rollenfahrwerk entlang der Schiene der Drehscheibe 218, insbesondere entlang von an dem Flansch 244 angeordneten Laufflächen, bewegbar. Alternativ kann die Drehscheibe 218 auch als Schiene mit einem ersten Flansch, einem zweiten Flansch und einem zwischen dem ersten und zweiten Flansch angeordneten Steg ausgebildet sein, sodass die Drehscheibe 218 ein I-förmiges Querschnittsprofil aufweist.

Vorzugsweise ist das schienenseitige Lagerungselement 238 an in der Längsrichtung 225 gegenüberliegenden Seiten der Aussparung an der Längsschiene 210, vorzugsweise an dem Steg 222', angeordnet. Das drehscheibenseitige Lagerungselement 240 ist vorzugsweise an in der Längsrichtung 225 gegenüberliegenden Seiten der Aussparung an der Drehscheibe 218, vorzugsweise an dem Steg 242, angeordnet.

Die Längsschiene 210 verläuft durch den Kreuzungspunkt mit der angrenzenden Querschiene 212 hindurch, wohingegen die Querschiene 212 in dem Kreuzungspunkt unterbrochen ist. Der zweite Flansch 226" der Querschiene 212 ist mit dem zweiten Flansch 226' der Längsschiene 210 in dem Kreuzungspunkt mittels eines Befestigungselements 246 verbunden.

Wie zuvor beschrieben, kann die Drehscheibe 218 mittels der Lagerungseinrichtung 235 um die Drehachse 220 gedreht werden. Dadurch kann die Drehscheibe 218 insbesondere in einer Längsposition 245 und in einer Querposition 247 angeordnet werden.

In der Längsposition 245 ist ein Rollenfahrwerk auf der Drehscheibe 218 in der Längsbewegungsrichtung 214 bewegbar. In anderen Worten ist die Drehscheibe 218 in der Längsposition 245 mit der Längsschiene 210 fluchtend bzw. kollinear angeordnet. Insbesondere ist der Flansch 244 der Drehscheibe 218 fluchtend bzw. kollinear mit dem Flansch 224' der Längsschiene 210 angeordnet.

In der Querposition 247 ist ein Rollenfahrwerk auf der Drehscheibe 218 in der Querbewegungsrichtung 216 bewegbar. In anderen Worten ist die Drehscheibe 218 in der Querposition 247 mit der Querschiene 212 fluchtend bzw. kollinear angeordnet. Insbesondere ist der Flansch 244 der Drehscheibe 218 fluchtend bzw. kollinear mit dem Flansch 224" der Querschiene 212 angeordnet.

In den Figuren 18 und 19 ist die Drehscheibe 218 in der Längsposition 245 angeordnet. In Figur 20 ist die Drehscheibe 218 in der Querposition 247 angeordnet.

In einer alternativen Ausführungsform kann auch eine Querschiene 212 die Drehscheibe 218 entsprechend der Ausführungsform der Figuren 18 bis 20 ausbilden.

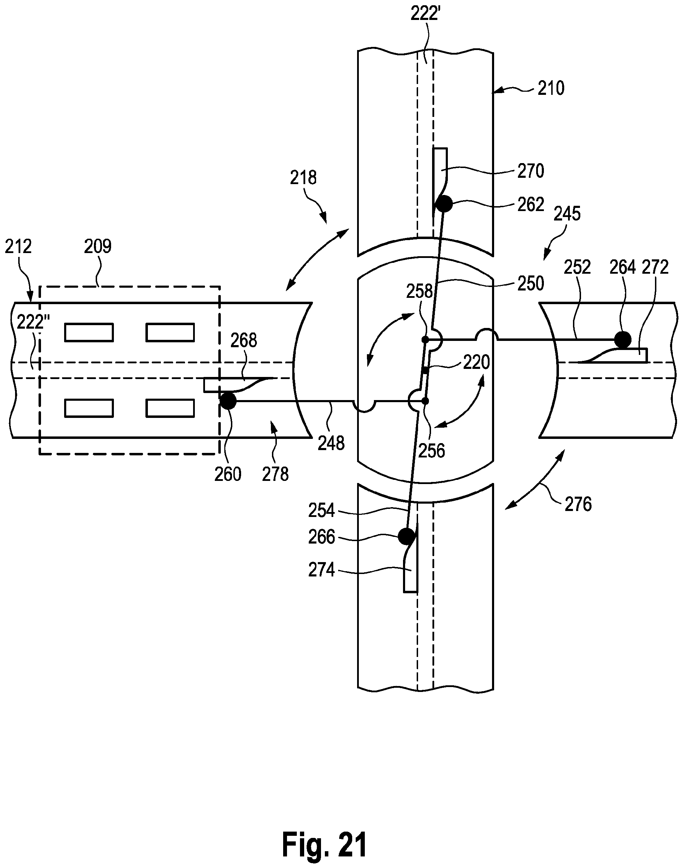

Die Figuren 21 bis 24 zeigen eine erste Ausführungsform eines Drehmechanismus zum Drehen der Drehscheibe 218, wenn ein Rollenfahrwerk 209 nicht auf der Drehscheibe 218 sondern auf einer angrenzenden Längsschiene 210 oder Querschiene 212 angeordnet ist. In der Ausführungsform der Figuren 21 bis 24 ist das Rollenfahrwerk 209 auf der Querschiene 212 angeordnet. In anderen Worten ist der Drehmechanismus der ersten Ausführungsform ein Fernwirkmechanismus zum Drehen der Drehscheibe 218.

Zum Drehen der Drehscheibe 218 sind an dem Kreuzungspunkt die Schubstangen 248, 250, 252, 254 exzentrisch bezüglich der Drehachse 220 angeordnet, sodass die Drehscheibe 218 durch eine Schubbewegung einer der Schubstangen 248, 250, 252, 254 um die Drehachse 220 in einer Drehrichtung 276 drehbar ist. Das Rollenfahrwerk 209 weist ein Betätigungselement 284 auf, mittels dem jede der Schubstangen betätigt werden kann. Das Betätigungselement 284 ist mittels eines Verbindungselements 286 an einem Grundkörper des Rollenfahrwerks 209 angeordnet. Das Betätigungselement 284 kann beispielsweise als Klinke ausgebildet sein.

Die Drehscheibe 218 weist für die Schubstangen 248, 250, 252, 254 eine erste Aufhängung 256 und eine zweite Aufhängung 258 auf. Die Aufhängungen 256, 258 sind exzentrisch bezüglich der Drehachse 220 angeordnet. Die erste Aufhängung 256 und die zweite Aufhängung 258 können als Schubdorn ausgebildet sein.

Auf einer ersten an die Drehscheibe 218 angrenzenden Seite der Querschiene 212 sind eine erste Schubstange 248 und eine erste Kulisse 268 angeordnet, wobei die erste Kulisse 268 an der Querschiene 212 angebracht bzw. befestigt ist. Ein der Drehscheibe 218 zugewandtes Ende der ersten Schubstange 248 ist mit der ersten Aufhängung 256 verbunden. Ein der Drehscheibe 218 abgewandtes Ende der ersten Schubstange 248 ist an der ersten Kulisse 268 angeordnet und weist vorzugsweise ein erstes Anschlagelement 260 auf. Das erste Anschlagelement 260 kann als Mitnehmerelement ausgebildet sein. Das der Drehscheibe 218 abgewandte Ende der ersten Schubstange 248 ist, vorzugsweise über das Anschlagelement 260, durch das Betätigungselement 284 betätigbar, so dass eine Schubbewegung in einer Schubrichtung 282 in Richtung der Drehscheibe 218 auf die erste Schubstange 248 übertragbar ist.

Auf einer ersten an die Drehscheibe 218 angrenzenden Seite der Längsschiene 210 sind eine zweite Schubstange 250 und eine zweite Kulisse 270 angeordnet, wobei die zweite Kulisse 270 an der Längsschiene 210 angebracht bzw. befestigt ist. Ein der Drehscheibe 218 zugewandtes Ende der zweiten Schubstange 250 ist mit der ersten Aufhängung 256 verbunden. Ein der Drehscheibe 218 abgewandtes Ende der zweiten Schubstange 250 ist an der zweiten Kulisse 270 angeordnet und weist vorzugsweise ein zweites Anschlagelement 262 auf. Das zweite Anschlagelement 262 kann als Mitnehmerelement ausgebildet sein. Das der Drehscheibe 218 abgewandte Ende der zweiten Schubstange 250 ist, vorzugsweise über das Anschlagelement 262, durch das Betätigungselement 284 betätigbar, so dass eine Schubbewegung in einer Schubrichtung 282 in Richtung der Drehscheibe 218 auf die zweite Schubstange 250 übertragbar ist.

Auf einer zweiten an die Drehscheibe 218 angrenzenden Seite der Querschiene 212 sind eine dritte Schubstange 252 und eine dritte Kulisse 272 angeordnet, wobei die dritte Kulisse 272 an der Querschiene 212 angebracht bzw. befestigt ist. Ein der Drehscheibe 218 zugewandtes Ende der dritten Schubstange 252 ist mit der zweiten Aufhängung 258 verbunden. Ein der Drehscheibe 218 abgewandtes Ende der dritten Schubstange 252 ist an der dritten Kulisse 272 angeordnet und weist vorzugsweise ein drittes Anschlagelement 264 auf. Das dritte Anschlagelement 264 kann als Mitnehmerelement ausgebildet sein. Das der Drehscheibe 218 abgewandte Ende der dritten Schubstange 252 ist, vorzugsweise über das Anschlagelement 264, durch das Betätigungselement 284 betätigbar, so dass eine Schubbewegung in einer Schubrichtung 282 in Richtung der Drehscheibe 218 auf die dritte Schubstange 252 übertragbar ist.

Auf einer zweiten an die Drehscheibe 218 angrenzenden Seite der Längsschiene 210 sind eine vierte Schubstange 254 und eine vierte Kulisse 274 angeordnet, wobei die vierte Kulisse 274 an der Längsschiene 210 angebracht bzw. befestigt ist. Ein der Drehscheibe 218 zugewandtes Ende der vierten Schubstange 254 ist mit der zweiten Aufhängung 258 verbunden. Ein der Drehscheibe 218 abgewandtes Ende der vierten Schubstange 254 ist an der vierten Kulisse 274 angeordnet und weist vorzugsweise ein viertes Anschlagelement 260 auf. Das vierte Anschlagelement 266 kann als Mitnehmerelement ausgebildet sein. Das der Drehscheibe 218 abgewandte Ende der vierten Schubstange 254 ist, vorzugsweise über das Anschlagelement 266, durch das Betätigungselement 284 betätigbar, so dass eine Schubbewegung in einer Schubrichtung 282 in Richtung der Drehscheibe 218 auf die vierte Schubstange 254 übertragbar ist.

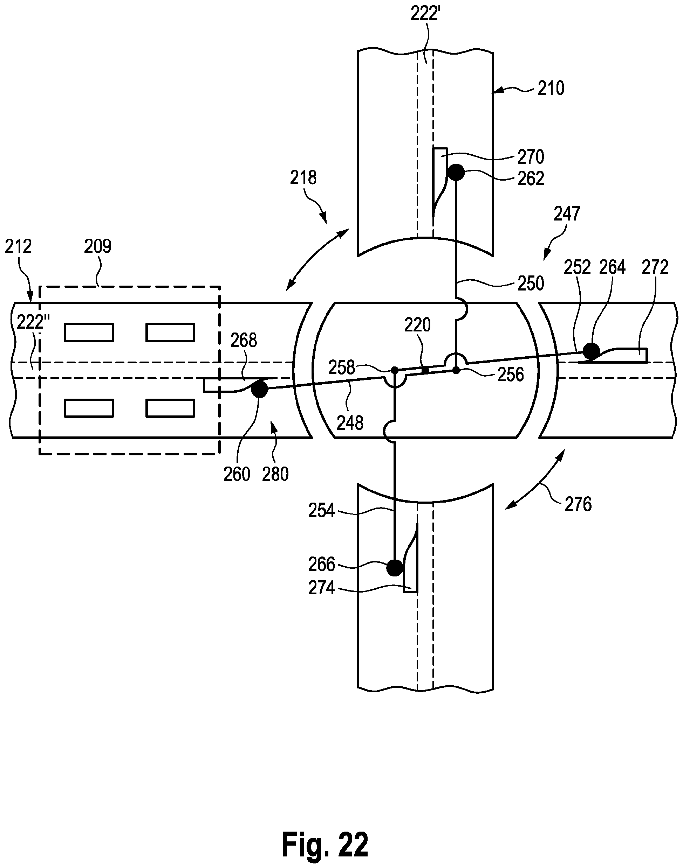

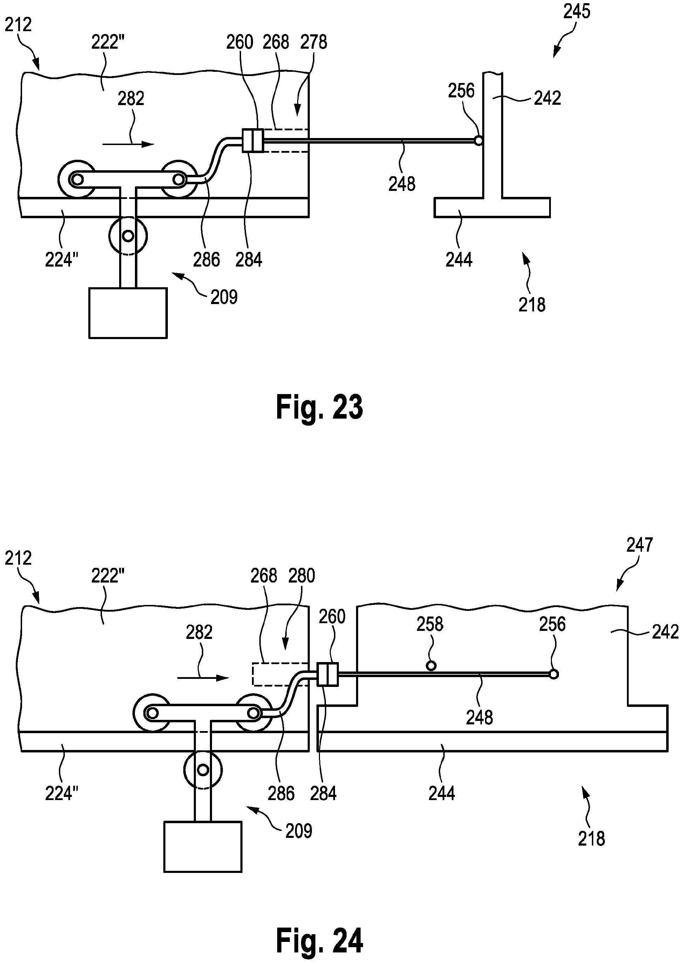

Jede Kulisse 268, 270, 272, 274 ist derart ausgebildet, dass das der Drehscheibe 218 abgewandte Ende der entsprechenden Schubstange 248, 250, 252, 254 entlang der Kulisse zwischen einer ersten Position 278, in der das der Drehscheibe 218 abgewandte Ende der entsprechenden Schubstange 248, 250, 252, 254 durch das Rollenfahrwerk 209 betätigbar ist, und einer zweiten Position 280, in der das der Drehscheibe 218 abgewandte Ende der entsprechenden Schubstange 248, 250, 252, 254 nicht durch das Rollenfahrwerk 209 betätigbar ist, bewegbar ist. Wenn die erste Schubstange 248 und die dritte Schubstange 252 in der ersten Position 278 angeordnet sind und die zweite Schubstange 250 und die vierte Schubstange 254 in der zweiten Position 280 angeordnet sind, ist die Drehscheibe 218 in der Längsposition 245 angeordnet, wie beispielsweise in den Figuren 21 und 23 dargestellt. Wenn die erste Schubstange 248 und die dritte Schubstange 252 in der zweiten Position 280 und die zweite Schubstange 250 und die vierte Schubstange 254 in der ersten Position 278 angeordnet sind, ist die Drehscheibe 218 in der Querposition 247 angeordnet, wie beispielsweise in den Figuren 22 und 24 dargestellt. Das der Drehscheibe 218 abgewandte Ende der Schubstangen 248, 250, 252, 254 ist in der zweiten Position 280 jeweils näher an der Drehscheibe 218 angeordnet als in der ersten Position 278. Jede Kulisse 268, 270, 272, 274 bilden somit zusammen mit der entsprechenden Schubstange 248, 250, 252, 254 eine mechanische Schaltstelle aus, die zum Drehen der Drehscheibe 218 betätigt werden kann.

In anderen Worten ist das Rollenfahrwerk 209 dazu ausgebildet, mittels des Betätigungselements 284 eine der Schubstangen 248, 250, 252, 254 in der Schubrichtung 282 von der ersten Position 278 in die zweite Position 280 zu bewegen bzw. zu schieben, um dadurch die Drehscheibe 218 derart zu drehen, dass die Drehscheibe 218 kollinear mit der entsprechenden Schiene angeordnet ist, auf der das Rollenfahrwerk angeordnet ist.

Ist das Rollenfahrwerk 209 beispielsweise auf der ersten Seite der Querschiene 212 angeordnet, kann das Rollenfahrwerk 209 durch Betätigen der ersten Schubstange 248 die Drehscheibe 218 von der Längsposition 245 in die Querposition 247 drehen. Ist das Rollenfahrwerk 209 beispielsweise auf der ersten Seite der Längsschiene 210 angeordnet, kann das Rollenfahrwerk 209 durch Betätigen der zweiten Schubstange 250 die Drehscheibe 218 von der Querposition 247 in die Längsposition 245 drehen. Ist das Rollenfahrwerk 209 beispielsweise auf der zweiten Seite der Querschiene 212 angeordnet, kann das Rollenfahrwerk 209 durch Betätigen der dritten Schubstange 252 die Drehscheibe 218 von der Längsposition 245 in die Querposition 247 drehen. Ist das Rollenfahrwerk 209 beispielsweise auf der zweiten Seite der Längsschiene 210 angeordnet, kann das Rollenfahrwerk 209 durch Betätigen der vierten Schubstange 254 die Drehscheibe 218 von der Querposition 247 in die Längsposition 245 drehen.

Des Weiteren kann das Betätigungselement 284 als gefederte Klinke ausgebildet sein, die senkrecht zu der Bewegungsrichtung bzw. Fahrrichtung des Rollenfahrwerks 209 gefedert ist. Das Betätigungselement 284 weist zudem auf der dem Rollenfahrwerk 209 zugewandten Seite eine Abschrägung auf. Wenn das Rollenlaufwerk 209 in entgegengesetzter Richtung, sprich von der Drehscheibe 218 weg, über die mechanische Schaltstelle, die aus einer Kulisse 268, 270, 272, 274 und entsprechender Schubstange 248, 250, 252, 254 gebildet wird, bewegt wird und gleichzeitig die entsprechende Schubstange 248, 250, 252, 254 in der ersten Position 278 angeordnet ist, kann das als gefederte Klinke ausgebildete Betätigungselement 284 wegen seiner Federung und Abschrägung senkrecht zur Bewegungsrichtung gefedert ausweichen. Dadurch ist ein unbehindertes Fahren des Rollenlaufwerks auch in der Gegenrichtung möglich, ohne Wirkung auf die Drehscheibe 218.

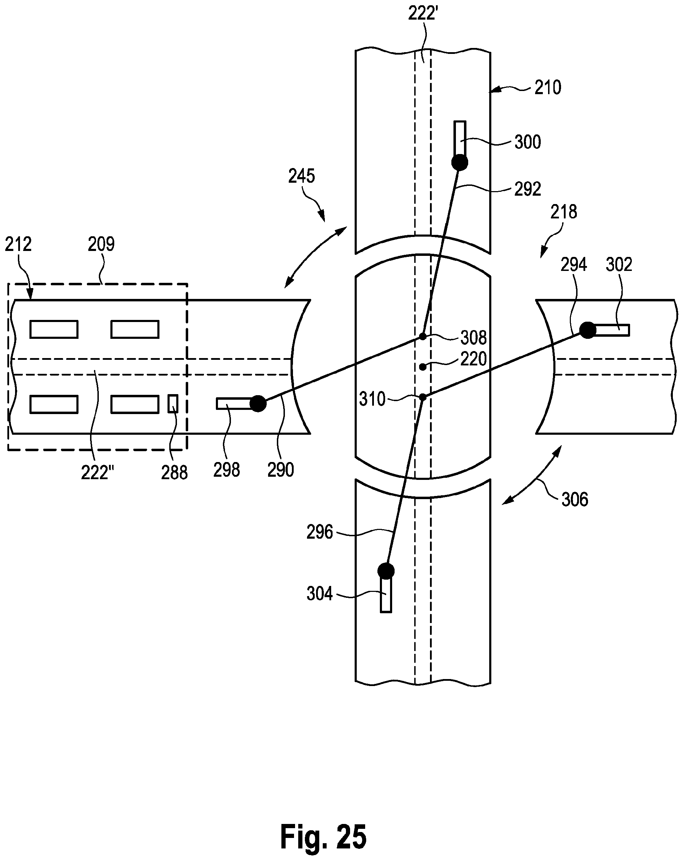

Die Figuren 25 bis 29 zeigen eine zweite Ausführungsform eines Drehmechanismus zum Drehen der Drehscheibe 218, wenn ein Rollenfahrwerk 209 nicht auf der Drehscheibe 218 sondern auf einer angrenzenden Längsschiene 210 oder Querschiene 212 angeordnet ist. In der Ausführungsform der Figuren 25 bis 29 ist das Rollenfahrwerk 209 auf der Querschiene 212 angeordnet. In anderen Worten ist der Drehmechanismus der zweiten Ausführungsform ein Fernwirkmechanismus zum Drehen der Drehscheibe 218.

Zum Drehen der Drehscheibe 218 sind an dem Kreuzungspunkt Seilzüge 290, 292, 294, 296 exzentrisch bezüglich der Drehachse 220 angeordnet, sodass die Drehscheibe 218 durch eine Zugbewegung eines Seilzugs 290, 292, 294, 296 um die Drehachse 220 in einer Drehrichtung 306 drehbar ist. Das Rollenfahrwerk 209 weist ein Betätigungselement 288 auf, mittels dem jeder der Seilzüge 290, 292, 294, 296 betätigt werden kann.

Die Drehscheibe 218 weist eine erste Aufhängung 308 und eine zweite Aufhängung 310 für die Seilzüge 290, 292, 294, 296 auf. Die Aufhängungen 308, 310 sind exzentrisch bezüglich der Drehachse 220 angeordnet. Die Aufhängungen 308, 310 können beispielsweise jeweils als Zugdorn ausgebildet sein.

Auf einer ersten an die Drehscheibe 218 angrenzenden Seite der Querschiene 212 sind ein erster Seilzug 290 und eine erste Zugeinrichtung 298 angeordnet, wobei die erste Zugeinrichtung 298 an der Querschiene 212 angebracht bzw. befestigt ist. Ein der Drehscheibe 218 zugewandtes Ende des ersten Seilzugs 290 ist mit der ersten Aufhängung 308 verbunden. Ein der Drehscheibe 218 abgewandtes Ende des ersten Seilzugs 290 ist an der ersten Zugeinrichtung 298 angeordnet. Das der Drehscheibe 218 abgewandte Ende des ersten Seilzugs 290 ist durch das Betätigungselement 288 über die erste Seilzugeinrichtung 298 derart betätigbar, dass der erste Seilzug 290 in einer Zugrichtung 320 gezogen wird, so dass das der Drehscheibe 218 zugewandte Ende des ersten Seilzugs 290 von der Drehscheibe 218 weggezogen wird.

Auf einer ersten an die Drehscheibe 218 angrenzenden Seite der Längsschiene 210 sind ein zweiter Seilzug 292 und eine zweite Zugeinrichtung 300 angeordnet, wobei die zweite Zugeinrichtung 300 an der Längsschiene 210 angebracht bzw. befestigt ist. Ein der Drehscheibe 218 zugewandtes Ende des zweiten Seilzugs 292 ist mit der ersten Aufhängung 308 verbunden. Ein der Drehscheibe 218 abgewandtes Ende des zweiten Seilzugs 292 ist an der zweiten Zugeinrichtung 300 angeordnet. Das der Drehscheibe 218 abgewandte Ende des zweiten Seilzugs 292 ist durch das Betätigungselement 288 über die zweite Seilzugeinrichtung 300 derart betätigbar, dass der zweite Seilzug 292 in einer Zugrichtung 320 gezogen wird, so dass das der Drehscheibe 218 zugewandte Ende des zweiten Seilzugs 292 von der Drehscheibe 218 weggezogen wird.

Auf einer zweiten an die Drehscheibe 218 angrenzenden Seite der Querschiene 212 sind ein dritter Seilzug 294 und eine dritte Zugeinrichtung 302 angeordnet, wobei die dritte Zugeinrichtung 302 an der Querschiene 212 angebracht bzw. befestigt ist. Ein der Drehscheibe 218 zugewandtes Ende des dritten Seilzugs 294 ist mit der zweiten Aufhängung 310 verbunden. Ein der Drehscheibe 218 abgewandtes Ende des dritten Seilzugs 294 ist an der dritten Zugeinrichtung 302 angeordnet. Das der Drehscheibe 218 abgewandte Ende des dritten Seilzugs 294 ist durch das Betätigungselement 288 über die dritte Seilzugeinrichtung 302 derart betätigbar, dass der dritte Seilzug 294 in einer Zugrichtung 320 gezogen wird, so dass das der Drehscheibe 218 zugewandte Ende des dritten Seilzugs 294 von der Drehscheibe 218 weggezogen wird.

Auf einer zweiten an die Drehscheibe 218 angrenzenden Seite der Längsschiene 210 sind ein vierter Seilzug 296 und eine vierte Zugeinrichtung 304 angeordnet, wobei die vierte Zugeinrichtung 304 an der Längsschiene 210 angebracht bzw. befestigt ist. Ein der Drehscheibe 218 zugewandtes Ende des vierten Seilzugs 296 ist mit der zweiten Aufhängung 310 verbunden. Ein der Drehscheibe 218 abgewandtes Ende des vierten Seilzugs 296 ist an der vierten Zugeinrichtung 304 angeordnet. Das der Drehscheibe 218 abgewandte Ende des vierten Seilzugs 296 ist durch das Betätigungselement 288 über die vierte Seilzugeinrichtung 304 derart betätigbar, dass der vierte Seilzug 296 in einer Zugrichtung 320 gezogen wird, so dass das der Drehscheibe 218 zugewandte Ende des vierten Seilzugs 296 von der Drehscheibe 218 weggezogen wird.

Durch die exzentrisch angreifende Zugbewegung jedes Seilzugs, die in der von der Drehscheibe weg gerichteten Zugrichtung 320 wirkt, kann die Drehscheibe 218 in der Drehrichtung 306 gedreht werden. Dabei sind die Zugeinrichtungen 298, 300, 302, 304 und das Rollenfahrwerk 209 derart ausgebildet, dass bei vollständiger Betätigung eines Seilzugs 290, 292, 294, 296 durch das Rollenfahrwerk 209, die Drehscheibe kollinear mit der entsprechenden Schiene angeordnet ist, auf der das Rollenfahrwerk angeordnet ist.

Ist das Rollenfahrwerk 209 beispielsweise auf der ersten Seite der Querschiene 212 angeordnet, kann das Rollenfahrwerk 209 durch Betätigen des ersten Seilzugs 290 die Drehscheibe 218 von der Längsposition 245 in die Querposition 247 drehen. Ist das Rollenfahrwerk 209 beispielsweise auf der ersten Seite der Längsschiene 210 angeordnet, kann das Rollenfahrwerk 209 durch Betätigen des zweiten Seilzugs 292 die Drehscheibe 218 von der Querposition 247 in die Längsposition 245 drehen. Ist das Rollenfahrwerk 209 beispielsweise auf der zweiten Seite der Querschiene 212 angeordnet, kann das Rollenfahrwerk 209 durch Betätigen des dritten Seilzugs 294 die Drehscheibe 218 von der Längsposition 245 in die Querposition 247 drehen. Ist das Rollenfahrwerk 209 beispielsweise auf der zweiten Seite der Längsschiene 210 angeordnet, kann das Rollenfahrwerk 209 durch Betätigen des vierten Seilzugs 296 die Drehscheibe 218 von der Querposition 247 in die Längsposition 245 drehen.

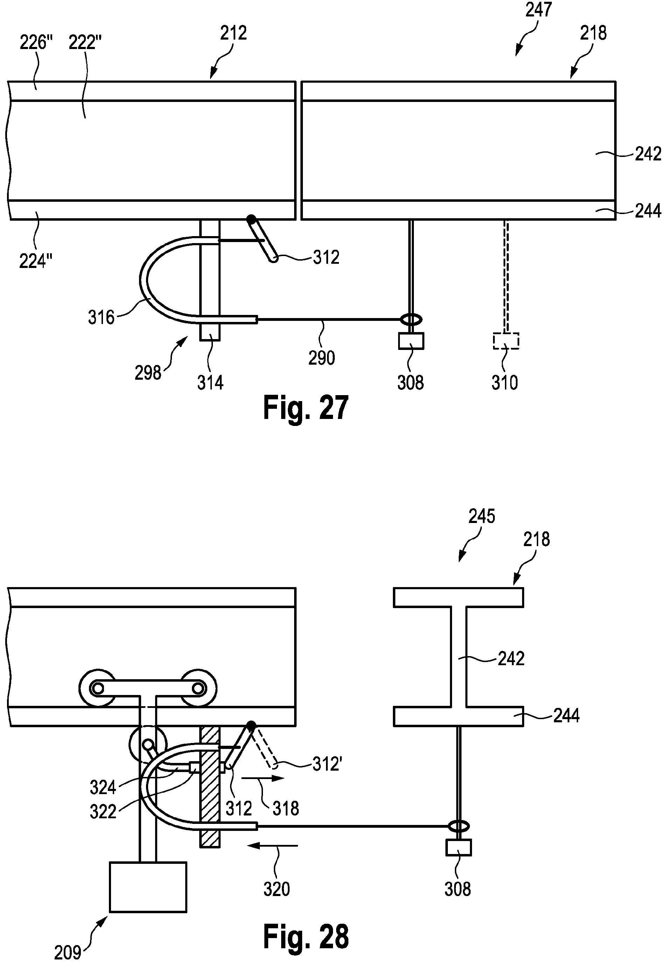

Vorzugsweise ist das Betätigungselement 388 als Klinke 322 ausgebildet, die mittels eines Verbindungselements 324 an einem Grundkörper des Rollenfahrwerks 209 angeordnet. Jede Zugeinrichtung 298, 300, 302, 304 weist einen Hebel 312 auf, der an der entsprechenden Schiene 210, 212 schenkbar angeordnet bzw. gelagert ist, wie in den Figuren 27 bis 29 dargestellt. Vorzugsweise ist der Hebel 312 an einer Unterseite des Flanschs 224" der Querschiene 212 bzw. des Flanschs 224' der Längsschiene 210 schenkbar gelagert.

Die Klinke 322 ist dazu ausgebildet, den Hebel 312 in einer Schubrichtung 318 von einer ersten Stellung in eine zweite Stellung zu bewegen. Die erste Stellung des Hebels 312 ist in Fig. 28 in durchgezogenen Linien dargestellt. Die zweite Stellung des Hebels 312 ist in Fig. 28 in gestrichelten Linien dargestellt und mit dem Bezugszeichen 312' gekennzeichnet. Die Schubrichtung 318 ist in Richtung der Drehscheibe 218 gerichtet. Das der Drehscheibe 218 abgewandte Ende jedes Seilzugs 290, 292, 294, 296 ist an dem Hebel befestigt bzw. angebracht. In der zweiten Stellung ist der Hebel 312 so weit verschwenkt, dass die Klinke 322 über das Ende des Hebels 312 hinweggleiten kann, ohne den Hebel 312 weiter zu betätigen, wenn das Rollenfahrwerk 209 auf die Drehscheibe 218 bzw. weiter in Richtung der Drehscheibe 218 bewegt wird.

Jede Zugeinrichtung 298, 300, 302, 304 weist des Weiteren einen Umlenkabschnitt 316 auf. In dem jeweiligen Umlenkabschnitt 316 wird der entsprechende Seilzug 290, 292, 294, 296 umgelenkt, so dass der Seilzug nach dem Umlenkabschnitt in die entgegengesetzte Richtung verläuft. Insbesondere wird jeder Seilzug in dem jeweiligen Umlenkabschnitt 316 im Wesentlichen um 180° umgelenkt. Jede Zugeinrichtung 298, 300, 302, 304 weist des Weiteren eine Halterung 314 auf, die den Seilzug vor und nach dem Umlenkabschnitt hält bzw. führt. Vorzugsweise weist die Halterung 314 zwei Bohrungen auf, durch die der entsprechende Seilzug 290, 292, 294, 296 vor und nach dem Umlenkabschnitt 316 durchgeführt wird.

Durch die Bewegung des Hebels 312 in einer Schubrichtung 318 von einer ersten Stellung in eine zweite Stellung wird der Seilzug über den Umlenkabschnitt derart gezogen, dass der das an der Aufhängung 308 angebrachte Ende des Seilzugs in einer von der Drehscheibe 218 weg gerichteten bzw. auf die entsprechende Schiene hin gerichtete Zugrichtung 320 gezogen wird. Damit kann durch ein Betätigen des Hebels 312 durch ein Rollenfahrwerk 209 die Drehscheibe 218 gedreht und ausgerichtet werden.

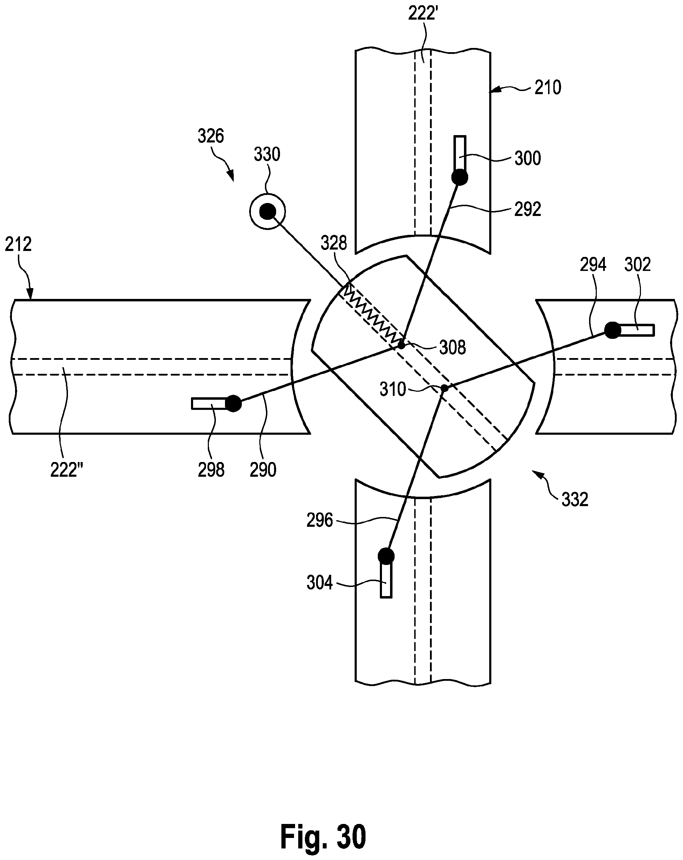

Fig. 30 zeigt eine dritte Ausführungsform eines Drehmechanismus zum Drehen der Drehscheibe 218, wenn ein Rollenfahrwerk 209 nicht auf der Drehscheibe 218 sondern auf einer angrenzenden Längsschiene 210 oder Querschiene 212 angeordnet ist. Die dritte Ausführungsform des Drehmechanismus entspricht im Wesentlichen der zweiten Ausführungsform eines Drehmechanismus, die in den Figuren 25 bis 29 dargestellt ist. Dieselben Elemente sind mit denselben Bezugszeichen gekennzeichnet und werden nicht näher erläutert.

Zusätzlich weist die Schieneneinrichtung 206 aus Fig. 30 eine Federeinrichtung 326 auf. Die Federeinrichtung 326 ist dazu ausgebildet, die Drehscheibe 218 in einer Zwischenposition 332 zwischen der Längsposition 245 und der Querposition 247 vorzuspannen.

Dazu weist die Federeinrichtung 326 ein Federelement 328 und eine Federaufhängung 330 auf. Die Federaufhängung 330 ist zwischen der Längsschiene 210 und der Querschiene 212 angeordnet. Die Federaufhängung 330 kann an der Decke 204 angebracht sein. Das Federelement 328 ist zwischen der Federaufhängung 330 und der ersten Aufhängung 308 der Drehscheibe 218 angeordnet. Insbesondere ist das Federelement 328 ist mit der Federaufhängung 330 und der ersten Aufhängung 308 der Drehscheibe 218 verbunden. Das Federelement ist in der Zwischenposition 332 in einem Vorgespannten Zustand oder in einem Ruhezustand, so dass bei einer Auslenkung der Drehscheibe 218 aus der Zwischenposition 332 eine zur Zwischenposition 332 gerichtete Rückstellkraft durch das Federelement 328 erzeugt wird. Die Zwischenposition ist als 45°-Ruheposition ausgebildet, in der die Drehscheibe 218 gegenüber der Längsposition 245 und der Querposition 247 jeweils um 45° gedreht ist.

Bewegt sich das Rollenlaufwerk 209 auf der Längsschiene 210 bzw. der Querschiene 212 in Richtung der Drehscheibe 218, kommt ein abstehendes Ende des in Ruheposition gefederten Hebels 312 mit der Klinke 322 in Kontakt. Wird das Rollenlaufwerk 209 weiter in Richtung der Drehscheibe 218 bewegt, so drückt die Klinke 322 den Hebel 312 in die zweite Stellung. Dabei zieht der Hebel 312 an einem ersten Ende des entsprechenden Seilzugs, dessen anderes Ende an der entsprechenden, als Zugdorn ausgebildeten Aufhängung 308, 310 der Drehscheibe angebracht ist. Dadurch zieht der Seilzug an dem Zugdorn, wodurch die Drehscheibe 218 in die entsprechende Drehposition, sprich entweder die Längsposition 245 oder die Querposition 247, gedreht wird, in der die Drehscheibe 218 kollinear mit der angrenzenden Schiene angeordnet ist, auf der das Rollenfahrwerk 209 angeordnet ist.

Die Klinke 322 hält den Hebel 312 so lange in der zweiten Stellung, bis die ersten Rollen des Rollenlaufwerks 209 auf der Drehscheibe 218 sind. Sind die ersten Rollen wieder auf der Drehscheibe 218, gibt die Klinke 322 den Hebel 312 wieder frei, so dass die Drehscheibe 218 mittels der Vorspannung der Federeinrichtung 326 wieder zurück in die Zwischenposition gedreht wird, sobald dass Rollenfahrwerk 209 die Drehscheibe wieder verlassen hat.

Fährt das Rollenlaufwerk 209 und somit die Klinke 322 in der entgegengesetzten Richtung, sprich von der Drehscheibe 218 weg, über eine der Zugeinrichtungen 298, 300, 302, 304, so wird der Hebel 312 in die entgegengesetzte Richtung geschwenkt, wobei der Seilzug weiter entspannt wird und keine Drehwirkung auf die Drehscheibe 218 übertragen wird.

Die Drehmechanismen der ersten bis dritten Ausführungsform sind passive Drehmechanismen. Nähert sich ein Rollenfahrwerk 209 der Drehscheibe 218 auf einer Schiene, wird der entsprechende Drehmechanismus durch die Betätigung des jeweiligen Betätigungselements ausgelöst. Die Betätigung erfolgt hierbei allein durch die Bewegung des Rollenfahrwerks 209 in Richtung der Drehscheibe 218, wobei das Rollenfahrwerk 209 entweder die Schubstange in die zweite Position 280 schiebt oder den Hebel 312 in die zweite Stellung drückt.

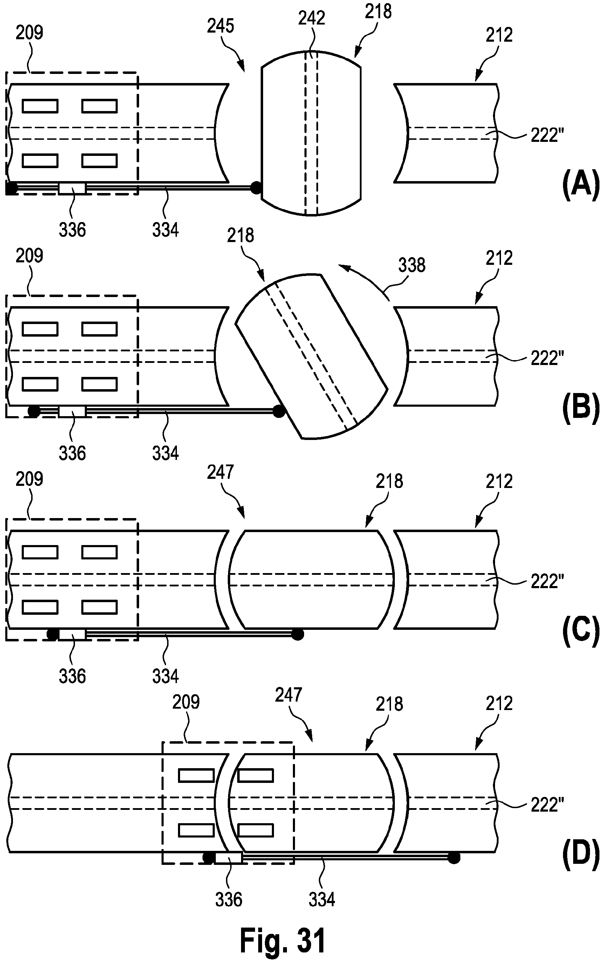

Fig. 31 zeigt eine vierte Ausführungsform eines Drehmechanismus zum Drehen der Drehscheibe 218, wenn ein Rollenfahrwerk 209 nicht auf der Drehscheibe 218 sondern auf einer angrenzenden Längsschiene 210 oder Querschiene 212 angeordnet ist.

Das Rollenfahrwerk 209 weist eine Steuersonde 334 und eine Antriebseinrichtung 336 zum Antreiben der Steuersonde 334 auf. Die Steuersonde 334 ist stabförmig ausgebildet. Wenn das Rollenfahrwerk 209 auf einer Schiene, beispielsweise auf einer Längsschiene 210 oder einer Querschiene 212, angeordnet ist, erstreckt sich die Steuersonde 334 parallel zu der Längsrichtung 225 der entsprechenden Schiene. Die Steuersonde ist dabei in der Querrichtung 227 der Schiene neben der Schiene angeordnet.

Die Antriebseinrichtung 336 ist dazu ausgebildet, die Steuersonde in einer Richtung zu bewegen, die der Längsrichtung 225 der Schiene entspricht, auf der das Rollenfahrwerk 209 angeordnet ist. Die Längsrichtung 225 der Schiene entspricht dabei auch der Bewegungsrichtung, sprich der Längsbewegungsrichtung 214 oder der Querbewegungsrichtung 216, des Rollenfahrwerks 209.

In der in Fig. 31 dargestellten Ausführungsform ist das Rollenfahrwerk 209 auf einer Querschiene 212 angeordnet. Die Längsrichtung 225 der Querschiene 212 entspricht somit der Querbewegungsrichtung 216 entlang der Querschiene 212.

Im Folgenden wird der Ablauf des Drehens bzw. des Ausrichtens der Drehscheibe 218 mittels des Drehmechanismus der vierten Ausführungsform erläutert.

Zuerst bewegt sich das Rollenfahrwerk 209 auf einer Querschiene 212 in Richtung einer Drehscheibe 218, die in der Längsposition 245 angeordnet ist. Erreicht das Rollenfahrwerk 209 die Drehscheibe 218, wird die Steuersonde 334 in Richtung der Drehscheibe 218 bewegt und kommt an der Drehscheibe 218, insbesondere an dem Flansch 244 der Drehscheibe 218, bezügliche der Drehachse 220 exzentrisch in Anlage. Dies ist in Abbildung (A) der Figur 31 dargestellt.

Die Antriebseinrichtung 336 wird daraufhin derart gesteuert, dass die Steuersonde 334 in der Längsrichtung 225 in Richtung der Drehscheibe 218 bewegt wird, um die Drehscheibe 218 in einer Drehrichtung 338 in Richtung der Querposition 247 zu drehen. Dies ist in Abbildung (B) der Figur 31 dargestellt.

Die Steuersonde 334 wird so weit in der Längsrichtung 225 in Richtung der Drehscheibe 218 bewegt, bis die Drehscheibe 218 in der Querposition 247 ausgerichtet bzw. angeordnet ist. Dies ist in Abbildung (C) der Figur 31 dargestellt.

In der Querposition 247 ist die Drehscheibe 218 kollinear mit der Querschiene 212 ausgerichtet. Das Rollenfahrwerk 209 kann somit von der Querschiene 212 auf die Schiene der Drehscheibe 218 bewegt werden. Dies ist in Abbildung (D) der Figur 31 dargestellt.

Eine Ausrichtung der Drehscheibe 218 ist entsprechend durchzuführen, wenn das Rollenfahrwerk 209 auf einer Längsschiene 210 angeordnet ist und die Drehscheibe 218 in der Querposition 247 angeordnet ist. In diesem Fall kommt die Steuersonde 334 ebenfalls exzentrisch an der Drehscheibe 218 in Anlage und wird mittels der Antriebseinrichtung 336 in der Längsrichtung der Längsschiene 210 bewegt, um die Drehscheibe 218 von der Querposition 247 in die Längsposition 240 zu drehen bzw. auszurichten.

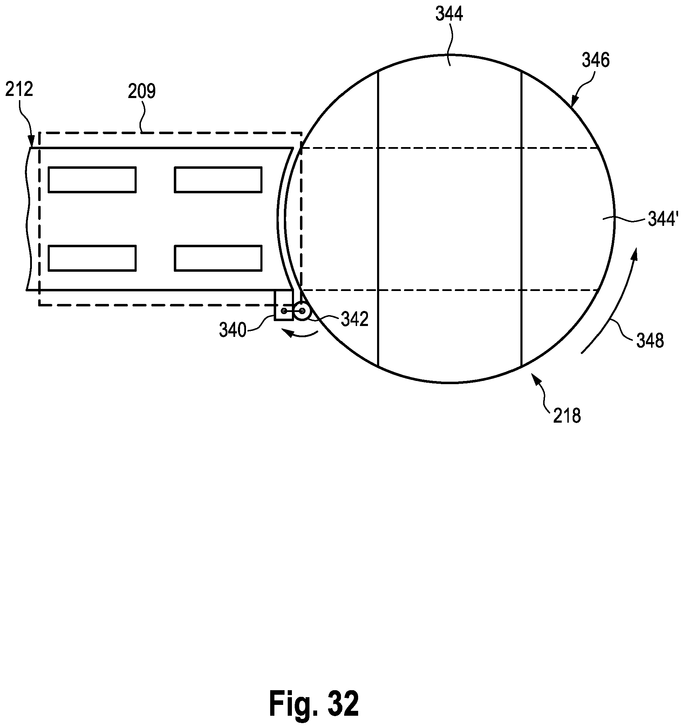

Fig. 32 zeigt eine fünfte Ausführungsform eines Drehmechanismus zum Drehen der Drehscheibe 218, wenn ein Rollenfahrwerk 209 nicht auf der Drehscheibe 218 sondern auf einer angrenzenden Querschiene 212 angeordnet ist.

Das Rollenfahrwerk 209 weist eine Antriebsrolle 342 und eine Antriebseinrichtung 340 zum Antreiben der Antriebsrolle 342 auf. Die Antriebsrolle 342 ist in einem der Drehscheibe 218 zugewandten Ende des Rollenfahrwerks 209 angeordnet. Die Drehscheibe 218 weist ein umlaufendes Stoppblech 346 auf. Das Stoppblech 346 weist eine Öffnung 344 auf, durch die sich die Schiene der Drehscheibe 218 hindurch erstreckt. Ist die Drehscheibe 218 nicht kollinear mit der angrenzenden Schiene 212 angeordnet, so kommt das Rollenfahrwerk 209 mit der Antriebsrolle 342 an dem Stoppblech 346 in Anlage, wenn das Rollenfahrwerk 209 auf der Schiene 212 in Richtung der Drehscheibe 218 bewegt wird. Ist die Antriebswelle 342 in Anlage an dem Stoppblech 346, kann die Drehscheibe 218 mittels der Antriebsrolle 342 in einer Drehrichtung 348 angetrieben werden, solange bis die Drehscheibe 218 kollinear mit der angrenzenden Schiene 212 ausgerichtet ist, auf der das Rollenfahrwerk 209 angeordnet ist.

In der kollinearen Ausrichtung der Drehscheibe 218 ist die Öffnung 344 fluchtend mit der Schiene 212 angeordnet. Diese Ausrichtung ist in Figur 32 in gestrichelten Linien als Öffnung 344' dargestellt. In der kollinearen Ausrichtung der Drehscheibe 218 kann das Rollenfahrwerk 209 auf die Drehscheibe 218 bewegt werden.

Auch die anderen Ausführungsformen des Drehmechanismus entsprechend der Figuren 21 bis 31 können ein derartiges Stoppblech 346 aufweisen, um zu verhindern, dass ein Rollenfahrwerk 209 im Bereich einer Drehscheibe 218 entgleist.

Die Drehmechanismen der vierten und fünften Ausführungsform sind aktive Drehmechanismen. Die Betätigung erfolgt hierbei durch eine zusätzliche Antriebseinrichtung, die entweder eine Steuersonde 334 oder eine Antriebsrolle 342 antreibt, um die Drehscheibe 218 zu drehen.

Fig. 33 zeigt eine Ausführungsform eines Schienenfahrzeugs 208. Das Schienenfahrzeug 208 weist vier Rollenfahrwerke 350, 352, 354, 356 auf. Jedes Rollenfahrwerk 350, 352, 354, 356 ist mittels eines Lagerungselements 358, 360, 362, 364 an einem Grundkörper des Schienenfahrzeugs 208 jeweils um eine Drehachse drehbar gelagert, wobei die Drehachsen parallel zueinander angeordnet sind. Vorzugsweise sind die Rollenfahrwerke 350, 352, 354, 356 in der Längsbewegungsrichtung 214 und der Querbewegungsrichtung 216 voneinander beabstandet.

Das Schienenfahrzeug 208 weist des Weiteren ein Umlaufelement 374 auf. Das Umlaufelement kann beispielsweise ein umlaufender Riemen, eine umlaufende Kette oder ein umlaufender Seilzug sein. Jedes Lagerungselement 358, 360, 362, 364 weist einen Befestigungspunkt 366, 368, 370, 372 auf, an dem das Umlaufelement an dem jeweiligen Lagerungselement befestigt ist.

Das Umlaufelement 374 kann mittels einer nicht dargestellten Antriebseinrichtung in einer Umlaufrichtung 376 angetrieben werden, um die Rollenfahrwerke um die entsprechende Drehachse zu drehen.

Fig. 34 zeigt eine Ausführungsform eines Drehmechanismus zum Drehen der Drehscheibe 218, wenn Rollenfahrwerke 350, 352, 354, 356 eines Schienenfahrzeugs 208 auf der Drehscheibe 218 angeordnet sind. Das Schienenfahrzeug ist dabei entsprechend dem Schienenfahrzeug aus Fig. 33 ausgebildet.

Wie bereits in Fig. 14 beschrieben, ist ein Schienenfahrzeug 208 mit vier Rollenfahrwerken 350, 352, 354, 356 auf zwei benachbarten Längsschienen 210-1, 210-2 in einer Längsbewegungsrichtung 214 bzw. auf zwei benachbarten Querschienen 212-1, 212-2 in einer Querbewegungsrichtung 216 bewegbar. Zum Transfer zwischen den Längsschienen 210-1, 210-2 und den Querschienen 212-1, 212-2 wird das Schienenfahrzeug 208 derart an den Kreuzungspunkten der Schienen angeordnet, dass jedes Rollenfahrwerk 350, 352, 354, 356 auf einer entsprechenden Drehscheibe 218 angeordnet ist und eine Drehachse der Rollenfahrwerke 350, 352, 354, 356 mit der Drehachse 220 der entsprechenden Drehschreibe 218 fluchtet.

Vorzugsweise entspricht ein Abstand zweier, benachbarter Drehscheiben 218 in der Längsbewegungsrichtung 214 bzw. der Querbewegungsrichtung 216 dem Abstand der Rollenfahrwerke in der Längsbewegungsrichtung 214 bzw. der Querbewegungsrichtung 216. Insbesondere entspricht ein Abstand der Drehachsen 220 zweier, benachbarter Drehscheiben 218 in der Längsbewegungsrichtung 214 bzw. der Querbewegungsrichtung 216 dem Abstand der Drehachsen der Rollenfahrwerke 350, 352, 354, 356 in der Längsbewegungsrichtung 214 bzw. der Querbewegungsrichtung 216.

Mittels des Umlaufelements 374 können die Rollenfahrwerke 350, 352, 354, 356 gemeinsam um ihre Drehachsen gedreht werden. Sind die Rollenfahrwerke 350, 352, 354, 356, wie in Fig. 34 auf den entsprechenden Drehscheiben 218 angeordnet, werden die Drehscheiben 218 durch die Drehbewegung der Rollenfahrwerke 350, 352, 354, 356 in einer Drehrichtung 378 um die jeweilige Drehachse 220 gedreht. Dadurch können die Drehscheiben 218 durch die Drehung der Rollenfahrwerke 350, 352, 354, 356 in der Querposition 247 bzw. in der Längsposition 245 angeordnet werden.

Die Rollenfahrwerke 350, 352, 354, 356 können entsprechend dem Rollenfahrwerk 20 aus den Ausführungsformen der Figuren 1 bis 13 ausgebildet sein.

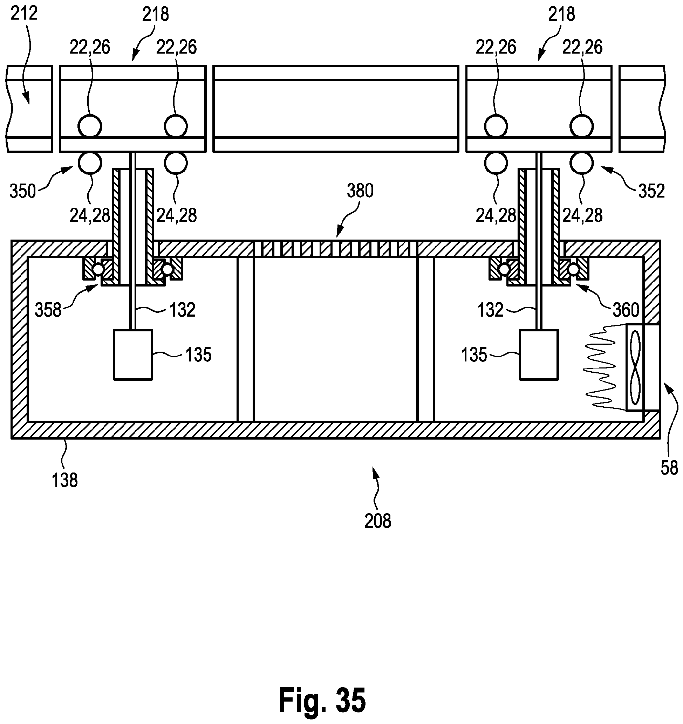

Fig. 35 zeigt den Drehmechanismus aus Fig. 34 in einer Seitenschnittansicht, wobei die Rollenfahrwerke 350, 352, 354, 356 entsprechend dem Rollenfahrwerk aus Fig. 12 ausgebildet sind. Das Schienenfahrzeug 208 weist ein gemeinsames zweites Gehäuseteil 138 als Grundkörper des Schienenfahrzeugs 208 auf. Die Rollenfahrwerke 350, 352, 354, 356 weisen jeweils eine Antriebseinrichtung 135, die eine Antriebswelle 132 antreibt. Die Antriebswelle 132 erstreckt sich durch einen Schaft 140 zu den entsprechenden Rollen 22, 24, 26, 28 des jeweiligen Rollenfahrwerks 350, 352, 354, 356. Die Schäfte 140 sind mittels der Lagerungselemente 358, 360, 362, 364 drehbar gelagert. Lagerungselementen 358, 360, 362, 364 können beispielsweise als Ring-Kugellager ausgebildet sein.

Der zweite Gehäuseteil 138 weist zwischen den Rollenfahrwerken 350, 352, 354, 356 an einer der Schieneneinrichtung 206 zugewandten Seite Öffnungen 380 auf. Die Filtereinrichtung 58 ist dazu ausgebildet Luft durch die Öffnungen 380 anzusaugen und der Filtereinrichtung 58 zum Filtern zuzuführen.

## Patentansprüche

1. Tragesystem (200) für einen medizinischen Behandlungsraum (202), wobei das Tragesystem (200) eine an einer Decke (204) des medizinischen Behandlungsraums (202) zu befestigende Schieneneinrichtung (206) und ein Rollenfahrwerk (209) zum Tragen eines medizinischen Geräts aufweist, wobei die Schieneneinrichtung (206) eine oder mehrere Längsschienen (210) und eine oder mehrere Querschienen (212) aufweist, wobei das Rollenfahrwerk (209) entlang jeder Längsschiene (210) in einer Längsbewegungsrichtung (214) und entlang jeder Querschiene (212) in einer Querbewegungsrichtung (216) bewegbar ist, wobei die Schieneneinrichtung (206) an gemeinsamen Kreuzungspunkten der Längsschienen (210) und der Querschienen (212) je eine Drehscheibe (218) aufweist, wobei das Rollenfahrwerk (209) zum Transfer zwischen einer der Längsschienen (210) und einer der Querschienen (212) auf der entsprechenden Drehscheibe (218) anordenbar ist, und wobei das Rollenfahrwerk (209) dazu ausgebildet ist, die Drehscheibe (218) um eine Drehachse (220) zu drehen.

2. Tragesystem (200) nach Anspruch 1, wobei die Längsschienen (210) und die Querschienen (212) ein I-förmiges bzw. Doppel-T-förmiges Querschnittsprofil aufweisen.

3. Tragesystem (200) nach Anspruch 1 oder 2, wobei das Rollenfahrwerk (209) dazu ausgebildet ist, die Drehscheibe (218) um die Drehachse (220) zu drehen, wenn das Rollenfahrwerk (209) auf der Drehscheibe (218) angeordnet ist.

4. Tragesystem (200) nach einem der Ansprüche 1 bis 3, wobei das Rollenfahrwerk (209) dazu ausgebildet ist, die Drehscheibe (218) um die Drehachse (220) zu drehen, wenn das Rollenfahrwerk (209) auf einer der Längsschienen (210) oder einer der Querschienen (212) angeordnet ist.

5. Tragesystem (200) nach einem der Ansprüche 1 bis 4, wobei die Drehscheibe (218) um die Drehachse (220) zwischen einer Längsposition (245) und einer Querposition (247) drehbar ist, wobei die Drehscheibe (218) eine Schiene aufweist, die in der Längsposition (245) mit der Längsschiene (210) fluchtet und in einer Querposition (247) mit der Querschiene (212) fluchtet, wobei das Rollenfahrwerk (209) entlang der Schiene der Drehscheibe (218) bewegbar ist, insbesondere wobei die Schiene der Drehscheibe (218) ein T-förmiges oder ein Doppel-T-förmiges Querschnittsprofil aufweist.

6. Tragesystem (200) nach einem der Ansprüche 1 bis 5, wobei die Schieneneinrichtung (206) eine Lagerungseinrichtung (235) zum Lagern der Drehscheibe (218) aufweist, wobei die Drehscheibe (218) mittels der Lagerungseinrichtung (235) um die Drehachse (220) drehbar gelagert ist, insbesondere wobei die Längsschiene (210) oder die Querschiene (212) die Lagerungseinrichtung (235) und die Drehscheibe (218) an einem Kreuzungspunkt ausbildet.

7. Tragesystem (200) nach einem der Ansprüche 1 bis 6, wobei die Schieneneinrichtung (206) zum Drehen der Drehscheibe (218) eine Schubstange (248, 250, 252, 254) oder einen Seilzug (290, 292, 294, 296) aufweist, wobei das Rollenfahrwerk (209) ein Betätigungselement (284, 288) aufweist, mittels dem die Schubstange (248, 250, 252, 254) bzw. der Seilzug (290, 292, 294, 296) betätigbar ist.

8. Tragesystem (200) nach Anspruch 7, wobei ein erstes Ende der Schubstange (248, 250, 252, 254) bzw. des Seilzugs (290, 292, 294, 296) an der Schiene der Drehscheibe (218) von der Drehachse (220) beabstandet angebracht ist, wobei ein zweites Ende der Schubstange (248, 250, 252, 254) bzw. des Seilzugs (290, 292, 294, 296) an einem der Drehscheibe (218) zugewandten Ende der Längsschiene (210) oder der Querschiene (212) angeordnet ist.

9. Tragesystem (200) nach Anspruch 8, wobei die Längsschiene (210) oder die Querschiene (212) eine Kulisse (268, 270, 272, 274) aufweist, entlang der das zweite Ende der Schubstange (248, 250, 252, 254) zwischen einer ersten Position (278) und einer zweiten Position (280) führbar ist, wobei das zweite Ende in der zweiten Position (280) näher an der Drehscheibe (218) angeordnet ist als in der ersten Position (278), wobei das Betätigungselement (284) dazu ausgebildet ist, die Schubstange (248, 250, 252, 254) von der ersten Position (278) in die zweite Position (280) zu bewegen, um die Drehscheibe (218) zu drehen, insbesondere wobei die Schubstange (248, 250, 252, 254) in der zweiten Position (280) nicht betätigbar ist.

10. Tragesystem (200) nach Anspruch 8, wobei das zweite Ende des Seilzugs (290, 292, 294, 296) mittels eines Hebels (312) an der Längsschiene (210) oder der Querschiene (212) angebracht ist, wobei das Betätigungselement (288) als eine Klinke (322) zum Betätigen des Hebels (312) ausgebildet ist, um die Drehscheibe (218) zu drehen.

11. Tragesystem (200) nach einem der Ansprüche 1 bis 10, wobei die Schieneneinrichtung (206) eine Federeinrichtung (326) aufweist, die dazu ausgebildet ist, die Drehscheibe (218) in einer Zwischenposition (332) zwischen der Längsposition (245) und der Querposition (247) vorzuspannen.

12. Tragesystem (200) nach einem der Ansprüche 1 bis 11, wobei das Tragesystem (200) eine Mehrzahl von Längsschienen (210) und eine Mehrzahl von Querschienen (212) aufweist, wobei das Tragesystem (200) ein Schienenfahrzeug (208) zum Tragen eines medizinischen Geräts aufweist, wobei das Schienenfahrzeug (208) mindestens zwei, insbesondere vier, Rollenfahrwerke (209) aufweist.

13. Tragesystem (200) nach Anspruch 12, wobei ein Abstand zwischen den Drehachsen (220) zweier, benachbarter Drehscheiben (218) in der Längsbewegungsrichtung (214) bzw. der Querbewegungsrichtung (216) dem Abstand der Rollenfahrwerke (209) in der entsprechenden Längsbewegungsrichtung (214) bzw. Querbewegungsrichtung (216) entspricht.

14. Tragesystem (200) nach Anspruch 12 oder 13, wobei die Rollenfahrwerke (209) an dem Schienenfahrzeug (208) um jeweils die entsprechende Drehachse drehbar gelagert sind, wobei das Schienenfahrzeug (208) eine Antriebseinrichtung zum Drehen der Rollenfahrwerke (209) um die entsprechende Drehachse aufweist, insbesondere wobei die Rollenfahrwerke (209) mittels jeweils eines Schafts (140) mit einem Gehäuseteil des Schienenfahrzeugs (208) verbunden sind, wobei die Schäfte (140) an dem Gehäuseteil um die jeweilige Drehachse drehbar gelagert sind.

15. Medizinischer Behandlungsraum (202), insbesondere Operationssaal, wobei der medizinische Behandlungsraum (202) eine Decke (204) und ein an der Decke (204) befestigtes Tragesystem (200) nach einem der Ansprüche 1 bis 14 aufweist.

## Claims

1. A support system (200) for a medical treatment room (202), wherein the support system (200) comprises a rail assembly (206) to be attached to a ceiling (204) of the medical treatment room (202) and a roller trolley (209) for supporting a medical device, wherein the rail assembly (206) comprises one or more longitudinal rails (210) and one or more transverse rails (212), wherein the roller trolley (209) is movable along each longitudinal track (210) in a longitudinal movement direction (214) and along each transverse rail (212) in a transverse movement direction (216), wherein the rail assembly (206) has a turntable (218) at common crossing points of the longitudinal rails (210) and the transverse rails (212), wherein the roller trolley (209) can be arranged on the corresponding turntable (218) for transfer between one of the longitudinal rails (210) and one of the transverse rails (212), and wherein the roller trolley (209) is configured to rotate the turntable (218) about a rotation axis (220).

2. The support system (200) according to claim 1, wherein the longitudinal rails (210) and the transverse rails (212) comprise an I-shaped or double-T-shaped cross-sectional profile.

3. The support system (200) according to claim 1 or 2, wherein the roller trolley (209) is configured to rotate the turntable (218) about the rotation axis (220) when the roller trolley (209) is arranged on the turntable (218).

4. The support system (200) according to any one of claims 1 to 3, wherein the roller trolley (209) is configured to rotate the turntable (218) about the rotation axis (220) when the roller trolley (209) is arranged on one of the longitudinal rails (210) or one of the transverse rails (212).

5. The support system (200) according to any one of claims 1 to 4, wherein the turntable (218) is rotatable about the rotation axis (220) between a longitudinal position (245) and a transverse position (247), wherein the turntable (218) comprises a rail which is aligned with the longitudinal rail (210) in the longitudinal position (245) and aligned with the transverse rail (212) in a transverse position (247), wherein the roller trolley (209) is movable along the rail of the turntable (218), in particular wherein the rail of the turntable (218) has a T-shaped or a double-T-shaped cross-sectional profile.

6. The support system (200) according to any one of claims 1 to 5, wherein the rail assembly (206) comprises a bearing assembly (235) for bearing the turntable (218), wherein the turntable (218) is rotatably mounted about the rotation axis (220) by means of the bearing assembly (235), in particular wherein the longitudinal rail (210) or the transverse rail (212) forms the bearing assembly (235) and the turntable (218) at a crossing point.

7. The support system (200) according to any one of claims 1 to 6, wherein the rail assembly (206) comprises a push rod (248, 250, 252, 254) or a cable pull (290, 292, 294, 296) for rotating the turntable (218), wherein the roller trolley (209) comprises an actuating element (284, 288) by which the push rod (248, 250, 252, 254) or the cable pull (290, 292, 294, 296) can be actuated.

8. The support system (200) according to claim 7, wherein a first end of the push rod (248, 250, 252, 254) or the cable pull (290, 292, 294, 296) is attached to the rail of the turntable (218) spaced apart from the rotation axis (220), wherein a second end of the push rod (248, 250, 252, 254) or of the cable pull (290, 292, 294, 296) is arranged at an end of the longitudinal rail (210) or the transverse rail (212) facing the turntable (218).

9. The support system (200) according to claim 8, wherein the longitudinal rail (210) or the transverse rail (212) comprises a motion link (268, 270, 272, 274) along which the second end of the push rod (248, 250, 252, 254) is guidable between a first position (278) and a second position (280), wherein the second end is arranged closer to the turntable (218) in the second position (280) than in the first position (278), wherein the actuating element (284) is configured to move the push rod (248, 250, 252, 254) from the first position (278) to the second position (280) to rotate the turntable (218), in particular wherein the push rod (248, 250, 252, 254) is not actuatable in the second position (280).

10. The support system (200) according to claim 8, wherein the second end of the cable (290, 292, 294, 296) is attached to the longitudinal rail (210) or the transverse rail (212) by a lever (312), wherein the actuating element (288) is formed as a pawl (322) for actuating the lever (312) to rotate the turntable (218).

11. The support system (200) according to any one of claims 1 to 10, wherein the rail assembly (206) comprises spring assembly (326) configured to bias the turntable (218) in an intermediate position (332) between the longitudinal position (245) and the transverse position (247).

12. The support system (200) according to any one of claims 1 to 11, wherein the support system (200) comprises a plurality of longitudinal rails (210) and a plurality of transverse rails (212), wherein the support system (200) comprises a rail vehicle (208) for supporting a medical device, wherein the rail vehicle (208) comprises at least two, in particular four, roller trolleys (209).

13. The support system (200) according to claim 12, wherein a distance between the rotation axes (220) of two, adjacent turntables (218) in the longitudinal movement direction (214) or the transverse movement direction (216) corresponds to the distance between the roller trolleys (209) in the corresponding longitudinal movement direction (214) or transverse movement direction (216).

14. The support system (200) according to claim 12 or 13, wherein the roller trolleys (209) are rotatably mounted on the rail vehicle (208) about the respective rotation axis, wherein the rail vehicle (208) comprises a drive device for rotating the roller trolleys (209) about the respective rotation axis, in particular wherein the roller trolleys (209) are connected to a housing part of the rail vehicle (208) by a respective shaft (140), wherein the shafts (140) are rotatably mounted on the housing part about the respective rotation axis.

15. A medical treatment room (202), in particular an operating room, wherein the medical treatment room (202) comprises a ceiling (204) and a support system (200) attached to the ceiling (204) according to any one of claims 1 to 14.

## Revendications

1. Système de support (200) pour un espace de traitement médical (202), le système de support (200) comprenant un dispositif à rail (206) à fixer à un plafond (204) de l'espace de traitement médical (202) et un châssis roulant (209) pour le support d'un appareil médical, le dispositif à rail (206) comprenant un ou plusieurs rails longitudinaux (210) et un ou plusieurs rails transversaux (212), le châssis roulant (209) pouvant être déplacé le long de chaque rail longitudinal (210) dans une direction de déplacement longitudinale (214) et le long de chaque rail transversal (212) dans une direction de déplacement transversale (216), le dispositif à rail (206) comprenant une plaque tournante (218) à des points de croisement communs des rails longitudinaux (210) et des rails transversaux (212), le châssis roulant (209) pouvant être agencé sur la plaque tournante correspondante (218) pour le transfert entre un des rails longitudinaux (210) et un des rails transversaux (212), et le châssis roulant (209) étant configuré pour faire tourner la plaque tournante (218) autour d'un axe de rotation (220).

2. Système de support (200) selon la revendication 1, les rails longitudinaux (210) et les rails transversaux (212) présentant un profil de section transversale en forme de I ou en forme de T double.

3. Système de support (200) selon la revendication 1 ou 2, le châssis roulant (209) étant configuré pour faire tourner la plaque tournante (218) autour de l'axe de rotation (220) lorsque le châssis roulant (209) est agencé sur la plaque tournante (218).

4. Système de support (200) selon l'une quelconque des revendications 1 à 3, le châssis roulant (209) étant configuré pour faire tourner la plaque tournante (218) autour de l'axe de rotation (220) lorsque le châssis roulant (209) est agencé sur un des rails longitudinaux (210) ou un des rails transversaux (212).

5. Système de support (200) selon l'une quelconque des revendications 1 à 4, la plaque tournante (218) pouvant être amenée à tourner autour de l'axe de rotation (220) entre une position longitudinale (245) et une position transversale (247), la plaque tournante (218) comprenant un rail, qui est aligné avec le rail longitudinal (210) dans la position longitudinale (245) et qui est aligné avec le rail transversal (212) dans une position transversale (247), le châssis roulant (209) pouvant être déplacé le long du rail de la plaque tournante (218), le rail de la plaque tournante (218) présentant notamment un profil de section transversale en forme de T ou en forme de T double.

6. Système de support (200) selon l'une quelconque des revendications 1 à 5, le dispositif à rail (206) comprenant un dispositif de palier (235) pour le montage de la plaque tournante (218), la plaque tournante (218) étant montée de manière rotative autour de l'axe de rotation (220) au moyen du dispositif de palier (235), le rail longitudinal (210) ou le rail transversal (212) formant notamment le dispositif de palier (235) et la plaque tournante (218) à un point de croisement.

7. Système de support (200) selon l'une quelconque des revendications 1 à 6, le dispositif à rail (206) comprenant une barre de poussée (248, 250, 252, 254) ou un câble de traction (290, 292, 294, 296) pour la rotation de la plaque tournante (218), le châssis roulant (209) comprenant un élément d'actionnement (284, 288), au moyen duquel la barre de poussée (248, 250, 252, 254) ou le câble de traction (290, 292, 294, 296) peut être actionné.

8. Système de support (200) selon la revendication 7, une première extrémité de la barre de poussée (248, 250, 252, 254) ou du câble de traction (290, 292, 294, 296) étant disposée sur le rail de la plaque tournante (218) de manière espacée de l'axe de rotation (220), une deuxième extrémité de la barre de poussée (248, 250, 252, 254) ou du câble de traction (290, 292, 294, 296) étant agencée à une extrémité du rail longitudinal (210) ou du rail transversal (212) tournée vers la plaque tournante (218).

9. Système de support (200) selon la revendication 8, le rail longitudinal (210) ou le rail transversal (212) comprenant une coulisse (268, 270, 272, 274), le long de laquelle la deuxième extrémité de la barre de poussée (248, 250, 252, 254) peut être guidée entre une première position (278) et une deuxième position (280), la deuxième extrémité étant agencée dans la deuxième position (280) plus près de la plaque tournante (218) que dans la première position (278), l'élément d'actionnement (284) étant configuré de manière à déplacer la barre de poussée (248, 250, 252, 254) de la première position (278) dans la deuxième position (280), afin de faire tourner la plaque tournante (218), la barre de poussée (248, 250, 252, 254) ne pouvant notamment pas être actionnée dans la deuxième position (280).

10. Système de support (200) selon la revendication 8, la deuxième extrémité du câble de traction (290, 292, 294, 296) étant disposée au moyen d'un levier (312) sur le rail longitudinal (210) ou le rail transversal (212), l'élément d'actionnement (288) étant configuré sous la forme d'un cliquet (322) pour l'actionnement du levier (312), afin de faire tourner la plaque tournante (218).

11. Système de support (200) selon l'une quelconque des revendications 1 à 10, le dispositif à rail (206) comprenant un dispositif à ressort (326), qui est configuré pour précontraindre la plaque tournante (218) dans une position intermédiaire (332) entre la position longitudinale (245) et la position transversale (247).

12. Système de support (200) selon l'une quelconque des revendications 1 à 11, le système de support (200) comprenant une pluralité de rails longitudinaux (210) et une pluralité de rails transversaux (212), le système de support (200) comprenant un véhicule à rail (208) pour le support d'un appareil médical, le véhicule à rail (208) comprenant au moins deux, notamment quatre, châssis roulants (209).

13. Système de support (200) selon la revendication 12, une distance entre les axes de rotation (220) de deux plaques tournantes voisines (218) dans la direction de déplacement longitudinale (214) ou la direction de déplacement transversale (216) correspondant à la distance entre les châssis roulants (209) dans la direction de déplacement longitudinale (214) ou la direction de déplacement transversale (216) correspondante.

14. Système de support (200) selon la revendication 12 ou 13, les châssis roulants (209) étant montés sur le véhicule à rail (208) à chaque fois de manière rotative autour de l'axe de rotation correspondant, le véhicule à rail (208) comprenant un dispositif d'entraînement pour la rotation des châssis roulants (209) autour de l'axe de rotation correspondant, les châssis roulants (209) étant notamment reliés à chaque fois au moyen d'une tige (140) avec une partie de boîtier du véhicule à rail (208), les tiges (140) étant montées sur la partie de boîtier de manière rotative autour des axes de rotation respectifs.

15. Espace de traitement médical (202), notamment salle d'opération, l'espace de traitement médical (202) comprenant un plafond (204) et un système de support (200) selon l'une quelconque des revendications 1 à 14 fixé au plafond (204).
